# EUROPÄISCHE PATENTSCHRIFT

(11) **EP 1 118 644 B1**
(45) Veröffentlichungstag und Bekanntmachung des Hinweises auf die Patenterteilung: **14.06.2006**
(21) Anmeldenummer: 00107961.5
(22) Anmeldetag: 17.04.2000
(51) Int. Cl.: C09D 11/02, G03G 9/087, G03G 9/097

(54) **Heissschmelzdruckfarbe**
Hot melt printing ink
Encre d'impression thermofusible

(30) Priorität: 20.01.2000 DE 10002116
(43) Veröffentlichungstag der Anmeldung: 25.07.2001
(73) Patentinhaber: Siegwerk Druckfarben AG, 53721 Siegburg (DE)
(72) Erfinder: Leineweber, Dr., 53721 Siegburg (DE); Griebel, Rudolf, Dr., 53721 Siegburg (DE)
(74) Vertreter: Sternagel, Fleischer, Godemeyer & Partner

(56) Entgegenhaltungen:
- EP-A- 0 700 977
- EP-A- 0 839 878
- DE-A- 4 439 007
- US-A- 5 750 604

## Beschreibung

Gegenstand der Erfindung ist eine Heißschmelzdruckfarbe, die bevorzugt für Tief-und Flexodruckverfahren und besonders bevorzugt für den Illustrationstiefdruck verwendet wird.

Druckfarben für hochproduktive industrielle Druckverfahren, ferner Druckfarben für den kommerziellen Kleinauflagendruck und für den so genannten Preprint-Bereich der Reproduktionstechniken enthalten in herkömmlicher Ausprägung Lösemittel. Unter "Lösemittel" werden hierbei entsprechend der Funktion dieser Rezepturkomponente sowohl Wasser als auch organische Lösemittel als auch Mineralöle bzw. pflanzliche Öle verstanden. Diese Lösemittel haben zunächst die Funktion, die Bindemittel der Druckfarbe und auch eventuell vorhandene Farbstoffe und funktionelle Additive zu lösen. Bindemittel übernehmen die Funktion der Dispersionsstabilisierung von Pigmenten und der Verankerung der Druckfarbe auf dem zu bedruckenden, d.h. mit Bild, Text, allgemein mit Information zu modulierendem Bedruckstoff. Den Lösemitteln kommt eine weitere hochfunktionelle Bedeutung zu. Durch ihre Dosierung in der zu verdruckenden Farbrezeptur wird die für die unterschiedlichen technischen Ausführungsformen der verschiedenen Druckverfahren unabdingbar benötigte Viskosität eingestellt. Extrem dünnflüssig mit Viskositäten bis herab zu 5 mPa s sind die Farbfluide des Illustrationsfiefdruckes. Weniger dünnflüssig sind die im Verpackungstiefdruck und Flexodruck eingesetzten Druckfarben, die mit Viskositäten zwischen 20 mPa s und 60 - 100 mPa s verdruckt werden. Das Rollen-Offset-Verfahren, das z.B. im Zeitungsdruck eingesetzt wird, benötigt Viskositäten der Größenordnung 100 Pa s. Der Bogen-Offsetdruck verdruckt Farben mit Viskositäten bis zu einigen Hundert Pa s. Die Fluidität von Druckfarben der Offset-Domäne ist also um 4 bis 5 Größenordnungen geringer als diejenige des Illustrationstiefdruckes. In der letztgenannten Funktion der Lösemittel, nämlich der Fluiditätseinstellung, fungieren diese nicht mehr notwendigerweise als wirkliche Löser für jedwede Rezepturkomponente sondern z.T. lediglich als flüssiger, bindemittelfreier Verdünner der dispersen Bestandteile, z.B. der Pigmente, einer Druckfarbenformulierung. Der Begriff des Lösemittels ist also auch in diesem Sinne definiert. -

Üblicherweise wird heute im Stand der Technik für den Illustrationstiefdruck nahezu ausschließlich Toluol verwendet. Im Verpackungstief- und Flexodruck werden in großem Umfang Ethanol und Etylacetat und daneben andere organische Lösemittel und auch Wasser eingesetzt. Die Anwendung dieser Lösemittel erfordert einen hohen anlagentechnischen Aufwand und enormen Energieeinsatz. Beides ist notwendig, um den physikalisch konvektiven, z.T. auch durch Aufwendung von Strahlungsenergie unterstützten, Trocknungsprozeß in der durch die Produktionsgeschwindigkeit auf Rotationsmaschinen bedingten extrem kurzen Verweilzeit der Druckbahnen in den Trocknungseinrichtungen zwischen den einzelnen aufeinanderfolgenden Druckwerken sicher zu bewältigen.

Weiterhin ist es notwendig, die durch Trocknung aus dem Druckerzeugnis entfernten Lösemittel durch Rückgewinnung weitestgehend verlustfrei oder durch eine Nachverbrennung unter Totalverlust aus dem Prozeß zu ziehen, ohne die Umwelt in unzulässigem Maße zu belasten. Dabei müssen die arbeitshygienischen Richtlinien und die Verordnungen hinsichtlich der für die verwendeten Lösemittel geltenden maximalen Arbeitsplatzkonzentrationen (MAK-Werte) in den den Druckwerken unmittelbar angrenzenden Verkehrräumen eingehalten werden.

Weiterhin sind sicherheitstechnische Auflagen, z.B. hinsichtlich des Feuer- und Explosionsschutzes in den Druckmaschinen und deren Peripherie, aber auch in allen Lösemittel-exponierten Einrichtungen der Gesamtanlage zu erfüllen.

Im Vergleich zu diesen notwendigen technischen Einrichtungen sind die für die unmittelbare Erzeugung des Druckbildes auf dem Bedruckstoff erforderlichen Anlagenteile speziell im Falle der Massenverfahren in ihren räumlichen Abmessungen insgesamt klein. Gleiches gilt für die Investitionskosten und die laufenden Betriebskosten der Druckmaschine im eigentlichen Sinne im Vergleich zu den Kosten, die für die Beschaffung und den Betrieb der für die Lösemitteltechnologie unabdingbaren Anlagenteile aufzuwenden sind.

Diese Nachteile der bisher angewendeten Lösemitteltechnologie der Druckfarben können durch die Verwendung von bei Raumtemperatur festen Schmelzdruckfarben in Druckmaschinen mit beheizbaren Druckwerken vermieden werden. Hierbei werden die Druckfarben zunächst geschmolzen, dann in schmelzflüssigem Zustand verdruckt und durch Wärmeentzug verfestigt. Die Verwendung von leicht flüchtigen Lösemitteln ist nicht mehr notwendig.

Im Stand der Technik sind bereits verschiedene Schmelzdruckfarben bekannt geworden. So beschreibt die DE 26 35 226 C 2 Druckfarben für ein Druckverfahren, die keine flüchtigen Lösemittel enthalten. Diese Druckfarben bestehen beispielsweise aus Polyamidharz, hergestellt aus dimerer Fettsäure, Essigsäure, Ethylendiamin, Propylendiamin und Montanwachs. Die Fluidisierung der Farben bis hin zu der für den Tiefdruck geeigneten Viskosität soll durch Zufuhr von Wärme, also durch Erweichen bzw. Schmelzen der thermoplastischen Bindemittel und sonstiger Rezepturkomponenten und darüber hinausgehendes Erhitzen erfolgen. Die so zusammengesetzten Druckfarben werden in heißen Druckwerken verdruckt, deren Betriebstemperatur oberhalb der Erweichungs- bzw. Schmelztemperatur der eingesetzten Schmelzdruckfarbsysteme eingestellt ist, um die Anwendungsviskosität entsprechend der im Druckfarbensystem verwirklichten Temperatur-Viskositäts-Beziehung zu erreichen. Hierfür werden in den Beispielen Temperaturen im Bereich von 140 - 180 Grd C genannt, bei denen Viskositäten von 0,05 bis ≤ 0,3 Pas erreicht werden. Diese Viskositäten sind für den Illustrationstiefdruck um eine bzw. zwei Größenordnungen zu hoch und können durch eine weitere Temperaturerhöhung nicht auf praktikable Werte abgesenkt werden, da durch eine solche Maßnahme die Zersetzungstemperaturen der Farben weit überschritten werden. Auch für den Verpackungstiefdruck sind die angegebenen Viskositäten um mindestens einen Faktor zwei zu hoch. Ferner sind die zur Erzielung der angegebenen Viskositäten notwendigen Temperaturen für die typischen Bedruckstoffe des Verpackungstief- und Flexodruckes, nämlich Polymerfolien deutlich zu hoch. Solche Bedruckstoffe können durch die auf 140 bis 180 Grd C beheizten Druckwerke nicht ohne druckbildschädigende Verdehnungen oder gar Schmelzen geführt werden.

Die angegebenen Druckfarben sind ferner wegen ihrer langsamen Verfestigung nach dem Verlassen eines jeden Druckwerkes für die üblichen rotativ-industriellen Verfahren des Illustrationstiefdruckes und des Verpackungstief- und Flexodruckes nicht geeignet.
Ein Praxiseinsatz dieser Druckfarben hat daher allein aus jedem einzelnen Grund nicht stattgefunden.

Eine weitere Schmelzdruckfarbe ist aus der DE 42 05 713 A 1 der Anmelderin bekannt. Diese Schmelzdruckfarben verwenden kristalline, monomere und niedermolekular-monomere organische Körper als Rezepturbestandteile, die bei Raumtemperatur fest, bei erhöhter Temperatur dagegen flüssig sind und in diesem geschmolzenen Zustand als niederviskose Lösemittel für die Bindemittel der Druckfarbe fungieren. Die Druckfarben enthalten neben polymeren Bindemitteln als Lösemittel beispielsweise Cetylalkohol, Stearylalkohol und/oder 12-Hydroxystearinsäure. Eine ähnliche Druckfarbe beschreibt auch die EP 0 700 977 A1.

Die Druckschrift DE 44 39 007 A 1 befaßt sich auf der Basis der vorerwähnten Patentschrift mit der Verwendung von Schmelzdruckfarben im Offsetdruck, ohne aber eigenständige Hinweise bezüglich der Zusammensetzung solcher Schmelzdruckfarben zu geben.

Mit der vorliegenden Erfindung sollen die bekannten Schmelzdruckfarbsysteme weiter optimiert werden. Bei der Entwicklung der Farbsysteme hat sich herausgestellt, daß gerade für Tiefdruckverfahren an die Schmelzdruckfarben besondere Anforderungen zu stellen sind. Hierzu gehört zunächst, daß innerhalb eines möglichst engen Temperaturfensters die notwendige Druckviskosität der Druckfarbe erreicht wird. Weiterhin ist auch eine schnelle Erstarrung nach der Übertragung auf den Bedruckstoff notwendig. Es muß weiterhin gewährleistet sein, daß die Farbe haftfest auf dem Bedruckstoff ist, so daß mechanische Belastungen, die auf die gedruckte Farbschicht während des Durchlaufs durch die Druckmaschine und auch nach dem Druck in der Nachverarbeitung und beim Gebrauch der Druckerzeugnisse einwirken, nicht zu Kratzspuren oder Ablösen der Farbe vom Bedruckstoff führen.

Die technische Aufgabe der Erfindung war es daher, verbesserte Schmelzdruckfarben zur Verfügung zu stellen, die die oben angegebenen Nachteile nicht besitzen und insbesondere für industrielle Tiefdruckverfahren geeignet sind.

Diese technische Aufgabe wird gelöst durch eine Heißschmelzdruckfarbe, insbesondere für Tiefdruckverfahren enthaltend 50 bis 80 Gew.-% Lösemittel, vorzugsweise 55 bis 75 Gew.-% Lösemittel, mit einem Schmelzpunkt von 65 bis 109 Grd C und einer Viskosität von 2,9 bis 20 mPas bei 110 Grd C, vorzugsweise 6 bis 15 mPas bei 110 Grd C und 20 bis 50 Gew.-%, vorzugsweise 25 bis 45 Gew.-% Bindemittel mit einer Glasübergangstemperatur T_{G} von 30 bis 65 Grd C. Ein aus Bindemittel und Lösemittel hergestellter Standard-Firnis besitzt vorzugsweise eine Viskosität von 6 bis 20 mPas bei 110 Grd C, vorzugsweise 6 bis 15 mPas bei 110 Grd C.

In einer bevorzugten Ausführungsform enthält die erfindungsgemäße Druckfarbe 0,5 bis 3 Gew.-% Additive und 0 bis 10 Gew.-% Farbmittel.

Das Lösungsmittel wird bevorzugt ausgewählt aus der Gruppe Carbonsäureamide, Imide, Monourethane, Diurethane, Sulfonamide, Sulfonsäureester, Carbonsäunester, Ether, Carbonate, Harnstoffe, acylierte Harnstoffe, acylierte aromatische Verbindungen oder Gemische derselben.

Das Bindemittel wird ausgewählt aus der Gruppe Ketonharz, Kolophoniumharz und Urethanharz, Kohlenwasserstoffharz oder Gemische derselben.

Die vorliegende Erfindung betrifft die Bereitstellung einer Druckfarbe, die kristalline, niedermolekular-monomer aufgebaute Verbindungen enthält, die oberhalb ihrer Schmelztemperatur jedes für sich allein oder aber auch als Mischung mehrerer Individuen geeignete Lösemittel für die in den Druckfarben eingesetzten Bindemittel und Additive darstellen. Mit diesen Lösemitteln werden Druckfarben hergestellt, die eine für den Tiefdruck, insbesondere für den Illustrationstiefdruck, besonders geeignete niedrige Viskosität verfügbar machen. Weiterhin wird beim Einsatz dieser Lösemittel in Kombination mit den geeigneten Bindemitteln ein schnelles Erstarren und eine ausreichende Haftfestigkeit der Druckfarbe nach dem Verdrucken auf dem Bedruckstoff gewährleistet.

Auch die Auswahl der Bindemittel selbst und die Beachtung deren Wechselwirkung mit den geschmolzenen Lösemitteln ist für die Optimierung der Funktion einer Schmelzdruckfarbe wesentlich. Die Erfindung betrifft dementsprechend auch die Auswahl therrnoplasfisfler Bindemittel, die bei der Fortentwicklung von Schmelzdruckfarben als geeignet gefunden wurden.

Insgesamt geht die vorliegende Erfindung also über den in den im genannten Schrifttum dargelegten Stand der Technik hinaus, indem sie neuartige kristalline Schmelzlösemittel mit geeigneten Schmelzpunkten und besonders niedriger Schmelzviskosität sowie geeignete Bindemittel für den Tief- und Flexodruck mit Heißschmelzdruckfarben, insbesondere für den Illustrationstiefdruck verfügbar macht. Die Kombination der beschriebenen kristallinen Lösemittel mit den erfindungsgemäßen Bindemitteln führt zu besonders niedrigen Viskositäten der Schmelze des Systems bei Drucktemperaturen zwischen 90 und 115 Grd C. Vorteilhaft für die Verdruckbarkeitseigenschaften und die Produkteigenschaften ist auch die Mischung dieser Lösemittel und die Verwendung solcher Lösemittelgemische als Schmelz-Lösemittel für die Bindemittel oder Bindemittelgemische.

Bedeutung haben diese Lösemittel und Bindemittel und deren Kombinationen auch für die ink-jet-Heißschmelzvarianten (phase change ink-jet, hot melt ink jet ) sowie für die Herstellung von elektrofotografischen Tonem, die durch Schmelz-Einbrennen auf dem latenten Bild verankert werden. Beide Druck-Technologien ziehen Vorteile aus den besonders hohen Schmelz-Fluiditäten der erfindungsgemäßen Druckfarben und den im folgenden dargelegten, für den schnellen Auflagendruck des Illustrationstiefdruckverfahrens besonders notwendigen Merkmalen des Farbsystems.

Ein weiterer Gegenstand der Erfindung ist daher die Verwendung der Heißschmelzdruckfarbe als Tiefdruckfarbe, Ink-Jet-Druckfarbe und zur Herstellung von Tonern für elektrofotografische Schmelzverfahren.

An die erfindungsgemäßen Schmelzdruckfarben sind für den Einsatz als Tiefdruckfarben besondere Anforderungen zu stellen.

Schmelzdruckfarben, die für sehr schnelle, rotative Druckverfahren, insbesondere das Illustrationstiefdruckverfahren, konzipiert sind, müssen nach der Übertragung vom Formzylinder auf den Bedruckstoff sehr schnell erstarren. Würden sie dieses erste Kriterium nicht erfüllen, so würden sie auf den der eigentlichen Druckübertragung nachgeschalteten, die frische Druckseite berührenden, Leitspindeln und Umlenkrollen der Druckmaschine "ablegen". "Ablegen" bezeichnet den Vorgang des Abschmierens. Bei voller Produktionsgeschwindigkeit nach dem derzeitigen Stand des Illustrationstiefdruckes ist die für den Erstarrungsprozeß verfügbare Zeit von der Größenordnung 0,1 bis 0,5 Sekunden. Unterstützt wird die Dynamik der Erstarrung dadurch, daß der Bedruckstoff bei Raumtemperatur, also unbeheizt, in das erste Druckwerk einläuft und in der kurzen Kontaktzeit zum Presseur- und Formzylinder, d.h. während des Druckübertragungsprozesses keinen Wärmefluß aufnimmt, der ihn bei gegebener Wärmekapazität wesentlich erwärmen könnte. Die in den Praxisversuchen des Illustrationstiefdruckes mit Schmelzdruckfarben gemessenen, im Stationärbetrieb der Druckmaschine bei einer Formzytindertemperatur von 110 Grd C genommenen Meßwerte zeigen, daß der Bedruckstoff (z.B. im Illustrationstiefdruck häufig eingesetztes superkalandriertes Papier mit einem Flächengewicht von 55 gm⁻²) typischerweise lediglich eine Temperatur von 40 bis 50 Grd C je nach Druckgeschwindigkeit, d.h. Kontaktdauer im Druckspalt annimmt und somit als hochwirksame Wärmesenke für die in kurzer Zeit zu verfestigende Druckfarbe fungiert. Für den Zeitbedarf der Erstamung der frisch gedruckten Farbschicht sind folgende Kriterien von Bedeutung:
- die latente Schmelzwärme des im Farbsystem verwendeten kristallinen Schmelz-Lösemittels. Je geringer diese für den endothermen Schmelzvorgang benötigte und im exothermen Erstarrungsvorgang abzuführende Wärmemenge ist, desto schneller erfolgt die Erstarrung bei den durch äußere Parameter bestimmten Wärmeflüssen.
- die Wärmekapazität des Farbsystems. Die Wärmekapazität des Farbsystems bestimmt die Wärmemenge, die bei der Rückführung der Temperatur von Anwendungstemperatur bis Schmelztemperatur d.h. also bis zum Erstarrungspunkt der gedruckten Farbschicht abgeführt werden muß und somit auch die Zeit, die bei den durch äußere Parameter determinierten Wärmeflüssen hierfür aufzuwenden ist. Ferner bestimmt sie in gleicher Weise, also ebenfalls unter Einfluß der von außen aufgeprägten Wärmeflußparameter (Wärmeübergänge und Wärmedurchgänge, Strahlung und eventuell erzwungene Konvektion durch Anströmung mit einem Kühlgas), die weitere Abkühlung der nach Abfuhr der latenten Wärme bereits erstarrten Farbschicht bis unter die Glastemperatur der Schicht bzw. bis zur Temperatur, bei der eine mechanische Belastbarkeit der Schicht möglich ist
- die Neigung des Schmelz-Lösemittels, unterkühlte Schmelzen zu bilden und/oder weiche Gläser mit den Bindemitteln des Farbsystems zu bilden.

Ein zweites Kriterium betrifft die Dynamik des Wiederaufschmelzens der in einem ersten Druckwerk gedruckten Farbschicht in den nachfolgenden Druckwerken einer Mehrfarben-Druckmaschine. Allgemein formuliert lautet die an ein Heißschmelz-Druckfarbensystem zu stellende Forderung, daß die das (n-1)-te heiße Druckwerk verlassende Farbschicht im n-ten heißen Druckwerk nicht wieder so weit fluidisiert werden darf, daß sich ein Verfließen der makroskopischen bild- und informationscharakteristischen Strukturelemente ergibt und somit ein Unschärfe-Effekt, z.B. bei Schriften und bei "Stricharbeit", eintritt. Die Forderung ist allerdings nicht, daß selbst die mikroskopischen Bildpixel des erstgedruckten Teilbildes im nächstfolgenden heißen Druckwerk nicht-verfließen dürfen. Ein solcher Effekt ist für die Erzeugung eines qualitativ hochwertigen, durch kompensative (subtraktive) Farbmischung entstehenden Farbbildes im Gegensatz zu einem durch autotypisch additive Farbmischung entstehenden Farbbildes teilweise sogar erwünscht und für die Qualität des Tiefdruckproduktes vorteilhaft.

Dieses Kriterium gilt für die "impact"-Druckverfahren, bei denen der Bedruckstoff und die auf diesem eventuell bereits in vorausgehenden Druckwerken vorerzeugte Farbschicht in nachfolgenden Druckstationen im Wortsinn bedruckt, das heißt mechanisch berührt wird. Die Druckverfahren des Tief-und Flexodruckes sowie der Offset- und Hochdruck sind impact-Verfahren. Beim Einsatz von Schmelzdruckfarben finden diese Berührungen an heißen Kontaktflächen statt. Weniger gilt dieses Kriterium für "non-impact"-Verfahren wie z.B. die mit Heißschmelzfarben durchgeführten Ink-jet-Verfahren, bei deren Ausübung das von einem ersten "Druck"-Kopf erzeugte Teil-Farbbild durch die Aktion der weiteren drei Druckköpfe bis zur Komplettierung des Gesamtfarbbildes nicht wieder erhitzt wird, es sei denn durch zufällig punktgenaues Auftreffen eines zweiten Pixels auf einen vorplazierten ersten.

Das Wiederaufschmelzen wird begünstigt durch die gleichen Kriterien, die ein schnelles Erstarren fördern:
- Eine geringe latente Schmelzwärme des kristallinen Schmelz-Lösemittels
- Eine geringe Wärmekapazität, die diejenige Wärmemenge bestimmt, die zum Erwärmen der gedruckten Farbschicht bis zum Erweichungspunkt und weiter bis zum Schmelzpunkt benötigt wird und dann zum weiteren Aufheizen von Schmelztemperatur bis zur der Temperatur, bei der eine zum Verfließen des Druckbildes hinlängliche Fluidität bewirkt ist.

Das Wiederaufschmelzen wird unmöglich, wenn der Schmelzpunkt des kristallinen Schmelz-Lösemittels so hoch liegt, daß er bei den durch äußere Parameter bestimmten Wärmeflüssen in der kurzen impact-Zeit der nachgeschalteten Druckwerke sicher nicht erreicht wird. Sicher auch dann nicht erreicht wird, wenn die Temperaturen der impactierenden Druckformen der nachgeschatteten Druckwerke über dem Schmelzpunkt des Lösemittels liegen, nämlich verfahrensgemäß auf der zur Etablierung der Druckviskosität notwendigen Drucktemperatur. Je höher der Schmelzpunkt des Lösemittels, desto geringer ist die Gefahr, daß die vorgedruckte Farbschicht in dem kurzen Zeitintervall der Verweilzeit im Druckspalt (Impact-Zeit) durch den Wärmefluß aus der impactierenden Druckform refluidisiert wird. Das Wiederanschmelzen einer vorgedruckten Farbschicht kann ferner dadurch zurückgedrängt werden, daß die Temperatur der im nachgeschalteten Druckwerk diese Farbschicht berührenden Druckform möglichst knapp über dem Schmelzpunkt des Lösemittels gehalten werden kann, ohne daß die Viskosität des zu verdruckenden Fluides dadurch zu hoch wird. Ist nämlich der Temperaturgradient als Antrieb des Wärmeflusses in die vorgedruckte Farbschicht hinein klein, so ist der Wämefluß ebenfalls klein und die in der kurzen Verweilzeit im Druckspalt übergehende Wärmemenge insbesondere klein und damit für ein Wiederanschmelzen nicht ausreichend. Dieser Sachverhalt wird speziell durch eine Grenzfall-Betrachtung deutlich: Im Falle eines Lösemittels mit einer Schmelztemperatur Ts und einer hinlänglich niedrigen Viskosität bei einer infinitesimal höheren Temperatur T_{S} + dT, würde der Schmelzpunkt einer mit diesem Lösemittel vorgedruckten Schmelzfarbe in einem nachgeschalteten Druckwerk der Temperatur T_{S} + dT erst nach einer auf den Zeitskalen einer schnell laufenden Druckmaschine "unendlich" lange dauernden Gleichgewichtseinstellung erreicht werden. Aus dieser Grenzbetrachtung und dem Übergang zu realen Schmelzlösemitteln wird klar, daß Lösemittel mit einem möglichst steilen negativen Sprungverhalten der Viskositäts-Temperatur-Kennlinie bezüglich der Unmöglichkeit des Wiederanschmelzens besonders vorteilhaft sind. Merkmal der beschriebenen Schmelz-Lösemittel ist also ein hoher Schmelzpunkt und ein kleines Temperaturintervall zwischen Schmelztemperatur und Anwendungstemperatur, bei der die Druckviskosität, insbesondere die extrem niedrige Viskosität des Illustrationstiefdruckes erreicht ist.

Ein drittes Kriterium fordert, daß das Druckfarbensystem bei denkbaren Erlebenstemperaturen des Druckproduktes nicht weich wird oder gar schmilzt, so daß es nicht zu Schadensfällen, z.B. einer Beschmutzung der unmittelbaren Umgebung kommen kann. Die anzunehmende maximale bestimmungsgemäße Erlebenstemperatur eines Druckproduktes kann z.B. auf dem schwarzen Armaturen-Bord oder hinter dem Rückfenster eines in direkter Sonneneinstrahlung geparkten Wagens entstehen oder unter einer Tasse heißen Getränkes. Letzterer Fall nimmt als obere Erlebenstemperatur des Druckproduktes die Servier-, nicht also die Trink-Temperatur eines heißen Getränkes an. Für die Entwicklungen von Schmelzdruckfarben ist eine nicht zu unterschreitende Erweichungstemperatur von 65 Grd C angenommen. Die Lösemittel oder Lösemittelgemische sollen bei dieser Temperatur im kristallinen Festzustand sein und sollen in dieser Form nicht spürbar weichmachend auf das Bindemittelpolymer oder deren Gemische wirken. Die erfindungsgemäßen Druckfarben besitzen daher Erweichungstemperaturen, die vorzugsweise ≥ 65 Grd C liegen.

Das Kriterium der Nichterweichung bei Erlebenstemperaturen verbietet auch den Einsatz von verschiedenen, in ihren jeweiligen Schmelzpunkten gestaffelten Lösemitteln in den aufeinander folgenden Druckwerken. Man könnte durch eine derartige Maßnahme das Wiedererweichen der vorgedruckten Schichten in den nachfolgenden Druckwerken dadurch verhindern, daß im n-ten Druckwerk ein Farbsystem bei einer Temperatur Tₙ läuft, die kleiner ist als die Drucktemperatur im (n-1)-ten Druckwerk. Bei einer Staffelung der Lösemittel-Schmelzpunkte um nur 5 Grd C und bei Einhaltung einer im ersten Druckwerk maximalen Temperatur von ca. 115 Grd C wäre die im letzten der acht Druckwerke einzustellende minimale Drucktemperatur nur noch 80 Grd C. Bei dieser Temperatur muß Druckviskosität gegeben sein. Der Schmelzpunkt liegt entsprechend niedriger und unterschreitet dann die vorerwähnte, einzuhaltende Grenze der Erlebenstemperatur eines Druckproduktes. Eine solche Lösung des Wiederanschmelzproblemes würde auch bedeuten, daß acht verschiedene Schmelz-Lösemittel mit voller Verfahrenseignung gefertigt werden müssten anstatt einem. Dies wäre ein produktionstechnischer und logistischer Nachteil für den Farbhersteller aber auch für den Anwender. Auf der Anwenderseite entstünden Nachteile durch die Notwendigkeit getrennter Tank-Haltung für Farben gleicher Koloristik im Schön- und Wider-Druck (Vorder und Rückseite der zu bedruckenden Bahn) und der strikten Vermeidung von Verwechslungen.

Ein viertes Kriterium, das an ein Schmelzdruckfarbsystem zu stellen ist, betrifft die Vermeidung von Komponenten, die einen bei Betriebstemperatur störenden Dampfdruck aufweisen. Dieses Kriterium betrifft naturgemäß kaum die polymeren Bindemittel sondern eher die bei Raumtemperatur kristallinen, bei Anwendungstemperatur geschmolzenen, aus Gründen der Schmelzviskosiät monomer und in ihrem Molekulargewicht nicht zu hoch liegend gewählten Lösemittel und auch die Additive eines Druckfarbensystems, die zur Pflege von anwendungstechnischen Eigenschaften gegebenenfalls hinzugefügt werden.

Die Kombination der Kriterien eins bis drei erfordert, daß kristalline SchmelzLösemitteln mit einem Schmelzpunkt ausgewählt bzw. durch chemische Synthese bereitgestellt werden, die sich zudem durch eine sehr steile Viskositäts-Temperatur-Charakteristik, d.h. durch einen großen negativen Temperaturgradienten der Viskosität auszeichnen. So sollte sich die Viskosität innerhalb eines Temperaturfensters von vorzugsweise nur 10 Grd C über dem Schmelzpunkt der Lösemittel auf 2,9 bis 20 mPas einstellen. Des weiteren darf ein Lösemittel, das bei Durchlaufen von thermodynamischen Gleichgewichtszuständen durchaus eine geeignet steile η-T-Kennlinie aufweisen kann, nicht zur Ausbildung von unterkühlten Schmelzen neigen, da ein solches Lösemittel im Abkühlprozess zwischen den einzelnen Druckwerken einer schnell laufenden Druckmaschine nicht genügend Zeit zur Etablierung von Gleichgewichtszuständen hätte und die somit vorliegende unterkühlte Schmelze zu "Ablegen" an Leit- und Lenkrollen führen würde. Verzögerte Kristallisation ergibt sich gewöhnlich bei Mischkristall-Bildungen. Lösemittel dieser Art, d.h. Lösemittel, die sich durch Schmelzen von Mischkristallen ergeben, sind somit als einzige Lösemittelkomponente in einer für den schnellen Illustrationstiefdruck konstruierten Schmelzdruckfarbe nicht bevorzugt geeignet. Als Komponenten zur "Trocknungsverzögerung", die in Analogie zu speziellen Anwendungsfällen herkömmlicher Tiefdruck- und Illustrationstiefdruckfarben auch im Falle von Schmelzdruckfarben benötigt werden, können sie im Gemisch mit weiteren, nicht zur Ausbildung von unterkühlten Schmelzen neigenden Lösemitteln, Eingang in entsprechende Druckfarbensysteme finden. Gleiches gilt für kristalline Schmelzlösemittel, die auch als Einkomponenten-Kristalle zur Ausbildung unterkühlter Schmelzen neigen.

Die Entwicklung von kristallinen, monomer-niedermolekularen organischen Verbindungen mit zur Darstellung von Schmelzdruckfarben geeignetem Schmelzverhalten und mit Eignung als Schmelzlösemittel für solche thermoplastischen Bindemittel, die zur Dispergierung von Druckfarben-Pigmenten und ansonsten allgemein zur Herstellung von Schmelzdruckfarben und insbesondere zur Herstellung von Illustrationstiefdruck-Schmelzdruckfarben tauglich sind, ist Gegenstand dieser Erfindung.

Ferner werden in dieser Erfindung Bindemittel offengelegt, die zur Herstellung von Schmelzdruckfarben, insbesondere zur Herstellung von Illustrationstiefdruck-Schmelzdruckfarben und insbesondere in Kombination mit den beschriebenen kristallinen Lösemitteln geeignet sind.

Die beschriebenen Thermoplaste und Schmelzlösemittel können auch für hotmelt- bzw. phase-change ink-jet-Druckfarben und in der Bereitung von Tonem für elektrofotografische Schmelzverfahren verwendet werden.

Unter dem Begriff "Heißschmelzdruckfarbe" im Sinne der Erfindung sollen hier auch drucktechnisch eingesetzte Fluide verstanden sein, die nicht durch Einsatz von Pigmenten und/oder Farbstoffen farbig gestaltet sind. Solche nicht mit Farbmitteln versehenen Fluide können z.B. Verschnitte und Druck-Lacke sein, die in ihrer Ausgestaltung als Schmelzfluide aus den hier beanspruchten Bindemitteln und kristallinen Lösemitteln bestehen sowie optional auch mit drucktechnischen Additiven versehen sein können. Drucktechnische Additive können auch optional je nach Erforderlichkeit im speziellen Anwendungsfalle in den mit Pigmenten und/oder Farbstoffen farbig ausgeführten Druckfarben enthalten sein.

Die erfindungsgemäßen Schmelzdruckfarben bestehen aus Lösemitteln, Bindemitteln und gegebenenfalls aus Additiven und Farbmitteln, die nachfolgenden in detaillierter Weise beschrieben werden.

### a) Lösemittel

Die im Folgenden angegebenen Lösemittel sind erfindungsgemäß in dem Sinne, daß sie Realisierungen der bei Raumtemperatur kristallin-festen Substanzen sind, die oberhalb ihrer Schmelztemperatur als Lösemittel für die erfindungsgemäßen Bindemittel und optionellen Additive fungieren und in dieser Eigenschaft die erfindungsgemäßen Farbmittel-Dispersionen stabilisieren und zudem die oben geschilderten, einer Schmelzdruckfarbe erfindungsgemäß zukommenden Systemeigenschaften fördern. Die Schmelzpunkte dieser Lösemittel sind zusammen mit anderen calorischen Eigenschaften vermittelst DSC-Spektren (Differential scanning Calorimetry) gemessen, die Viskositäten mit einem luftgelagerten Rheometer, das im Falle von Schmelzdruckfarbe ohne weiteres in einer besonders praktischen Kegel-Platte-Konfiguration eingesetzt werden kann, da in diesem Falle im Kegel-Platte-Spalt keine Verdunstung von Lösemitteln und somit keine Verfälschung der Messergebnisse eintreten kann. Die Präparationen dieser kommerziell nicht erhältlichen Substanzen erfolgen nach Standard-Methoden. Soweit es sich bei den verwendeten Edukten um mehrfunktionelle Verbindungen handelt, werden diese in bevorzugter Weise mit den entsprechenden monomeren Edukten umgesetzt, um die Bildung von Oligomeren oder Polymeren zu vermeiden.

### 1.) Carbonsäureamide

Bevorzugte Carbonsäureedukte sind:
Acetylsalicylsäure, Acrylsäure, Ameisensäure, Benzoesäure, Benzol-1,2,4,5-tetracarbonsäure, Benzof-1,2,4-tricarbonsäure, Bemsteinsäure, 2,2-Bis-(hydroxymethyl)-propionsäure, Butansäure, 4-tert.-Butylbenzoesäure,Cyanessigsäure,1,4-Cyclohexandicarbonsäure, 1,10-Decandicarbonsäure, Decansäure, 1,10-Dodecandicarbonsäure, Dodecansäure, Essigsäure 2-Ethylbutansäure, 2-Ethylhexansäure, Fumarsäure, 2-Hydroxyessigsäure, Hexahydrophthalsäure, 1,6-Hexandicarbonsäure, Hexadecansäure, Hexansäure, 2-Hydroxybenzoesäure, 4-Hydroxy-benzoesäure, 2-Hydroxybernsteinsäure, 1-Hydroxy-1-phenylessigsäure, Isobuttersäure, Isophthalsäure, Maleinsäure, Malonsäure, 4-Methoxybenzoesäure, Methoxyessigsäure, 4-Methoxyphenylessigsäure, 2-Methylbenzoesäure, 3-Methylbenzoesäure, 4-Methylbenzoesäure, 2-Methylbutansäure, 3-Methylbutansäure, Methylenbernsteinsäure, 4-Nitrobenzoesäure, 1,9-Nonandicarbonsäure, Octadecansäure,1,8-Octandicarbonsäure, 4-Oxopentansäure, Octansäure, Oxalsäure, 1,5-Pentandicarbonsäure, 2-Phenoxyessigsäure, 2-Phenylessigsäure, Pivalinsäure, Propionsäure, Pentansäure, Terephthalsäure, Tetradecansäure, Tetrahydrophthalsäure

Bevorzugte Aminedukte sind:
Anilin, 2-Aminobutan, 4-Aminobenzoesäureethylester, 4-Aminodiphenylether, 3-Aminopropanol, Benzylamin, Butylamin, Cyclohexylamin, 1,2-Diaminobenzol, 1,3-Diaminobenzol, 1,4-Diaminobenzol, 4,4'-Diaminobiphenyl, 4,4'-Diaminodiphenylmethan, 1,2-Diaminoethan, 1,3-Diaminopentan, 1,2-Diaminopropan, 1,3-Diaminopropan, Dibenzylamin, Di-2-ethylhexylamin, Diethylamin, Diisobutylamin, Dimethylamin, Dimethylethanolamin, Dibutylamin, Diphenylamin, Dodecylamin, Ethanolamin, Ethylamin, 2-Ethylhexylamin, Furfurylamin, Hexadecylamin, 1,6-Hexamethylendiamin, Hexylamin, Isophorondiamin, Isopropylamin, 4-Methoxyanilin, 4-Methoxybenzylamin, Methylamin, 4-Methylanilin, N-Methylanilin, N-Methylbenzylamin, Morpholin, 1-Naphthylamin, 2-Naphthylamin, 2-Nitroanilin, 3-Nitroanilin, 4-Nitroanilin, Octadecylamin, Octylamin, 1-Phenylethylamin, 2-Phenylethylamin, Phenylhydrazin, Piperazin, Piperidin, Propylamin, Pyrrolidin, Tetrahydrofurfurylamin

| Tab. 1: Schmelzpunkte und Viskositäten ausgewählter Carbonsäureamide | | |
|---|---|---|
| Substanz | Schmelzpunkt [Grd C] | Viskosität bei 110Grd C [mPas] |
| N-Benzyldodecansäureamid | 82 | 6.2 |
| N-Benzyltetradecansäureamid | 88 | 6.9 |
| N-Benzylhexadecansäureamid | 93 | 7.4 |
| N-Benzyloctadecansäureamid | 95 | 8.2 |
| N-Octadecylbenzamid | 85 | 10.0 |
| N-Methylhexadecansäureamid | 83 | 6.4 |
| N-Methyttetradecansäureamid | 77 | 5.4 |
| N-Dodecyl-2-cyanacetamid | 86 | 5.6 |
| N-Dodecylacetoacetamid | 78 | 4.3 |
| Tetradecansäureamid | 99 | 6.6 |
| N-Octadecylacetoacetamid | 98 | 6.9 |
| N-(4-Methoxyphenyl)-propionsäureamid | 86 | 7.4 |
| Hexan-1,6-diyldiformamid | 105 | 10.8 |
| N-Butanoylbenzamid | 102 | 4.0 |
| N-Benzyl-2-phenoxyacetamid | 85 | 5.8 |
| N-Benzyl-benzamid | 106 | 9.2 |
| N-(2-Phenylethyl)-2-phenylacetamid | 88 | 7.7 |
| N-Benzoyl-2-pyrrolidon | 90 | 6.2 |
| N-Hexanoyl-benzamid | 79 | 4.2 |
| N-Isopropyl-hexadecanamid | 81 | 6.8 |
| N-(2-Furfuryl)-benzamid | 102 | 7.1 |
| N-(1-Phenylethyl)-phenoxyacetamid | 96 | 6.0 |
| N,N-Diphenyl-acetamid | 95 | 6.0 |
| N-Phenyl-2-phenoxyacetamid | 98 | 6.0 |
| N-Benzylbenzamid | 105 | 8.7 |
| N-Methyl-N-benzoylbenzamid | 88 | 8.4 |
| N-Methyl-N-phenyl-2-phenoxyacetamid | 92 | 5.3 |
| N-Methyl-N-phenyl-2-phenoxyacetamid | 91 | 5.6 |
| N-Pyrrolidyl-4-nitrobenzamid | 82 | 9.1 |
| N-Pyrrolidyl-2-phenoxyacetamid | 80 | 4.9 |
| N-Pyrrolidyl-4-methoxybenzamid | 77 | 5.5 |
| N-Pyrrolidyl-4-tert.-butylbenzamid | 100 | 5.9 |

### 2.) Imide

Bevorzugte Anhydridedukte sind:
Benzol-1,2,4,5-tetracarbonsäure-1,2,4,5-dianhydrid, Benznl-1,2,4-bicarbonsäure-1,2-anhydrid, Hexahydrophthalsäureanhydrid, Methytenhexahydrophthalsäureanhydrdid, Naphthalin-1,8-dicarbonsäureanhydrid, Phthalsäureanhydrid, Tetrahydrophthalsäureanhydrid

Bevorzugte Aminedukte sind:
Aminobenzoesäureethylester, 4-Aminodiphenylether, 3-Aminopropanol, Benzidin (4,4'-Diamino-biphenyl), Benzylamin, Butylamin, Cyclohexylamin, 1,2-Diaminobenzol, 1,3-Diaminobenzol, 1,4-Diaminobenzol, 4,4'-Diaminodiphenylmethan, 1,2-Diaminoethan, 1,3-Diaminopentan, 1,2-Diaminopropan, 1,3-Diaminopropan, Dodecylamin, Ethanolamin, Ethylamin, 2-Ethylhexylamin, Furfurylamin, Hexadecylamin, 1,6-Hexamethylendiamin, Hexylamin, Isophorondiamin, Isopropylamin, 4-Methoxyanilin, 4-Methoxybenzylamin, Methylamin, 4-Methylanilin, 1-Naphthylamin, 2-Naphthylamin, 2-Nitroanilin, 3-Nitroanilin, 4-Nitroanilin, Octadecylamin, Octylamin, 1-Phenylethylamin, 2-Phenylethylamin, Propylamin, Tetrahydrofurfurylamin

| Tab. 2: Schmelzpunkte und Viskositäten ausgewählter Imide | | |
|---|---|---|
| Substanz | Schmelzpunkt [Grd C] | Viskosität bei 110Grd C [mPas] |
| N-Hexadecylphthalimid | 75 | 5.1 |
| 3-(N-Phthalyl)-amino-propyl-1-acetat | 89 | 7.7 |
| N-Pentanoylphthalimid | 81 | 4.3 |
| N-Hexadecanoytsuccinimid | 87 | 7.2 |
| 2-(N-Phthalyl)-aminoessigsäureisopropylester | 104 | 10.1 |
| 2-(N-Phthalyl)-aminoethyllaevulinat | 92 | 9.8 |
| Benzol-1,2-(N-ethyl)imid-4-carbonsäuremethylester | 86 | 9.2 |

### 3.) Mono- bzw. Diurethane

Bevorzugte Isocyanatedukte sind:
1,3-Bis(1-isocyanato-1-methylethyl)benzene (TMXDI), 1,5-Bis(isocyanat)-naphthalin, Butylisocyanat, Cyclohexylisocyanat, Hexamethylendiisocyanat (HDI), Isophorondiisocyanat (IPDI), 4-lsopropylphenylisocyanat, 4,4'-Methylenbis(cyclohexyl)isocyanat (H12MDI), 4,4'-Methylen-bis(phenylisocyanat) (MDI), 1-Naphthylisocyanat, Octadecylisocyanat, 1,4-Phenylendiisocyanat (PPDI), Phenylisocyanat, Toluol-4-sulfonylisocyanat, Toluoldiisocyanat (TDI)

Bevorzugte Chlorformiatedukte sind:
Benzylchlorformiat, Butandiol-1,4-bis-chlorformiat, Butylchlorformiat, sek.-Butylchlorformiat, Hexadecylchlorformiat, Diethylenglykol-bis-chlorformiat, Ethylchlorformiat, 2-Ethylhexylchlorfortniat, lsobutylchlorformiat, lsopropylchlorformiat, 1,6-Hexandiol-bis-chloroformiat, 2-Methoxyethylchlorformiat,Methylchlorformiat, Tetradecylchlorformiat, Phenoxyethylchlorformiat, Phenylchlorformiat, Propylchlorformiat, Octadecylchlorformiat

Bevorzugte Alkoholedukte sind:
Benzoin, Benzylalkohol, 1,4-Bis-(hydroxymethyl)cyclohexan,1,4-Butandiol, 2-Butin-1,4-diol, 3-Butin-2-ol, Butanol, 2-Butanol, tert.-Butanol, Cyclohexanol, 1-Decanol, 2,2-Dimethyl-1-propanol, 1,1-Diphenylmethanol, Dipropylenglykol, 1-Docosanol, 1,12-Dodecandiol, 1-Dodecanol, 1-Eicosanol, Ethanol, Ethoxypropanol, Ethandiol, Ethylenglykolmonosalicylat, Ethylenglykolmonoethylether, 2-Ethyl-1-hexanol, 2-Ethyl-2-(hydroxymethyl)-1,3-propandiol, Furfurylalkohol, Glycerin, 2-Heptanol, 1-Hexadecanol, 1,6-Hexandiol, 1-Hexanol, Hydrochinon-bis(2-hydroxyethylether), Hydroxyaceton, 2-Hydroxybenzyllkohol, 2-Hydroxyessigsäure, 2-Hydroxyessigsäurebutylester, N-(2-Hydroxyethyl)phthalimid, Hydroxypivalylhydroxypivalat, 3-Hydroxypropionitril, Isobomeol, Isopropanol, Menthol (6-Isopropyl-2-methyl-cyclohexanol), Methanol, 4-Methoxybenzylalkohol, Methoxypropanol, 3-Methyl-1-butanol, 2-Methyl-3-butin-2-ol, 2-Methyl-1,3-propandiol, 2-Methyl-1-propanol, 1,2-Octadecandiol, 1-Octadecanol, 1-Octanol, 2-Octanol, Pentaerythritol, 2-Phenoxyethanol, 1-Phenoxy-2-propanol, 3-Phenyl-1-propanol, 1-Phenylethanol, 2-Phenylethanol, 2-Popin-1-ol, 1,2-Propandiol, 1,3-Propandiol, 1-Propanol, 1-Tetradecanol, Tetrahydrofurfurylalkohol,Tris(hydroxymethyl)ethan

Bevorzugte Aminedukte sind:
Anilin, 2-Aminobutan, 4-Aminobenzoesäureethylester, 4-Aminodiphenylether, 3-Aminopropanol, Benzidin (4,4'-Diamino-biphenyl), Benzylamin, Butylamin, Cyclohexylamin, 1,2-Diaminobenzol, 1,3-Diaminobenzol, 1,4-Diaminobenzol, 4,4'-Diaminodiphenylmethan, 1,2-Diaminoethan, 1,3-Diaminopentan, 1,2-Diaminopropan, 1,3-Diaminopropan, Dibenzylamin, Di-2-ethylhexylamin, Diethylamin, Diisobutylamin, Dimethylamin, Dimethylethanolamin, Dibutylamin, Diphenylamin, Dodecylamin, Ethanolamin, Ethylamin, 2-Ethylhexylamin, Furfurylamin, Hexadecylamin, 1,6-Hexamethylendiamin, Hexylamin, Isophorondiamin, Isopropylamin, 4-Methoxyanilin, 4-Methoxybenzylamin, Methylamin, 4-Methylanilin, N-Methylanilin, N-Methylbenzylamin, Morpholin, 1-Naphthylamin, 2-Naphthylamin, 2-Nitroanilin, 3-Nitroanilin, 4-Nitroanilin, Octadecylamin, Octylamin, 1-Phenylethylamin, 2-Phenylethylamin, Phenylhydrazin, Piperazin, Piperidin, Propylamin, Tetrahydrofurfurylamin, Pyrrolidin

Bevorzugte N,N-Dialkylcarbaminsäuredukte sind:
N,N-Diethylcarbaminsäurechlorid, N,N-Dimethylcarbaminsäurechlorid, N,N-Diphenylcarbaminsäurechlorid

| Tab. 3: Schmelzpunkte und Viskositäten ausgewählter Mono- und Diurethane | | |
|---|---|---|
| Substanz | Schmelzpunkt [Grd C] | Viskosität bei 110 Grd C [mPas] |
| Hexadecylurethan | 93 | 5.1 |
| Tetradecylurethan | 89 | 4.6 |
| N-Methyloctadecylurethan | 78 | 4.1 |
| N-(1-Naphthyl)hexadecylurethan | 84 | 8.1 |
| Hexan-1,6-diylbis(propylurethan) | 95 | 8.9 |
| Hexan-1,6-diylbis(butylurethan) | 94 | 9.0 |
| Hexan-1,6-diylbis(ethylurethan) | 83 | 9.3 |
| 3-Oxypentan-1,5-diyl-bis(N-methylurethan) | 98 | 8.8 |
| Butan-1,4-diylbis(N-methyl-N-phenylurethan) | 97 | 7.0 |
| 1,6-Bis(N-Ethoxycarbonyl)aminohexan | 83 | 8.5 |
| N-(1-Naphthyl)-isopropylurethan | 105 | 7.0 |
| N-Phenyl-2-phenylethylurethan | 80 | 5.7 |
| N-Phenyl-1-phenylethylurethan | 88 | 6.3 |
| Hydrochinon-bis(N,N-diethylurethan) | 104 | 6.4 |
| Hydrochinon-bis(2-(N,N-dimethylurethan)ethylether) | 95 | 7.6 |
| N-Phenyl-2-phenoxyethylunahan | 97 | 7.6 |
| 4-(N,N-Dimethylurethan)benzoesäuremethylester | 95 | 3.9 |
| N-Benzylphenylurethan | 81 | 5.1 |
| N-Benzylcetylurethan | 80 | 4.6 |

### 4.) Sulfonamide

Bevorzugte Sulfonsäurechloridedukte sind:
4-Acetamidobenzolsulfonsäurechlorid, Benzolsulfonsäurechlorid, Ethansulfonsäurechlorid, Methansulfonsäurechlorid, p-Toluolsulfonsäurechlorid

Bevorzugte Aminedukte sind:
Anilin, 2-Aminobutan, 4-Aminobenzoesäureethylester, 4-Aminodiphenylether, 3-Aminopropanol, Benzidin (4,4'-Diamino-biphenyl), Benzylamin, Butylamin, Cyclohexytamin, 1,2-Diaminobenzol, 1,3-Diaminobenzol, 1,4-Diaminobenzol, 4,4'-Diaminodiphenylmethan, 1,2-Diaminoethan, 1,3-Diaminopentan, 1,2-Diaminopropan, 1,3-Diaminopropan, Dibenzylamin, Di-2-ethylhexylamin, Diethylamin, Diisobutylamin, Dimethylamin, Dimethylethanolamin, Dbutytamin, Diphenylamin, Dodecylamin, Ethanolamin, Ethylamin, 2-Ethylhexylamin, Furfurylamin, Hexadecylamin, 1,6-Hexamethylendiamin, Hexylamin, Isophorondiamin, Isopropylamin, 4-Methoxyanilin, 4-Methoxybenzylamin, Methylamin, 4-Methylanilin, N-Methylanilin, N-Methylbenzylamin, Morpholin, 1-Naphthylamin, 2-Naphthylamin, 2-Nitroanilin, 3-Nitroanilin, 4-Nitroanilin, Octadecylamin, Octylamin, 1-Phenylethylamin, 2-Phenylethylamin, Phenylhydrazin, Piperazin, Piperidin, Propylamin, Tetrahydrofurfurylamin, Pyrrolidin

### Tab. 4 Schmelzpunkte und Viskositäten ausgewählter Lösemittel

| Tab. 4: Schmelzpunkte und Viskositäten ausgewählter Sulfonamide | | |
|---|---|---|
| Substanz | Schmelzpunkt [Grd C] | Viskosität bei 110 Grd C [mPas] |
| N-Octadecyl-4-methylbenzolsulfonamid | 90 | 9.7 |
| N-Benzyl-benzolsulfonamid | 83 | 7.1 |
| N-Methyl-N-phenyl-4-methylbenzolsulfonamid | 94 | 6.5 |
| N-Hexadecyl-methansutfonamid | 87 | 8.7 |

### 5.) Sulfonsäureester

Bevorzugte Sulfonsäurechloridedukte sind:
4-Acetamidobenzolsulfonsäurechlorid, Benzoesulfonsäurechlorid, Ethansutfonsäurechlorid, Methansulfonylchlorid, p-Toluolsulfonsäurechlorid

Bevorzugte Alkoholedukte sind:
Benzoin, Benzylalkohol, 1,4-Bis-(hydroxymethyl)cyclohexan,1,4-Butandiol, 2-Butin-1,4-diol, 3-Butin-2-ol, Butanol, 2-Butanol, tert.-Butanol, Cyclohexanol, 1-Decanol, 2,2-Dimethyl-1-propanol, 1,1-Diphenylmethanol, Dipropylenglykol, 1-Docosanol, 1,12-Dodecandiol, 1-Dodecanol, 1-Eicosanol, Ethanol, Ethoxypropanol, Ethandiol, Ethylenglykolmonosalicylat, Ethylenglykolmonoethylether, 2-Ethyl-1-hexanol, 2-Ethyl-2-(hydroxymethyl)-1,3-propandiol, Furfurylalkohol, Glycerin, 2-Heptanol, 1-Hexadecanol, 1,6-Hexandiol, 1-Hexanol, Hydrochinon-bis(2-hydroxyethylether), Hydroxyaceton, 2-Hydroxybenzyllkohol, 2-Hydroxyessigsäure, 2-Hydroxyessigsäurebutylester, N-(2-Hydroxyethyl)phthalimid, Hydroxypivalylhydroxypivalat, 3-Hydroxypropionitril, Isoborneol, Isopropanol, Menthol (6-Isopropyl-2-methyl-cyclohexanol), Methanol, 4-Methoxybenzylalkohol, Methooypropanol, 3-Methyl-1-butanol, 2-Methyl-3-butin-2-ol, 2-Methyl-1,3-propandiol, 2-Methyl-1-propanol, 1,2-Octadecandiol, 1-Octadecanol, 1-Octanol, 2-Octanol, Pentaerythritol, 2-Phenoxyethanol, 1-Phenoxy-2-propanol, 3-Phenyl-1-propanol, 1-Phenylethanol, 2-Phenylethanol, 2-Popin-1-ol, 1,2-Propandiol, 1,3-Propandiol, 1-Propanol, 1-Tetradecanol, Tetrahydrofurfurylalkohol,Tris(hydroxymethyl)ethan

Bevorzugte Phenoledukte sind:
4-Acetaminophenol, 4-Aminophenol, 4-Benzyloxyphenol, 2,2-Bis(4-hydroxyphenyl)-propan, 2-tert.-Butylhydrochinon, 2-tert-Butylphenol, 4-tert-Butylphenol, 2,2'-Dihydroxybiphenyl, 4,4'-Dihydroxybiphenyl, 1,4-Dihydroxyanthrachinon, 3,5-Dimethylphenol, 4-Ethylphenol, Hydrochinon, 4-Hydroxyacetophenon, 4-Hydroxybenzoesäure, 4-Hydroxybenzoesäurebenzylester, 4-Hydroxybenzoesäureethylester, 4-Hydroxybenzoesäuremethylester, 4-Hydroxybenzoesäureisopropylester, 4-Hydroxybenzoesäurepropylester, 2-Hydroxybiphenyl, 4-Hydroxybiphenyl, 4-Hydroxypropiophenon, 4-Methoxyphenol, 2-Methoxyphenol, 2-Methylphenol, 3-Methylphenol, 4-Methylphenol, 1-Naphthol, 2-Naphthol, Naphthalin-1,5-diol, 4-Nitrophenol, 4-Nitrophenylglykol, Octylphenol, Phenol, 4-(2-Phenyl-2-propyl)phenol, Resorcin, Resorcinmonobenzoat, Salicylsäuremethylester, Salicylsäurephenylester

| Tab. 5: Schmelzpunkte und Viskositäten ausgewählter Sulfonsäureester | | |
|---|---|---|
| Substanz | Schmelzpunkt [Grd C] | Viskosität bei 110 Grd C [mPas] |
| Ethansulfonsäure-4-phenylphenylester | 87 | 6.7 |
| Benzolsulfonsäure-4-phenylphenylester | 101 | 10.0 |
| 4-Methylbenzoisulfonsäure-4-methoxycarbonylphenylester | 90 | 8.1 |

### 6.) Carbonsäureester

Bevorzugte Carbonsäureedukte sind:
Acetylsalicylsäure, Acrylsäure, Ameisensäure, Benzoesäure, Benzol-1,2,4,5-tetracarbonsäure, Benzol-1,2,4-tricarbonsäure, Bernsteinsäure, 2,2-Bis (hydroxymethyl)-propionsäure, Butansäure, 4-tert.-Butylbenzoesäure, Cyanessigsäure,1,4-Cyclohexandicarbonsäure, 1,10-Decandicarbonsäure, Decansäure, 1,10-Dodecandicarbonsäure, Dodecansäure, Essigsäure, 2-Ethylbutansäure, 2-Ethylhexansäure, Fumarsäure, 2-Hydroxyessigsäure, Hexahydrophthalsäure, 1,6-Hexandicarbonsäure, Hexadecansäure, Hexansäure, 2-Hydroxybenzoesäure, 4-Hydroxybenzoesäure, 2-Hydroxybernsteinsäure, 1-Hydroxy-1-phenylessigsäure, Isobuttersäure, Isophthalsäure, Maleinsäure, Malonsäure, 4-Methoxybenzoesäure, Methoxyessigsäure, 4-Methoxyphenylessigsäure, 2-Methylbenzoesäure, 3-Methylbenzoesäure, 4-Methylbenzoesäure, 2-Methylbutansäure, 3-Methylbutansäure, Methylenbernsteinsäure, 4-Nitrobenzoesäure, 1,9-Nonandicarbonsäure, Octadecansäure,1,8-Octandicarbonsäure, 4-Oxopentansäure, Octansäure, Oxalsäure, 1,5-Pentandicarbonsäure, 2-Phenoxyessigsäure, 2-Phenylessigsäure, Pivalinsäure, Propionsäure, Pentansäure, Terephthalsäure, Tetradecansäure, Tetrahydrophthalsäure

Bevorzugte Alkoholedukte sind:
Benzoin, Benzylalkohol, 1,4-Bis-(hydroxymethyl)cyclohexan,1,4-Butandiol, 2-Butin-1,4-diol, 3-Butin-2-ol, Butanol, 2-Butanol, tert.-Butanol, Cyclohexanol, 1-Decanol, 2,2-Dimethyl-1-propanol, 1,1-Diphenylmethanol, Dipropylenglykol, 1-Docosanol, 1,12-Dodecandiol, 1-Dodecanol, 1-Eicosanol, Ethanol, Ethoxypropanol, Ethandiol, Ethylenglykolmonosalicylat, Ethylenglykolmonoethylether, 2-Ethyl-1-hexanol, 2-Ethyl-2-(hydroxymethyl)-1,3-propandiol, Furfurylalkohol, Glycerin, 2-Heptanol, 1-Hexadecanol, 1,6-Hexandiol, 1-Hexanol, Hydrochinon-bis(2-hydroxyethylether), Hydroxyaceton, 2-Hydroxybenzyllkohol, 2-Hydroxyessigsäure, 2-Hydroxyessigsäurebutylester, N-(2-Hydroxyethyl)phthalimid, Hydroxypivalylhydroxypivatat, 3-Hydroxypropionitril, Isobomeol, Isopropanol, Menthol (6-Isopropyl-2-methyl-cydohexanol), Methanol, 4-Methoxybenzylalkohol, Methoxypropanol, 3-Methyl-1-butanol, 2-Methyl-3-butin-2-ol, 2-Methyl-1,3-propandiol, 2-Methyl-1-propanol, 1,2-Octadecandiol, 1-Octadecanol, 1-Octanol, 2-Octanol, Pentaerythritol, 2-Phenoxyethanol, 1-Phenoxy-2-propanol, 3-Phenyl-1-propanol, 1-Phenylethanol, 2-Phenylethanol, 2-Popin-1-ol, 1,2-Propandiol, 1,3-Propandiol, 1-Propanol, 1-Tetradecanol, Tetrahydrofurfurylalkohol,Tris(hydroxymethyl)ethan

Bevorzugte Phenoledukte sind:
4-Acetaminophenol, 4-Aminophenol, 4-Benzyloxyphenol, 2,2-Bis(4-hydroxyphenyl)-propan, 2-tert.-Butylhydrochinon, 2-tert-Butylphenol, 4-tert-Butylphenol, 2,2'-Dihydroxybiphenyl, 4,4'-Dihydroxybiphenyl, 1,4-Dihydroxyanthrachinon, 3,5-Dimethylphenol, 4-Ethylphenol, Hydrochinon, 4-Hydroxyacetophenon, 4-Hydroxybenzoesäure, 4-Hydroxybenzoesäurebenzylester, 4-Hydroxybenzoesäureethylester, 4-Hydroxybenzoesäuremethylester, 4-Hydroxybenzoesäureisopropylester, 4-Hydroxybenzoesäurepropylester, 2-Hydroxybiphenyl, 4-Hydroxybiphenyl, 4-Hydroxypropiophenon, 4-Methoxyphenol, 2-Methoxyphenol, 2-Methylphenol, 3-Methylphenol, 4-Methylphenol, 1-Naphthol, 2-Naphthol, Naphthalin-1,5-diol, 4-Nitrophenol, 4-Nitrophenylglykol, Octylphenol, Phenol, 4-(2-Phenyl-2-propyl)phenol, Resorcin, Resorcinmonobenzoat, Salicylsäuremethylester, Salicylsäurephenylester

| Tab. 6: Schmelzpunkte und Viskositäten ausgewählter Carbonsäureester | | |
|---|---|---|
| Substanz | Schmelzpunkt [Grd C] | Viskosität bei 110 Grd C [mPas] |
| Hydrochinon-bis(2-decanoyloxyethylether) | 83 | 5.5 |
| Hydrochinon-bis(2-dodecanoyloxyethylether) | 86 | 6.7 |
| Hydrochinondidodecanoat | 85 | 5.4 |
| Hydrochinondihexadecanoat | 94 | 7.7 |
| Hydrochinonditetradecanoat | 90 | 6.4 |
| Hydrochinon-bis(2-acetoytoxyethylether) | 98 | 4.6 |
| 2,2-Bis(4-acetoxyphenyl)propan | 90 | 9.6 |
| Naphthalin-1,5-dipropionat | 95 | 5.9 |
| Hydrochinon-bis(2-methoxyacetat) | 86 | 4.3 |
| 4-Phenylphenylacetat | 88 | 3.0 |
| Benzoinacetat | 75 | 6.8 |
| 4,4'-Diacetoxybiphenyl | 94 | 7.5 |
| Hexan-1,6-diylbis(2-hydroxyacetat) | 82 | 6.2 |
| Hydrochinon-bis(2-isobutyloxycarbonylethylether) | 91 | 3.9 |
| Docosyl-2-hydroxyacetat | 80 | 5.1 |
| Oxalsäuredibenzylester | 79 | 3.3 |
| 4-Nitrobenzoesäurebenzylester | 83 | 4.2 |
| 4-Methoxyphenylbenzoat | 87 | 3.2 |
| Benzhydrolisobutyrat | 90 | 5.4 |
| N-Phenyl-2-phenoxyethylurethan | 97 | 7.4 |
| Butan-1,4-diyldibenzoat | 75 | 5.7 |
| 2-Benzoxybenzoesäuremethylester | 84 | 5.0 |
| Bemsteinsäurebis(2-phenoxyethylester) | 104 | 6.0 |
| 2-Acetoxybenzoesäurephenylester | 97 | 5.6 |
| 4-Methylphenyl-4-nitrobenzoat | 97 | 5.1 |
| 3-Methylphenyl-4-nitrobenzoat | 87 | 5.7 |
| Adipinsäure-bis(4-methylphenyl)ester | 93 | 4.8 |
| Phenoxyessigsäure-4-tert.-butylphenylester | 91 | 4.6 |
| Benzoesäure-4-tert.-butylphenylester | 81 | 3.5 |
| 2-Methylbenzoesäure-4-phenylphenylester | 99 | 6.5 |
| 2-(4-Phenylphenoxy)ethandiyl-1-benzoat | 94 | 8.4 |
| Hexan-1,6-diylbis(4-methylbenzoat) | 85 | 6.0 |
| 1-(4-Phenylphenoxy)propandiyl-2-benzoat | 87 | 9.8 |
| Pivalinsäure-2-(4-phenytphenoxy)-ethylester | 82 | 4.8 |
| Essigsäure-2-(4-phenylphenoxy)-ethylester | 92 | 4.8 |
| Butan-1,4-diyldibenzoat | 79 | 4.5 |
| Butan-1,4-diylbis(4-methylbenzoat) | 86 | 6.1 |
| 4-Methoxyphenyl-4-methylbenzoat | 96 | 4.3 |
| Benzoinisobutyrat | 77 | 5.4 |
| Hydrochinon-bis(2-(2-phenoxyacetoyloxy)-ethylether) | 78 | 9.8 |
| Benzoesäureisopropylester-4-benzoat | 80 | 6.0 |
| 3-Methylbenzoesäure-4-aoetylphenylester | 85 | 6.0 |
| Phenoxyessigsäure-4-methoxyphenylester | 85 | 5.3 |
| Benzoesäureethylester-4-benzoat | 89 | 5.0 |
| Dipropargylterephthalat | 105 | 9.3 |
| Resorcindipivalat | 75 | 4.2 |
| 1,4-Bis(acetoxymethylyl)cyclohexan | 75 | 2.9 |
| Isophthalsäure-dibenzylester | 81 | 8.0 |
| 2-(4-Phenylphenoxy)essigsäuremethylester | 100 | 5.2 |
| Terephthalsäure-bis(2-butoxycarbonylethylether) | 75 | 8.2 |
| Hydrochinon-bis(2-ethoxycarbonylethylether) | 70 | 4.7 |
| Hydrochinon-bis(3-ethoxycarbonyl-2-propylether) | 83 | 4.0 |

### 7.) Ether

Bevorzugte Halogenedukte sind:
Benzylchlorid, 4,4'-Bis(chloromethyl)-1,1'-biphenyl, Cyanurchlorid, Ethyl-2-bromacetat, Ethyl-2-brompropionat, Methyl-2-brompropionat, Methylbromacetat, 2-Phenylethylbromid,

Bevorzugte Alkoholedukte sind:
Benzoin, Benzylalkohol, 1,4-Bis-(hydroxymethyl)cyclohexan,1,4-Butandiol, 2-Butin-1,4-diol, 3-Butin-2-ol, Butanol, 2-Butanol, tert.-Butanol, Cyclohexanol, 1-Decanol, 2,2-Dimethyl-1-propanol, 1,1-Diphenylmethanol, Dipropylenglykol, 1-Docosanol, 1,12-Dodecandiol, 1-Dodecanol, 1-Eicosanol, Ethanol, Ethoxypropanol, Ethandiol, Ethylenglykolmonosalicylat, Ethylenglykolmonoethylether, 2-Ethyl-1-hexanol, 2-Ethyl-2-(hydroxymethyl)-1,3-propandiol, Furfurylalkohol, Glycerin, 2-Heptanol, 1-Hexadecanol, 1,6-Hexandiol, 1-Hexanol, Hydrochinon-bis(2-hydroxyethylether), Hydroxyaceton, 2-Hydroxybenzyllkohol, 2-Hydroxyessigsäure, 2-Hydroxyessigsäurebutylester, N-(2-Hydroxyethyl)phthalimid, Hydroxypivalylhydroxypivalat, 3-Hydroxypropionitril, Isoborneol, Isopropanol, Menthol (6-Isopropyl-2-methyl-cyclohexanol), Methanol, 4-Methoxybenzylalkohol, Methoxypropanol, 3-Methyl-1-butanol, 2-Methyl-3-butin-2-ol, 2-Methyl-1,3-propandiol, 2-Methyl-1-propanol, 1,2-Octadecandiol, 1-Octadecanol, 1-Octanol, 2-Octanol, Pentaerythritol, 2-Phenoxyethanol, 1-Phenoxy-2-propanol, 3-Phenyl-1-propanol, 1-Phenylethanol, 2-Phenylethanol, 2-Popin-1-ol, 1,2-Propandiol, 1,3-Propandiol, 1-Propanol, 1-Tetradecanol, Tetrahydrofurfurylalkohol,Tris(hydroxymethyl)ethan

Bevorzugte Phenoledukte sind:
4-Acetaminophenol, 4-Aminophenol, 4-Benzyloxyphenol, 2,2-Bis(4-hydroxyphenyl)-propan, 2-tert.-Butylhydrochinon, 2-tert-Butylphenol, 4-tert-Butylphenol, 2,2'-Dihydroxybiphenyl, 4,4'-Dihydroxybiphenyl, 1,4-Dihydroxyanthrachinon, 3,5-Dimethylphenol, 4-Ethylphenol, Hydrochinon, 4-Hydroxyacetophenon, 4-Hydroxybenzoesäure, 4-Hydroxybenzoesäurebenzylester, 4-Hydroxybenzoesäureethylester, 4-Hydroxybenzoesäuremethylester, 4-Hydroxybenzoesäureisopropylester, 4-Hydroxybenzoesäurepropylester, 2-Hydroxybiphenyl, 4-Hydroxybiphenyl, 4-Hydroxypropiophenon, 4-Methoxyphenol, 2-Methoxyphenol, 2-Methylphenol, 3-Methylphenol, 4-Methylphenol, 1-Naphthol, 2-Naphthol, Naphthalin-1,5-diol, 4-Nitrophenol, 4-Nitrophenylglykol, Octylphenol, Phenol, 4-(2-Phenyl-2-propyl)phenol, Resorcin, Resorcinmonobenzoat, Salicylsäuremethylester,Salicylsäurephenylester

| Tab. 7: Schmelzpunkte und Viskositäten ausgewählter Ether | | |
|---|---|---|
| Substanz | Schmelzpunkt [Grd C] | Viskosität bei 110 Grd C [mPas] |
| 2-Benzyloxynaphthalin | 95 | 3.5 |
| 2-(2-Naphthoxy)ethylbenzoat | 75 | 7.0 |
| 4-Benzyloxy-benzoesäuremethylester | 94 | 4.2 |
| 4-Benzyloxyacetophenon | 91 | 4.0 |
| 4-Benzyloxynitrobenzol | 105 | 6.8 |
| 1-(4-Phenylphenoxy)-2-phenylethandiyl | 96 | 5.4 |

### 8.) Carbonate

Bevorzugte Chlorformiatedukte sind:
Benzylchlorformiat, Butandiol-1,4-bis-chlorformiat, Butylchlorformiat, sek.-Butylchlorformiat, Hexadecylchlorformiat, Diethylenglykol-bis-chlorformiat, Ethylchlorformiat, 2-Ethylhexylchlorformiat, Isobutylchlorformiat, Isopropylchlorformiat, 1,6-Hexandiol-bis-chloroformiat, 2-Methoxyethylchlorformiat, Methylchlorformiat, Tetradecylchlorformiat, Phenoxyethylchlorformiat, Phenylchlorformiat, Propylchlorformiat, Octadecylchlorformiat

Bevorzugte Alkoholedukte sind:
Benzoin, Benzylalkohol, 1,4-Bis-(hydroxymethyl)cyclohexan,1,4-Butandiol, 2-Butin-1,4-diol, 3-Butin-2-ol, Butanol, 2-Butanol, tert.-Butanol, Cyclohexanol, 1-Decanol, 2,2-Dimethyl-1-propanol, 1,1-Diphenylmethanol, Dipropylenglykol, 1-Docosanol, 1,12-Dodecandiol, 1-Dodecanol, 1-Eicosanol, Ethanol, Ethoxypropanol, Ethandiol, Ethylenglykolmonosalicylat, Ethylenglykolmonoethylether, 2-Ethyl-1-hexanol, 2-Ethyl-2-(hydroxymethyl)-1,3-propandiol, Furfurylalkohol, Glycerin, 2-Heptanol, 1-Hexadecanol, 1,6-Hexandiol, 1-Hexanol, Hydrochinon-bis(2-hydroxyethylether), Hydroxyaceton, 2-Hydroxybenzyllkohol, 2-Hydroxyessigsäure, 2-Hydroxyessigsäurebutylester, N-(2-Hydroxyethyl)phthalimid, Hydroxypivalylhydroxypivalat, 3-Hydroxypropionitril, Isobomel, Isopropanol, Menthol (6-Isopropyl-2-methyl-cyclohexanol), Methanol, 4-Methoxybenzylalkohol, Methoxypropanol, 3-Methyl-1-butanol, 2-Methyl-3-butin-2-ol, 2-Methyl-1,3-propandiol, 2-Methyl-1-propanol, 1,2-Octadecandiol, 1-Octadecanol, 1-Octanol, 2-Octanol, Pentaerythritol, 2-Phenoxyethanol, 1-Phenoxy-2-propanol, 3-Phenyl-1-propanol, 1-Phenylethanol, 2-Phenylethanol, 2-Popin-1-ol, 1,2-Propandiol, 1,3-Propandiol, 1-Propanol, 1-Tetradecanol, Tetrahydrofurfurylalkohol, Tris(hydroxymethyl)ethan

Bevorzugte Phenoledukte sind:
4-Acetaminophenol, 4-Aminophenol, 4-Benzyloxyphenol, 2,2-Bis(4-hydroxyphenyl)-propan, 2-tert.-Butylhydrochinon, 2-tert-Butylphenol, 4-tert-Butylphenol, 2,2'-Dihydroxybiphenyl, 4,4'-Dihydroxybiphenyl, 1,4-Dihydroxyanthrachinon, 3,5-Dimethylphenol, 4-Ethylphenol, Hydrochinon, 4-Hydroxyacetophenon, 4-Hydroxybenzoesäure, 4-Hydroxybenzoesäurebenzylester, 4-Hydroxybenzoesäureethylester, 4-Hydroxybenzoesäuremethylester, 4-Hydroxybenzoesäureisopropylester, 4-Hydroxybenzoesäurepropylester, 2-Hydroxybiphenyl, 4-Hydroxybiphenyl, 4-Hydroxyproppophenon, 4-Methoxyphenol, 2-Methoxyphenol, 2-Methylphenol, 3-Methylphenol, 4-Methylphenol, 1-Naphthol, 2-Naphthol, Naphthalin-1,5-diol, 4-Nitrophenol, 4-Nitrophenylglykol, Octylphenol, Phenol, 4-(2-Phenyl-2-propyl)phenol, Resorcin, Resorcinmonobenzoat, Salicylsäuremethylester, Salicylsäurephenylester

| Tab. 8: Schmelzpunkte und Viskositäten ausgewählter Carbonate | | |
|---|---|---|
| Substanz | Schmelzpunkt [Grd C] | Viskosität bei 110 Grd C [mPas] |
| Hydrochinondihexadecylcarbonat | 80 | 10.2 |
| Hydrochinondiethylcarbonat | 99 | 3.8 |
| N,O-Di-propyloxycarbonyl-1,4-aminophenol | 86 | 10.0 |
| Hydrochinon-bis(2-methoxyethylcarbonat) | 81 | 5.9 |
| Hydrochinon-bis(2-propoxyoxycarbonylethylether) | 97 | 7.1 |
| 4-Phenytphenyl-isopropylcarbonat | 99 | 4.0 |
| Hydrochinon-bis(2-isopropoxyoxycarbonylethylether) | 88 | 7.1 |
| Benzoinisopriopylcarbonat | 92 | 8.5 |
| 4-Methoxyphenyl-phenylcarbonat | 86 | 5.8 |
| Butan-1,4-diylbis(4-methylphenylcarbonat) | 77 | 8.4 |
| 2-Phenoxyethyl-4-nitrophenylcarbonat | 89 | 7.7 |
| 2-Phenoxyethyl-4-methyloxycarbonylphenylcarbonat | 98 | 7.9 |
| Butan-1,4-diyldiphenylcarbonat | 84 | 7.0 |
| 4-Acetophenyl-2-phenoxyethylcarbonat | 77 | 8.8 |
| 4-Acetophenyl-phenylcarbonat | 71 | 5.7 |
| Bis(2-phenoxyethyl)carbonat | 91 | 5.6 |
| 2-Phenylethyl-phenylcarbonat | 88 | 3.4 |
| Hexan-1,6-diyldiphenylcarbonat | 82 | 6.9 |
| Hexan-1,6-diylbis(4-ethylphenylcarbonat) | 76 | 8.0 |
| Isobutyl-4-phenylphenylcarbonat | 92 | 4.7 |

### 9.) Harnstoffe und acylierte Harnstoffe

Bevorzugte Isocyanatedukte sind:
1,3-Bis(1-isocyanato-1-methylethyl)benzene (TMXDI), 1,5-Bis(isocyanat)-naphthalin, Butylisocyanat, 4-Chlorphenylisocyanat, , Cyclohexylisocyanat, Hexamethylendiisocyanat (HDI), Isophorondiisocyanat (IPDI), 4-Isopropylphenylisocyanat, 4,4'-Methylenbis(cyclohexyl)isocyanat, (H12MDI), 4,4'-Methylen-bis(phenylisocyanat) (MDI), 1-Naphthylisocyanat, Octadecylisocyanat, 1,4-Phenylendiisocyanat (PPDI), Phenylisocyanat Toluol-4-sulfonylisocyanat, Toluotdiisocyanat (TDI)

Bevorzugte Aminedukte sind:
Anilin, 2-Aminobutan, 4-Aminobenzoesäureethylester, 4-Aminodiphenylether, 3-Aminopropanol, Benzidin (4,4'-Diamino-biphenyl), Benzylamin, Butylamin, Cyclohexylamin, 1,2-Diaminobenzol, 1,3-Diaminobenzol, 1,4-Diaminobenzol, 4,4'-Diaminodiphenylmethan, 1,2-Diaminoethan, 1,3-Diaminopentan, 1,2-Diaminopropan, 1,3-Diaminopropan, Dibenzylamin, Di-2-ethylhexylamin, Diethylamin, Diisobutylamin, Dimethylamin, Dimethylethanolamin, Dibutylamin, Diphenylamin, Dodecylamin, Ethanolamin, Ethylamin, 2-Ethylhexylamin, Furfurylamin, Hexadecylamin, 1,6-Hexamethylendiamin, Hexylamin, Isophorondiamin, Isopropylamin, 4-Methoxyanilin, 4-Methoxybenzylamin, Methylamin, 4-Memylanilin, N-Methylanilin, N-Methylbenzylamin, Morpholin, 1-Naphthylamin, 2-Naphthylamin, 2-Nitroanilin, 3-Nitroanilin, 4-Nitroanilin, Octadecylamin, Octytamin, 1-Phenylethylamin, 2-Phenylethylamin, Phenylhydrazin, Piperazin, Piperidin, Propylamin, Tetrahydrofurfurylamin, Pyrrolidin

Bevorzugte Carbonsäureedukte sind:
Acetylsalicylsäure, Acrylsäure, Ameisensäure, Benzoesäure, Benzol-1,2,4,5-tetracarbonsäure, Benzol-1,2,4-tricarbonsäure, Bernsteinsäure, 2,2-Bis (hydroxymethyl)-propionsäure, Butansäure, 4-tert.-Butylbenzoesäure, Cyanessigsäure, 1,4-Cyclohexandicarbonsäure, 1,10-Decandicarbonsäure, Decansäure, 1,10-Dodecandicarbonsäure, Dodecansäure, Essigsäure, 2-Ethylbutansäure, 2-Ethylhexansäure, Fumarsäure, 2-Hydroxyessigsäure, Hexahydrophthalsäure, 1,6-Hexandicarbonsäure, Hexadecansäure, Hexansäure, 2-Hydroxybenzoesäure, 4-Hydroxybenzoesäure, 2-Hydroxybernsteinsäure, 1-Hydroxy-1-phenylessigsäure, Isobuttersäure, Isophthalsäure, Maleinsäure, Malonsäure, 4-Methoxybenzoesäure, Methoxyessigsäure, 4-Methoxyphenylessigsäure, 2-Methylbenzoesäure, 3-Methylbenzoesäure, 4-Methylbenzoesäure, 2-Methylbutansäure, 3-Methylbutansäure, Methylenbernsteinsäure, 4-Nitrobenzoesäure, 1,9-NonandicarEonsäure, Octadecansäure,1,8-Octandicarbonsäure, 4-Oxopentansäure, Octansäure, Oxalsäure, 1,5-Pentandicarbonsäure, 2-Phenoxyess gsäure, 2-Phenylessigsäure, Pivalinsäure, Propionsäure, Pentansäure, Terephthalsäure, Tetradecansäure, Tetrahydrophthalsäure

Bevorzugte Harnstoffedukte sind:
Harnstoff, N-Methylharnstoff, N,N'-Dimethylharnstoff, Ethylenharnstoff, Propylenhamstoff

| Tab. 9: Schmelzpunkte und Viskositäten ausgewählter Harnstoffe und acylierter Harnstoffe | | |
|---|---|---|
| Substanz | Schmelzpunkt [Grd C] | Viskosität bei 110 Grd C [mPas] |
| N,N'-Dimethyl-N,N'-diacetylhamstoff | 101 | 5.5 |
| N,N'-Di-(N,N-diethylcarbamoyl)-hexamethylendiamin | 99 | 7.9 |
| N-Benzoyl-N,N'-dimethylhamstoff | 93 | 4.5 |

### 10.) Acylierte Aromaten

Bevorzugte aromatische Edukte sind Alkylarylether:
Biphenyl, 1,2-Dimethoxyphenol, Ethoxyphenol, Methoxyphenol

Bevorzugte Carbonsäureedukte sind: -
Benzoesäure, Benzol-1,2,4,5-tetracarbonsäure, Benzol-1,2,4-tricarbonsäure, Bernsteinsäure, Butansäure, 4-tert.-Butylbenzoesäure, 1,4-Cyclohexandicarbonsäure, 1,10-Decandicarbonsäure, Decansäure, 1,10-Dodecandicarbonsäure, Dodecansäure, Essigsäure, 2-Ethylbutansäure, 2-Ethylhexansäure, 1,6-Hexandicarbonsäure, Hexadecansäure, Hexansäure, Isobuttersäure, Isophthalsäure, 3-Methylbutansäure, Methylenbernsteinsäure, 4-Methoxybenzoesäure, Methoxyessigsäure, 4-Methoxyphenylessigsäure, 2-Methylbenzoesäure, 3-Methylbenzoesäure, 4-Methylbenzoesäure, Maleinsäure, Malonsäure, 4-Nitrobenzoesäure, 1,9-Nonandicarbonsäure, Octadecansäure,1,8-Octandicarbonsäure, 4-Oxopentansäure, Octansäure, Oxalsäure, 1,5-Pentandicarbonsäure, 2-Phenoxyessigsäure, 2-Phenylessigsäure, Pivalinsäure, Propionsäure, Pentansäure, Terephthalsäure, Tetradecansäure

### Tab. 10 Schmelzpunkte und Viskositäten ausgewählter Lösemittel

| Tab. 10: Schmelzpunkte und Viskositäten ausgewählter acylierter Aromaten | | |
|---|---|---|
| Substanz | Schmelzpunkt [Grd C] | Viskosität bei 110 Grd C [mPas] |
| 4-Phenylbeniophenon | 101 | 8.0 |
| 4-Methoxy-4i-methylbenzophenon | 89 | 5.1 |

### b) Lösemittelgemische

Zusätzlich können auch die nachfolgenden Lösemittelgemische in bevorzugter Weise verwendet werden. Gemische dieser Lösemittel untereinander oder Gemische dieser Lösemittel müFettalkoholen oder anderen verwandten Verbindungen, z.B. Fettsäu miden, können durch Ausnutzung eines synergistischen Viskositätseffektes sein. Dieser Effekt sei an den Beispielen der Tabelle 11 verdeutlicht, in denen die nachfolgenden Produkte verwendet wurden:
- Nacol 18:: Handelsnamen der Fa. CONDEA für Stearyl-Alkohol.
- Nacol 22:: Handelsnamen der Fa. CONDEA für Docosyl-Alkohol
- MHA :: N-Methyl-Hexadecansäureamid
- HBI:: Hydrochinon-Bis(2-isobutyloxycarbonylethylether)

**Tab: 11: Lösemittelgemische**

| Gemisch | Gewichtsteile [Gew.tl] | Schmelzpunkt [Grd C] | Viskosität/Temperatur [mPas]/ [Grd C] | |
|---|---|---|---|---|
| Nacol 18 | | 53 | 10.5/65; 8.6/70; 7.5/75; 6.6/80; 5,9/85; 5.2/90, 4.4/100 | |
| Nacol 22 | | 69 | 5.6/100 | |
| MHA | | 83 | 8.0/100 | |
| HBI | | 91 | 4.8/100 | |
| | | | | |
| Nacol 18/HBI | 0.85:0.15 | 53 | 4.7/90 | |
| Nacol 18/HBI | 0.75:0.25 | 53 | 16.5/75; 5.5/80; 4.9/85; 4.5/90 | |
| Nacol 18/HBI | 0.60:0.40 | 53 | 4.4/90 | |
| | | | | |
| Nacol 22/HBI | 0.90:0.10 | 69 | linear: 5.52/100, | 5.1/100 |
| Nacol 22/HBI | 0.80:0.20 | 69 | linear: 5.44/100 | 4.8/100 |
| Nacol 22/HBI | 0.70:0.30 | 69 | linear: 5.36/100 | 4.6/100 |
| MHA/HBI | 0.90:0.10 | 83 | linear: 7.68/100 | 6.8/100 |
| MHA/NBI | 0.80:0.20 | 83 | linear: 7.36/100 | 6.2/100 |
| MHA/HBI | 0.70:0.30 | 83 | linear: 7.04/100 | 5.7/100 |

Der Vergleich der Viskositätswerte in der Tabelle zeigt, daß die Hinzufügung von HBI zu Nacol 18 zu Viskositäten führt, die diejenigen der Einzelsubstanzen deutlich unterschreitet. So ist HBI bei 90 Grd C noch nicht geschmolzen, führt aber in Lösung mit Nacol 18 bei einer Temperatur von 90 Grd C zu Viskositäten der Gemische, die jeweils deutlich unter der Viskosität von Nacol 18 selbst liegen. Der Schmelzpunkt der Gemische entspricht exact demjenigen von Nacol 18. Ein Effekt, der auf Mischkristall-Bildung oder Kristallgitterstörungen im Nacol 18-Kristall zurückzuführen wäre, liegt demnach nicht vor. Es wäre auch nicht erklärlich, warum eine Mischkristallbildung, wenn sie gegeben wäre, nach dem Schmelzen des Mischkristalles zu einer Synergie seiner Komponenten hinsichtlich der Viskosität des resultierenden Schmelzgemisches führen könnte. Gleiches ist bei den anderen in der Tabelle angegebenen Gemischen festzustellen. Die unter der Annahme einer Mischung mit linearem Verhalten zu erwartenden Viskositäten sind in der Tabelle zum Vergleich gegeben.

### c) Bindemittel

werden die besonders bevorzugten Bindemittel für die erfindungsgemäße Heißschmelzdruckfarbe beschrieben.

Die wesentliche Anforderung, die an Bindemittel für den HeißschmelzfarbenEinsatz im Tiefdruck und insbesondere an Bindemittel zum Einsatz von Heißschmelzfarben im Illustrationstiefdruck zu erfüllen ist, bezieht sich auf die und deren Entwicklung als Funktion der Wechselwirkung mit den Lösemitteln. Eine weitere wesentliche Anforderungen ist, daß das Bindemittel oder auch die Kombination von Bindemitteln in Wechselwirkung mit den Lösemitteln und optional vorhandenen Additiven nicht zum Kleben der Farbschicht und dadurch Ablegen auf den Lenkrollen einer Druckmaschine führen darf. Da im Zeitintervall zwischen Druckübertragung und der Berührung der frisch gedruckten Farbschicht mit der ersten Lenkrolle durch Abkühlen der Farbschicht auf dem Bedruckstoff erhärten müssen, ist eine möglichst hohe Glasübergangstemperatur in Kombination mit einer dennoch niedrigen Schmelzviskosität des Bindemittels bei Anwendungstemperatur unerlässlich. Selbstverständlich haben die Bindemittel auch die Aufgabe, eine stabile, im Druckergebnis glänzende und hohe optische Dichten erzielende Pigment- und Farbmittel-Dispersion zu ermöglichen und auch für die notwendige Verankerung der Druckfarbenschicht auf dem Bedruckstoff zu sorgen

Nachfolgend werden speziell für Schmelzdruckfarben entwickelte Harze angegeben, die den erwähnten Kompromiß zwischen relativ hoher Glasübergangstemperatur und niedriger Viskosität bei gleichzeitig guter Verankerung der Farbe auf dem Bedruckstoff in besonderem Maße erfüllen. Daneben werden auch kommerziell erhältliche Bindemittel eingesetzt, deren Glasübergangstemperaturen und Viskositäten ebenfalls angegeben werden.

Zum Vergleich der Viskositäten wird jeweils ein Standard-Firnis aus dem in Frage stehenden Bindemittel und dem Lösemittel Hydrochinon-Bis(2-isobutyloxycarbonylethylether) (HBI) im Verhältnis 30: 70 Gewichtsteilen gefertigt und dessen Viskosität bei einer Standardtemperatur von 110 Grd C gemessen.

**Tab. 12 Bindemittel**

| Bindemittel | T_{G} [° C] | Viskosität des Standard-Firnis [mPa s] |
|---|---|---|
| Beispiel 1 | 63.8 | 10.4 |
| Beispiel 2 | 41.7 | 10.0 |
| Beispiel 3 | 50.3 | 9.4 |
| Beispiel 4 | 59.8 | 10.4 |
| Beispiel 5 | 45.5 | 10.1 |
| Foral F 85 | 34.9 | 8.0 |
| Kunstharz TC | 34.0 | 7.8 |
| Laropel K 80 | 45.0 | 8.4 |
| Norsolene S 85 | 33.4 | 8.5 |
| Norsolene M 1080 | 43.4 | 8.5 |

### d) Farbmittel

In bevorzugter Weise können für die erfindungsgemäßen Heißschmelzdruckfarben Farbmittel verwendet werden. Diese können Pigmente oder Farbstoffe sein.

Die Farbigkeit der erfindungsgemäßen Schmelzdruckfarben kann nicht nur durch Verwendung von Pigmenten und/oder Farbstoffen erreicht werden, sondem auch durch den teilweisen oder gänzlichen Einsatz von geeigneten farbigen Polymer-Körpern, wie sie z.B. in der US-Patenschrift 5,973,062 zum Einsatz in konventionelle Lösemittel-Illustrationstiefdruckfarben beschrieben sind.

In jedem Falle der Färbung von Schmelzdruckfarbe durch die oben genannten Farbmittel sind wesentliche Kriterien der Eignung von Farbmitteln darin zu sehen, daß die thermische Stabilität der Farbmittel bei mittleren Verweilzeiten der Druckfarben in den Farbkästen und Farbwannen herkömmlicher Druckmaschinen sichergestellt ist und daß keine Wechselwirkungen zwischen Farbmitteln und weiteren Rezepturkomponenten eintreten, die die Viskosität der Schmelzdruckfarbe während der mittleren Verweilzeit in den heißen, farbführenden Teilen einer Druckmaschine drucktechnisch spürbar erhöhen.

Die Wärmestabilität von Pigmenten und Farbstoffen ist ähnlich wie viele weitere ihrer anwendungstechnischen Eigenschaften nicht allein durch deren chemische Natur bestimmt, die z.B. durch die Nennung der den einzelnen Farbmitteln eventuell zukommenden Colour-Index-Bezeichnung verdeutlicht wird, sondern auch wesentlich durch die Wechselwirkung der Farbmittel mit ihrer Matrix. Zur Matrix der Farbmittel gehört im Falle von Pigmenten auch deren unmittelbare Umgebung, nämlich die Beschichtung (Coating), die vom Pigmenthersteller zur Pflege der anwendungstechnischen Eigenschaften (z.B. Fließverhalten, Dispergierbarkeit u.a.) und auch zur Förderung der einzelnen Herstellungsschritte des Pigmentes selbst (z.B. Verhinderung der Reagglomeration bei der Pigmentfällung auf das Pigment) aufgebracht werden. Im Kontext der Stabilität der Pigment-Dispergierungen, speziell der Wärmestabilität der Pigmentdispergierungen, ist auch die Wechselwirkung des Pigment-Coatings mit den gewählten Bindemitteln von hoher Bedeutung.

Bei der Entwicklung von gefärbten Schmelzdruckfarben ist demnach die Wahl von Farbmitteln derart zu treffen, daß geeignete, insbesondere hinsichtlich der Wärmestabilität geeignete, Farbmittel nach ihrer chemischen Struktur ausgewählt werden und in diesen Klassen im Falle von Pigmenten dann nach speziell geeigneten Hande smodifikationen gesucht wird.

Die Auswahl von Farbmitteln, die für die Herstellung von Heißschmelzdruckfarben geeignet sind, muß sich an deren Temperaturstabilität orientieren und den im jeweils vorgesehenen Produkt-Anwendungsfeld geforderten Echtheitsanforderungen, die allgemein für jedwede Art von Druckfarben gelten. In jedem Falle ist auch ein Maximum an spezifischer Färbekraft des Färbemittels aufzusuchen. Darüber hinaus sind im Illustrationstiefdruck die an die farbmetrischen Eigenschaften von so genannten Akzidenz-Skalenfarben gerichteten Erfordernisse durch Auswahl solcher Farbmittel zu erfüllen, die die Farbton- und Chroma-Spezifikationen der Norm-Skalen erfüllen.

Bei herkömmlichen, lösemittelbasierten Druckfarben wird eine möglichst hohe "Färbekraft" der eingesetzten Farbmittel durch Auswahl dieser Farbmittel aus der Klasse der Pigmente angestrebt. Farbstoffe eignen sich hierfür kaum, da sie infolge weit geringerer Lichtstreuung weit weniger zu einer Erhöhung der effektiven optischen Weglänge in der ohnehin sehr dünnen Druckfarbenschicht beitragen und auch in dem ihnen in der Druckfarbe zukommenden molekulardispersen, d.h. gelösten Zustand in den Bedruckstoff , sofern es sich um Papier oder sonstige "offene" Bedruckstoffe handelt, absacken und somit in der Druckschicht nicht mehr die konzentrationsproportionale oder durch Streuung in der Schicht überproportionale optische Wirkung entfalten. In Extremfällen schlägt der Farbstoff auf die Gegenseite des Papieres sogar durch und stört dadurch das korrekte Erscheinungsbild des "Widerdruckes". Die erwähnten polymergebundenen Farbstoffe der US-Patentschrift 5,973,062 nehmen bezüglich des Durchschlagens eine Stellung zwischen Farbstoffen und Pigmenten ein, hinsichtlich der aus der Lichtstreueung bezogenen Überhöhung der Färbekraft sind sie den Farbstoffen vergleichbar.

Bei Heißschmelzfarben ist ein diesbezüglich völlig anderes Verhalten gegeben, das neben dem Einsatz von Pigmenten auch die Verwendung von Farbstoffen ermöglicht, sofern sich dadurch technische Vorteile bei der Dispergierung oder "Echtheitsvorteile" ergeben sollten. Ein Durchschlagen der Schmelzdruckfarbe ist auch bei sehr offenen Papieren, z.B. Zeitungspapieren im Tiefdruck nicht möglich, da die Farbe unmittelbar nach der Druck-Übertragung erstarrt und durch dieses Verhalten ein Eindringen in den offenen Bedruckstoff weitgehend, ein Durchschlagen jedoch vollkommen verhindert. Ferner ist die mit Farbstoffen erreichbare "Ausbeute" an optischer Dichte dadurch erhöht, daß in einer verfestigten eine Erhöhung der effektiven optischen Weglänge durch die Streuwirkung der durch partielle Rekristallisation des Lösemittels entstehenden Mikrokristalle gegeben ist.

### Pigmente

Überrascher d hat sich in einer breit angelegten Eignungs-Untersuchung von ca. 60 handelsüblichen Pigmenten mit verschiedensten Colour-Indices gezeigt, daß die im herkömmlichen Illustrationstiefdruck weitverbreiteten Pigmenttypen mit den Colour-Index- Bezeichnungen Pigment-Red PR 57:1, Pigment-Yellow PY 12 , Pigment Blue PB 15:3 und PB 27:77510 und Ruß-Pigmente in jeweils einigen Handelszubereitungen hinsichtlich der Pigmentbelegung (Coating) bevorzugt geeignet sind als Farbmittel für die erfindungsgemäßen Druckfarben. Diese Handelswaren sind:

| | |
|---|---|
| Fastogen Blue 5412G: Handelsmarke der Fa. DIC Deutschland GmbH: | PB 15:3 |
| Heliogen Blau D7111 : Handelsmarke der BASF AG | PB 15:3 |
| Heliogen Blau D7084 DD : Handelsmarke der BASF AG | PB 15:3 |
| Irgalith Rubin PRG423: Handelsmarke der Fa. Ciba-Geigy GmbH | PR 57:1 |
| Isol Bona Rubin 4BO: Handelsmarke der Fa. Sun Chemicals Pigmente GmbH | PR 57:1 |
| PV Rubin L6B : Handelsmarke der Fa. Clariant | PR 57:1 |
| Lutetia Gelb ST212: Handelsmarke der Fa. Francolor | PY 12 |
| Manox Easisperse HSB2: Handelsmarke der Degussa AG | PB 27 |
| Miloriblau 690BB: Handelsmarke der Fa. Daicolor Italy | PB 27 |
| Raven 1255: Handelsmarke der Fa. Columbian Chemicals Europe GmbH | Russ |

Diese hier gefundene Eignung für Heißschmelzfarben ist in Verbindung mit den erfindungsgemäßen Bindemitteln und auch in Verbindung mit den beschriebenen Lösemitteln zu sehen.

Insbesondere überraschend ist die Hitzestabilität der PY 12-Pigmente - und der PB 27:77510-Handelswaren, da speziell diese Pigmenttypen von den Herstellem und in der Fachliteratur als wenig hitzestabil eingestuft sind ( sh. z.B. W. Herbst, K. Unger, Industrial Organic Pigments, VCH-Verlagsgesellschaft, 1993, und P.A. Lewis, Editor, Pigment Handbook Vol.I , Wiley Interscience 1988 und Schriftenreihe Pigmente Nr. 77 der Degussa AG, Ausgabe 1990)

### Farbstoffe

Folgende Farbstoffe wurden aus einer Vielzahl von Prüfungen als geeignete Farbmittel in Kombination mit den hier angegebenen Lösemitteln und Bindemitteln gefunden:

| Handelsname | CI oder CA-Nummer |
|---|---|
| Solvaperm-Gelb 2G der Fa. Clariant | DY 3 |
| Transfer Yellow Crude der Fa. Saxena Chemicals | DY 54 |
| Neopengelb 075 der BASF | SY 162 |
| Neopen Magenta 525 der BASF | --------- |
| Brillant Red Crude DSR 60, Saxena Chemicals | DR 60 |
| Dianix Rot FB-E 220 der DyStar GmbH | DR 60 |
| Navilene Red FB CDP, Indian Dyestuff Industries LTD. | DR 60 |
| Resirenrot CA 52001 der Fa. Bayer | DR 60 |
| Seriplasrot 2BL-JPM der Yorkshire Farben GmbH | DR 60 |
| Sublaprint Red 70011 (M), Holliday Dyes & Chemicals LTD. | DR 60 |
| Neopen Cyan 742 der BASF | --------- |
| Fett-Blau B der Fa. Clariant | SB 35 |
| Savinyl-Blau GLS der Fa. Sandoz | SB 44 |
| Savinyl-Schwarz RLSN der Fa. Sandoz | SBk 45 |
| Neoza pon X 55 der Fa. BASF | SBk 29 |

### e) Additive

Für die erfindungsgemäßen Heißschmelzdruckfarben können weiterhin bevorzugt auch Additive verwendet werden.

In Schmelzdruckfarben können verschiedene Additive zur Pflege verschiedener, im einzelnen Anwendungsfalle notwendiger Produkteigenschaften verwendet werden. Diesbezüglich besteht kein erfindungsgemäßer Unterschied zu herkömmlichen, lösemittelbasierten Druckfarben. Ein Additiv ist allerdings hervorzuheben, das speziell in dem erfindungsgemäßen Schmelzdruckverfahren mit besonderem Vorteil gegen das Blocken im Lagerstapel bei erhöhter Temperatur und für die Scheuerfestigkeit eingesetzt werden kann.

Unter Blocken im Stapel, das insbesondere bei erhöhten Lagertemperaturen eintreten kann, versteht man eine Kaltverschweissung der sich unmittelbar berührenden Druckfarbenschichten, die durch Material-Interdiffusion stattfindet. Naturgemäß können die Bindemittel für herkömmliche Druckfarben, die bei Raumtemperatur flüssig sind, mit hoher Glasübergangstemperatur gewählt werden, um diese Kaltverschweißungen zu vermeiden. Im Falle von Schmelzdruckfarben ist eine solche Wahl nur im Kompromiß mit der Schmelzviskosität möglich, so daß die Glasübergangstemperaturen der Bindemittel durchaus im Bereich der Erlebenseines Druckproduktes liegen. In dieser Situation hat sich der Einsatz von Polyamid-Kügelchen in die Rezeptur als besonders vorteilhaft erwiesen. Diese werden mit einer nahezu monodispersen Partikelgröße von 5-30 Mikrometer Durchmesser durch Dispersions-Polymerisation hergestellt und als Handelsware unter dem Namen Orgasole von der Firma EIf-Atochem angeboten. In besonders vorteilhafter Wirkung kommt Orgasol mit einem Teilchendurchmesser von 10 Mikrometern zur Anwendung (Orgasol 2001 ExDnat der Fa. Elf Atochem). Die Polyamid-12-Polymere schmelzen weit oberhalb der Anwendungstemperatur von Schmelzdruckfarben bei 175 - 180 Grd C und bleiben somit als integre Kügelchen in der Druckschicht erhalten. Als solche wirken sie als Abstandshalter, die die der Schichten und ein Kaltverschweißen verhindern.

In ähnlicher reise verbessern sie den Scheuertest an gedruckten Proben. Darunter ist der Farbabrieb zu verstehen, der unter dem Einfluß von Scheuerbewegung mit kleinen Bewegungsamplituden und Wärmeenbmcklung durch Reibungsdissipation zwischen unbedruckten Papierpartien einer Stapelschicht und bedruckten Partien einer kontaktierenden Stapelschicht entsteht. Auch hier ist die mikroskopische Trennung der Kontaktschichten durch Einbau mikroskopischer Partikelchen, die sich durch die Eigenschaft eines hohen Schmelzpunktes und damit Nicht-Schmelzens auszeichnen, erfolgbringend bei anwendungstechnischem Bedarf.

Die Eigenschaft der Monodispersität der Kügelchen ist gegenüber anderen Additiven mit ähnlicher Wirkung, z.B. hochschmelzenden PTFE-Wachsen, amorphen Kieselsäuren, Kaolinen, besonders vorteilhaft, da eine viskositätserhöhende Wirkung bei Konzentrationen von 1 bis 3 Gew.-% nicht eintritt. Ferner ist die geringe Dichte der Orgasole (d = 1.03 kgm⁻³) gegenüber PTFE-Wachsen vorteilhaft hinsichtlich der Stabilität der Suspension der Teilchen in der dünnflüssigen Schmelzdruckfarbe.

Der Scheuer test wird in bekannter Weise mit sog. Scheuerschlitten durchgeführt, in denen blanker Bedruckstoff, z.B. Papier, gegen eine Druckschicht mit standardisierten Hubbewegungen unter Standardlast gescheuert wird. Der Farbabrieb wird mit relativen Notenskala von 1 (sehr gut) -6 (schlecht) belegt.

Der Blocktest wird auf einer so genannten Kofler Bank derart durchgeführt, daß auf die mit einem örtlichen Temperaturgradienten von 40 bis 250 Grd C aufgeheizte Heizplatte der Kofler Bank zunächst blankes, saugendes Papier aufgelegt wird. Kontakierend zu diesem Papier werden die im Vergleichstest stehenden die auf einen nicht saugenden Druckträger, z.B. Cellophan gedruckt sind aufgelegt. Dann wird eine dünne, hocheffiziente Isolierschicht, z.B. Thermatex der Fa. Angst + Pfister, Zürich, mit einer Materialstärke von 1.5 auf dieses Sandwich gelegt und der Gesamtschichtaufbau dann mit einer Glasplatte und einem Standardgewicht gepresst. Dieser Gesamtstapel verläuft in Längsrichtung entlang dem Temperaturgradienten der Kofler Bank. Auf dem untersten, saugenden kontaktpapier kann dann die Stelle des Temperaturgradienten abgelesen werden, bei dem im Stapel eine Farbübertragung vom Druck auf das Kontaktpapier eintritt. Mit Orgasol 2001 ExDnat werden Verbesserungen von 10 bis 15 Grd C erzielt.

### f) Herstellurig der Heißschmelzdruckfarbe

Die Herstellung der erfindungsgemäßen Heißschmelzdruckfarbe erfolgt durch Erhitzen eines Gemisches der Bestandteile Lösemittel, Bindemittel und optional Additiven sowie Farbmitteln. Besteht eines der Farbmittel oder das Farbmittel im Wesentlichen aus Pigment oder aus Pigmentmischungen, so wird hier ein nachfolgend beschriebenes Vorprodukt, bestehend aus einer Pigmentdispergierung, eingesetzt. Das Gemisch wird auf eine Temperatur oberhalb der Schmelztemperatur des Lösemittels erhitzt und anschließend die Komponenten durch Rühren oder Kneten im Lösemittel gelöst. Danach läßt man abkühlen. Die fertige bei Raumtemperatur feste Druckfarbe kann zu Platten, Pulver oder Granulat weiterverarbeitet werden.

Bei der Herstellung von Pigmentdispergierungen für herkömmliche pigmentierte Druckfarben werden nach dem Stand der Technik so genannte Perlmühlen oder in Fällen besonders leicht zu dispergierender Pigmente bzw. auch im Falle der Verwendung von Farbstoffen als Farbmittel auch so genannte Dissolver eingesetzt. Bei der Herstellung herkömmlicher Druckfarben werden Pigmente mit Bindemitteln und Lösemitteln und optional auch Dispergieradditive in jeweils gewünschter Menge in einer bei Raumtemperatur flüssig-fluiden Mischung mit Viskositäten der Größenordnungen 0.1 bis 100 Pa s in solchen Dispergieraggregaten vorgelegt und dann durch hohe Scherungen im lokal hoch-turbulenten Strömungsfeld der aus den genannten Komponenten bestehenden Flüssigkeit dispergiert. Im Falle der Verwendung von Perlmühlen leistet auch die direkte Impulsübertragung von den in der Perlmühle umgewälzten Kugelperlen auf das zu zerkleinemde Pigmentkom einen Beitrag zur Dispergierung. In der flüssigen Mischung werden das optionell vorhandene Dispergieradditiv und das Bindemittel im Verlauf der Dispergierung an die frisch geschaffenen Oberflächen des Pigmentes herantransportiert und dort durch geeignete Wechselwirkung dauerhaft adsorbiert. Die durch verschiedene physikalische Wechselwirkungen angetriebene Reagglomeration der frisch erzeugten, hochaktiven Pigment-Oberflächen zu einer Minimumsoberfläche wird dardurch verhindert. Die Temperatur des Dispergieransatzes wird durch Kühlung geregelt. Ohne diese Maßnahme ergäbe sich infolge der viskosen Dissipation der in den Ansatz eingebrachten mechanischen Arbeit im Verlauf der Dispergierung ein erheblicher Temperaturanstieg und somit eine Viskositätserniedrigung, die wiederum zu einer Minderung der zum Dispergiererfolg beitragenden Schergefälle im lokalen Strömungsfeld führen würde. Auch die Lösemittelverdampfung würde durch einen Temperaturanstieg gefördert und damit der Kavitationsverschleiß des Dispergieraggregates.

Aus dem Vorstehenden wird deutlich, daß die Dispergierung von Pigmenten in Druckfarben-Bindemitteln im flüssigen Systemzustand erfolgen muß und speziell in DissoNerti und auch Perlmühlen in einem Fließzustand durchgeführt wird, der lokale Turbulenzen zuläßt und somit nach Maßgabe der lokalen Reynoldszahlen entsprechende Viskositäten aufweist Im Falle der Dispergierung der erfindungsgemäßen Schmelzdruckfarben müssen demnach diese Dispergier-Maschinen bis mindestens auf die Temperatur beheizt werden, die zur Erreichung der notwendigen Viskosität im Heißschmelz-Ansatz unter Einbeziehung des bei Raumtemperatur kristallinen Lösemittels notwendig sind. Bei Perlmühlen, in denen der Wärin der Perlschüttung sehr erschwert ist, ist dies kein bevorzugtes Verfahren. Im Falle der Verwendung von Dissolvem ist die Beheizung technisch einfach. Allerdings sind die Einsatzmöglichkeiten von Dissolvern, wie oben erwähnt, auf besonders leicht dispergierbare Pigmente oder vorzugsweise Farbstoffe beschränkt.

In einer bevorzugten Ausführungsform erfolgt die Herstellung der Druckfarbe über ein Vorprodukt, das im wesentlichen aus Bindemittel, Farbmittel und gegebenenfalls Additiv und geringen Mengen Lösemittel besteht.

In bevorzugter Weise werden die Pigmentdispergierungen für die erfindungsgemäßen Heißschmelzdruckfarben durch Knetung bei extremen Schergefällen hergestellt Zu Beginn dieses Dispergierprozesses wird das Pigment oder die Pigmente zusammen mit dem oder den Bindemitteln und den optional vorhandenen Dispergieradditiven und optional mit einer kleinen Menge des bei Raumtemperatur kristallinen Lösemittels nach Maßgabe der zu fertigenden Knet-Rezeptur als schüttfähiges Gemenge oder auch schrittweise in Einzeldosierung in den beheizbaren Knettrog eines Kneters eingebracht. Der Knettrog ist vorgeheizt oder wird wahlweise nach dieser Beschickung auf die Erweichungstemperatur des eingesetzten Bindemittels oder Bindemittelgemisches oder Bindemittel-LösemittelGemisches geheizt. Die optionale Menge des bei Raumtemperatur fest-kristallinen Lösemittels der Mischung wird so gewählt, daß eine knetfähig zäh-fluide Masse bei den mit Rücksicht auf die Temperaturstabilität der Pigmente und der Bindemittel zu wählenden Temperaturen entsteht.

Während der Trog aufgeheizt wird, z.B. durch in die Trogwände eingelassene elektrische Heizkartuschen oder vorzugsweise durch ein Wärmeträgerfluid in einer doppelwandigen Trog-Konstruktion (Wärmeträger können hier z.B. herkömmliche mineralöl-raffinierte Wärmeträgeröle der Firmen BP bzw. Shell mit Markennamen Transcal® bzw. Thermia® oder auch synthetische Biphenyl-Wärmeträgerfluide z.B. Handelsmarken Diphyl® und Martotherm® der Firmen Bayer bzw. Degussa-Hüls sein), wird das im Trog befindliche rieselfähige Schüttgemenge durch die Knetarme des Kneters umgewälzt. Durch Wärmeeintrag in das Gemenge bis über die Glasübergangstemperatur der Thermoplasten und optional bis zur Schmelztemperatur des optional vorhandenen kristallinen Lösemittels ergibt sich eine Erweichung des Gemenges bis hin zu einer zähflüssigen knetbare Masse. Nun wird die Heizung des Troges abgeschaltet und die Knetmasse weiterhin durch die Bewegung der Knetarme mit hoher Scherung umgewälzt.

Es tritt nun eine selbstregulierende Temperatursteuerung in der Knetmasse ein, die in dieser Weise nur in einem Kneter realisierbar ist und die die Zähigkeit der Masse völlig selbsttätig im Optimum der Dispergier-Viskosität hält. Dieser Regelmechanismus funktioniert in der Weise, daß die viskose Dissipation der durch die Knetarme in die Knetmasse eingetragenen mechanischen Leistung gerade eben diejenige Wärmeleistung bereitstellt, die die Knetmasse auf optimaler Viskosität hält. Wird nämlich die Viskosität durch steigende mechanische Erwärmung der Knetmasse zu niedrig, geht die Konversion mechanischer Arbeit in Wärme zurück und die Viskosität der Masse nimmt durch Abkühlung der Masse wieder zu. Demzufolge die Konversion von mechanischer Arbeit in Wärme wieder an, so daß die Viskosität erneut abnimmt. Im Stationärzustand dieser selbsttätigen Regelschleife befindet sich die Viskosität der Knetmasse in einem Optimum, in dem die mechanische Leistung bestens in dispergierende Schubspannung im Knetfluid umgesetzt wird. Es ist unter diesen erfindungsgemäßen Umständen ohne weiteres möglich, den Kneter ohne Regel-Eingriffe von außen, d.h. auch ohne jeglichen Aufwand hinsichtlich jedweder Regeleinrichtungen beliebig lange, mindestens also bis zur Vervollständigung der Dispergierung laufen zu lassen. Die Vervollständigung der Dispergierung wird bei der Entwicklung einer Rezeptur z.B. nach ½ h und 1 h Knetzeit durch die Messung der Zunahme der optischen Dichte entsprechender Druckproben kontrolliert. Eine Druckprobe wird gefertigt mit einer aus dem Kneter entnommenen Teilmasse, die rezepturgemäß mit weiteren thermoplastischen Bindemitteln und kristallinem Lösemittel und optionalen Additiven durch Verrühren in der Hitze, also mindestens bei Temperaturen oberhalb der Schmelztemperatur des Lösemittels, verschnitten wird. Der Druck dieser so zubereiteten Kontrollprobe findet dann auf einer Labordruckmaschine bei Temperaturen statt, die eine druckmaschinen- und druckgeschwindigkeitskonforme Optimalviskosität der so gefertigten Druckfarbe ergeben.

Die nachfolgenden Beispiele sollen die Erfindung näher erläutern.

### Beispiele

### 1. Herstellung der Bindemittel gemäß Tabelle 12

### Präparationsvorschrift für Bindemittel 1

30g Araldit PT810, 47,2g Foral AXE und 23,2g 4-tert.-Butylbenzoesäure werden nach dem Zusatz 0.4g Natriumhydrid (60%ige Suspension in Paraffinöl) in der Schmelze bei 160 Grd C 8h umgesetzt.

### Präparationsvorschrift für Bindemittel 2

50g Araldit PY307 und 50,9g 4-tert.-Butylbenzoesäure werden nach dem Zusatz von 0.4g Natriumhydrid (60%ige Suspension in Paraffinöl) in der Schmelze bei 160 Grd C 8h umgesetzt

### Präparationvorschrift für Bindemittel 3

11,0g Toluylen-2,4-diisocyanat (enthält ca. 20-Gew.-% des 2,6-Isomeren), 1,2g p-Phenylendiisocyanat und 25g TCD-Alkohol M werden in der Schmelze bei 140 Grd C 8h umgesetzt.

### für Bindemittel 4

6,5g Tolylen-2,4-diisocyanat (enthält ca. 20-Gew.-% des 2,6-Isomeren), 6,0g p-Phenylendiisocyanat, 17,5g TCD-Alkohol M und 7.1g 4-tert.-Butylcyclohexanol werden in der Schmelze bei 150 Grd C 8h umgesetzt.

### Präparationsvorschrift für Bindemittel 5

100g Abitol E und 26,2g p-Phenylendiisocyanat werden in der Schmelze bei 140 Grd C 8h umgesetzt.

### 2. Herstellung der Heißschmelzdruckfarben

### Beispiel 1

In eine Schmelze aus 15 Gew.-% Bindemittel-1, 65 Gew-% N-Methylhexad nsäureamid und 5 Gew.-% Vestinol OA werden 15 Gew-% einer Dispergierung bestehend aus 20 Gew.-% Raven 1255 (PBk 7), 70 Gew.-% Foral F85E und 10 Gew.-% Gilsonite-Bindemittel ER125 eingerührt. Die Viskosität dieser Farbe beträgt 12,1 mPas bei 110 Grd C.

### Beispiel 2

In eine Schmelze aus 10 Gew.-% Laropal K80 und 70 Gew.-% N-Dodecylacetoacetamid werden 20 Gew.-% einer Dispergierung bestehend aus 20 Gew.-% Miloriblau 690BB (PB 27:77510) und 80 Gew.-% Laropal K80 eingerührt. Die Viskosität dieser Farbe beträgt 10.8 mPas bei 110 Grd C.

### Beispiel 3

In eine Schmelze aus 15 Gew.-% Bindemittel-2, 65 Gew.-% N-Benzyldodecansäureamid und 5 Gew.-% Radia 7131 werden 15 Gew.-% einer Dispergierung bestehend aus 20 Gew.-% Isol Bona Rubin 4BO (PR57:1), 3,6 Gew.-% Solsperse 17000, 4,6 Gew.-% Norsolene M1080, 4,6 Gew.-% Jonrez RP347 und 67.2 Gew.-% Kunstharz TC eingerührt. Die Viskosität dieser Farbe beträgt 12.2 bei 110 Grd C.

### Beispiel 4

In eine Schmelze aus 10 Gew.-% Kunstharz TC und 70 Gew.-% Pivalinsäure-2-(4-werden 20 Gew.-% einer Dispergierung bestehend aus 20 Gew.-% Mitoribtau 690BB (PB 27 :77510) und 80 Gew.-% KunstBindemittel TC eingerührt. Die Viskosität dieser Farbe beträgt 9.4 mPas bei 110 Grd C.

### Beispiel 5

In eine Schmelze aus 10 Gew.-% Norsolene M1080 und 70 Gew.-% N-Hexanolylbenzamid werden 20 Gew.-% einer Dispergierung bestehend aus 20 Gew.-% Heliogenblau D7084DD (PB 15:3) und 80 Gew.-% Norsolene M1080 eingerührt. Die Viskosität dieser Farbe beträgt 11.5 mPas bei 110 Grd C.

### Beispiel 6

In eine Schmelze aus 15 Gew.-% Bindemittel-3 und 70 Gew.-% N-werden 15 Gew.-% einer Dispergierung bestehend aus 20 Gew.-% PV Rubin L6B (PR51:1), 4 Gew.-% Solsperse 17000 und 76 Gew.-% Norsolene M1080 eingerührt. Die Viskosität dieser Farbe beträgt 9.7 mPas bei 110 Grd C.

### Beispiel 7

In eine Schmelze aus 15 Gew.-% Kunstharz TC und 70 Gew.-% Hydrochinonwerden 15 Gew.-% einer Dispergierung bestehend aus 20 Gew.-% Lutetia Gelb ST212 (PY12) und 80 Gew.-% Foral F85E eingerührt. Die Viskosität dieser Farbe beträgt 10.0 mPas bei 110 Grd C.

### Beispiel 8

In eine Schmelze aus 15 Gew.-% Kunstharz TC und 70 Gew.-% 4-Phenylphenylisopropylcarbonat werden 15 Gew.-% einer Dispergierung bestehend aus 20 Gew.-% Miloriblau 690BB (PB27:77510) und 80 Gew.-% Kunstharz TC eingerührt. Die Viskosität dieser Farbe beträgt 10.0 mPas bei 110 Grd C.

### Beispiel 9

In eine Schmelze aus 15 Gew.-% Norsolene S85 und 70 Gew.-% Hydrochinondidodecanoat werden 15 Gew.-% einer Dispergierung bestehend aus 20 Gew.-% Fastogen Blue 5412G (PB15:3) und 80 Gew.-% Norsolene S85 eingerührt. Die Viskosität dieser Farbe beträgt 12.4 mPas bei 110 Grd C.

### Beispiel 10

In eine Schmelze aus 15 Gew.-% Bindemittel-4, 5 Gew.-% SAIB und 65 Gew.-% N-Benzylcetylurethan werden 15 Gew.-% einer Dispergierung bestehend aus 20 Gew.-% Manox Easisperse HSB2 (PB27:77510) und 80 Gew.-% Norsolene M1080 eingerührt. Die Viskosität dieser Farbe beträgt 11.8 mPas bei 110 Grd C.

### Beispiel 11

In eine Schmelze aus 15 Gew.-% Norsolene M1080, 5 Gew.-% Radia 7131 und 65 Gew.-% werden 15 Gew.-% einer Dispergierung bestehend aus 20 Gew.-% Irgalith Rubin PRG424 (PR57:1), 4 Gew.-%Solsperse 17000 und 76 Gew.-% Norsolene M1080 eingerührt. Die Viskosität dieser Farbe beträgt 14.6 mPas bei 110 Grd C.

### Beispiel 12

In eine aus 15 Gew.-% Bindemittel-5, 5 Gew.-% Radia 7131 und 65 Gew.-% N-Hexadecylmethansulfonamid werden 15 Gew.-% einer Dispergierung bestehend aus 20 Gew.-% Miloriblau 690BB (PB27:77510) und 80 Gew.-% Kunstharz TC eingerührt. Die Viskosität dieser Farbe beträgt 12.5 mPas bei 110 Grd C.

### Beispiel13

In eine Schmelze aus 15 Gew.-% Kunstharz TC und 70 Gew.-% 4-werden 15 Gew.-% einer Dispergierung bestehend aus 20 Gew.-% Heliogenblau D7111 (PB15:3) und 80 Gew.-% Norsolene M1080 eingerührt. Die Viskosität dieser Farbe beträgt 9.9 mPas bei 110 Grd C.

### Beispiel 14

In eine aus 15 Gew.-% Norsolene S 85, 5 Gew.-% Radia 7131 und 65 Gew.-% N-Hexadecylphthalimid werden 15 Gew.-% einer Dispergierung bestehend aus 20 Gew.-% Irgalith Rubin PRG424 (PR57:1), 4 Gew.-% Solsperse 17000 und 76 Gew.-% Norsolene S 85 eingerührt. Die Viskosität dieser Farbe beträgt 13.7 mPas bei 110 Grd C. Scheuertestergebnis: 3
Blocktestergebnis: schwacher Farbübertrag bei 50 Grd C, deutlich bei 60 Grd C.

### Beispiel 15

Ausführung wie Beispiel 14, jedoch unter Zufügen von 2% Orgasol 2001 ExDnat Scheuertestergebnis: 1. Blocktestergebnis: schwacher Farbübertrag bei 60 Grd C, deutlich bei 66 Grd C.

Die bei der Präparation der Bindemittel 1 bis 5 und den Farbbeispielen 1 bis 15 eingesetzten Stoffe sind nach ihren Handelsnamen und Herstellerfirmen sowie nach ihrem chemischen Typus nachfolgend aufgelistet.
Die Dispergierungen sind ausnahmslos im beschriebenen Knetverfahren mit Knetdauem von je 2 Stunden hergestellt.

### Einsatzstoffe

Abitol E: Abietylalkohol, Handelsmarke der Fa. Hercules GmbH
Araldit PT810 Trigylcidylisocyanurat, Handelsmarke der Fa. Ciba Spezialitätenchemie GmbH
Araldit PY307 Glycidylierter Novolak, Handelsmarke der Fa. Ciba Geigy Spezialitätenchemie GmbH
Fastogen Blue 5412G: Handelsmarke der Fa. DIC Deutschland GmbH
ForatAXE: Kolophonium, Handelsmarke der Fa. Hercules GmbH
Foral F85E: Glycerinester von hydriertem Kolophonium, Handelsmarke der Fa. Hercules GmbH
Gilsonite-Harz ER125: Kohlenwasserstoffharz, Handelsmarke der Fa. American Gilsonite Company
Heliogen Blau D7111, D7084DD: Handelsmarke der BASF AG
Irgalith Rubin PRG423: Handelsmarke der Fa. Ciba-Geigy GmbH
Isol Bona Rubin 4BO: Handelsmarke der Fa. Sun Chemicals Pigmente GmbH
Jonrez RP347: Phenolmodifiziertes Kolophoniumharz, Handelsmarke der Fa. Westvaco
Kunstharz TC: Ketonharz, Handelsmarke der Fa. Degussa-Hüls AG
Laropal K80: Ketonharz, Handelsmarke der Fa. BASF AG
Lutetia Gelb ST212: Handelsmarke der Fa. Francolor
Manox Easisperse HSB2: Handelsmarke der Degussa AG
Miloriblau 690BB: Handelsmarke der Fa. Daicolor Italy
Norsolene M1080: Handelsmarke der Fa. Cray Valley Kunstharze GmbH
Norsolene S85: Handelsmarke der Fa. Cray Valley Kunstharze GmbH
PV Rubin L6B : Handelsmarke der Firma Clariant
Radia 7131: 2-Ethylhexylstearat, Handelsmarke der Fa. Fina Deutschland GmbH
Raven 1255: Handelsmarke der Fa. Columbian Chemicals Europe GmbH
SAIB: Acetyl/i-Butyryl-Mischester der Saccharose, Handelsmarke der Fa. Eastman
Solsperse 17000: Handelsmarke der Fa. Zeneca GmbH
TCD-Alkohol M: 8-Hydroxymethyl-tricyclo (5.2.1.0/2.6) decan Handelsmarke der Celanese Chemicals
Vestinol OA: Di-2-Ethylhexyladipat, Handelsmarke der Fa. Degussa-Hüls AG

## Patentansprüche

1. Heißschmelzdruckfarbe, insbesondere für Tiefdruckverfahren, enthaltend
a. 50 bis 80 Gew.-% Lösemittel oder Lösemittelgemische mit einem von 65 bis 109 Grd C und einer Viskosität von 2,9 bis 20 mPas bei 110 Grd C
b. 20 bis 50 Gew.-% Bindemittel mit einer Glasübergangstemperatur T_{G} von 30 bis 65 Grd C

2. Heißschmelzdruckfarbe nach Anspruch 1, **dadurch gekennzeichnet, daß** aus Bindemittel und Lösemittel ein Standard-Firnis herstellbar ist mit einer Viskosität von 6 bis 20 mPas bei 110 Grd C.

3. Heißschmelzdruckfarbe nach Anspruch 1 oder 2, **dadurch gekennzeichnet, daß** bis 3 Gew-% Additive und 0 bis 10 Gew.-% Farbmittel enthalten sind.

4. Heißschmelzdruckfarbe nach Anspruch 1 bis 3, **dadurch gekennzeichnet, daß** das Lösemittel ausgewählt ist aus der Gruppe Carbonsäureamide, Imide, Monourethane, Diurethane, Sulfonamide, Sulfonsäureester, Carbonsäu-Ether, Carbonate, Harnstoffe, acylierte Harnstoffe, acylierte aromatische Verbindungen oder Gemische derselben.

5. Heißschmelzdruckfarbe nach Anspruch 1, **dadurch gekennzeichnet, daß** das Bindemittel ausgewählt ist aus der Gruppe Ketonharz, Kotophoniumharz, Urethanharz, Kohlenwasserstoffharz oder Gemische derselben.

6. Heißschmelzdruckfarbe nach Anspruch 4, **dadurch gekennzeichnet, daß** die Carbonsäureamide hergestellt werden aus Carbonsäureedukten ausgewählt aus der Gruppe:
Acetylsalicylsäure, Acrylsäure, Ameisensäure, Benzoesäure, Benzol-1,2,4,5-tetracarbonsäure, Benzol-1,2,4-tricarbonsäure, Bernsteinsäure, 2,2-Bis-(hydroxymethyl)-propionsäure, Butansäure, 4-tert.-Butylbenzoesäure, Cyanessigsäure,1,4-Cyclohexandicarbonsäure, 1,10-Decandicarbonsäure, Decansäure, 1,10-Dodecandicarbonsäure, Dodecansäure, Essigsäure, 2-Ethylbutansäure, 2-Ethylhexansäure, Fumarsäure, 2-Hydroxyessigsäure, Hexahydrophthalsäure, 1,6-Hexandicarbonsäure, Hexadecansäure, Hexansäure, 2-Hydroxybenzoesäure, 4-Hydroxy-benzoesäure, 2-Hydroxybernsteinsäure, 1-Hydroxy-1-phenylessigsäure, Isobuttersäure, Isophthalsäure, Maleinsäure, Malonsäure, 4-Methoxybenzoesäure, Methoxyessigsäure, 4-Methoxyphenylessigsäure, 2-Methylbenzoesäure, 3-Methylbenzoesäure, 4-Methylbenzoesäure, 2-Methylbutansäure, 3-Methylbutansäure, Methylenbernsteinsäure, 4-Nitrobenzoesäure, 1,9-Nonandicarbonsäure, Octadecansäure,1,8-Octandicarbonsäure, 4-Oxopentansäure, Octansäure, Oxalsäure, 1,5-Pentandicarbonsäure, 2-Phenoxyessigsäure, 2-Phenylessigsäure, Pivalinsäure, Propionsäure, Pentansäure, Terephthalsäure, Tetradecansäure, Tetrahydrophthalsäure
und Aminen ausgewählt aus der Gruppe:
Anilin, 2-Aminobutan, 4-Aminobenzoesäureethylester, 4-Aminodiphenylether, 3-Aminopropanol, Benzylamin, Butylamin, Cyclohexylamin, 1,2-Diaminobenzol, 1,3-Diaminobenzol, 1,4-Diaminobenzol, 4,4'-Diaminobiphenyl, 4,4'-Diaminodiphenylmethan, 1,2-Diaminoethan, 1,3-Diaminopentan, 1,2-Diaminopropan, 1,3-Diaminopropan, Dibenzylamin, Di-2-ethylhexylamin, Diethylamin, Diisobutylamin, Dimethylamin, Dimethylethanolamin, Dibutylamin, Diphenylamin, Dodecylamin, Ethanolamin, Ethylamin, 2-Ethylhexylamin, Furfurylamin, Hexadecylamin, 1,6-Hexamethylendiamin, Hexylamin, Isophorondiamin, Isopropylamin, 4-Methoxyanilin, 4-Methoxybenzylamin, Methylamin, 4-Methylanilin, N-Methylanilin, N-Methylbenzylamin, Morpholin, 1-Naphthylamin, 2-Naphthylamin, 2-Nitroanilin, 3-Nitroanilin, 4-Nitroanilin, Octadecylamin, Octylamin, 1-Phenylethylamin, 2-Phenylethylamin, Phenylhydrazin, Piperazin, Piperidin, Propylamin, Pyrrolidin, Tetrahydrofurfurylamin

7. Heißschmelzdruckfarbe nach Anspruch 4, **dadurch gekennzeichnet, daß** die Imide hergestellt werden aus Anhydridedukten ausgewählt aus der Gruppe:
Benzol-1,2,4,5-tetracarbonsäure-1,2,4,5-dianhydrid , Benzol-1,2,4-tricarbonsäure-1,2-anhydrid, Hexahydrophthalsäureanhydrid, Methylenhexahydrophthalsäureanhydrdid, Naphthalin-1,8-dicarbonsäureanhydrid, Phthalsäureanhydrid, Tetrahydrophthalsäureanhydrid
und Aminedukten ausgewählt aus der Gruppe:
Aminobenzoesäureethytester, 4-Aminodiphenylether, 3-Aminopropanol, Benzidin (4,4'-Diamino-biphenyl), Benzylamin, Butylamin, Cyclohexylamin, 1,2-Diaminobenzol, 1,3-Diaminobenzol, 1,4-Diaminobenzol, 4,4'-Diaminodiphenylmethan, 1,2-Diaminoethan, 1,3-Diaminopentan, 1,2-Diaminopropan, 1,3-Diaminopropan, Dodecylamin, Ethanolamin, Ethylamin, 2-Ethylhexylamin, Furfurylamin, Hexadecylamin, 1,6-Hexamethylendiamin, Hexylamin, Isophorondiamin, Isopropylamin, 4-Methoxyanilin, 4-Methoxybenzylamin, Methylamin, 4-Methylanilin, 1-Naphthylamin, 2-Naphthylamin, 2-Nitroanilin, 3-Nitroanilin, 4-Nitroanilin, Octadecylamin, Octylamin, 1-Phenylethylamin, 2-Phenylethylamin, Propylamin, Tetrahydrofurfurylamin

8. Heißschmelzdruckfarbe nach Anspruch 4, **dadurch gekennzeichnet, daß** die Monourethane und Diurethane hergestellt werden aus Isocyanatedukten ausgewählt aus der Gruppe:
1,3-Bis(1-isocyanato-1-methylethyl)benzene (TMXDI), 1,5-Bis(isocyanat) naphthalin, Butylisocyanat, Cyclohexylisocyanat, Hexamethylendiisocyanat (HDI), Isophorondiisocyanat (IPDI), 4-lsopropylphenylisocyanat, 4,4'-Methylenbis(cyclohexyl)isocyanat (H12MDI), 4,4'-Methylenbis(phenylisocyanat) (MDI), 1-Naphthylisocyanat, Octadecylisocyanat, 1,4-Phenylendiisocyanat (PPDI), Phenylisocyanat, Toluol-4-sulfonylisocyanat, Toluoldiisocyanat (TDI),
Chlorformiatedukten ausgewählt aus der Gruppe:
Benzylchlorformiat, Butandiol-1,4-bis-chlorformiat, Butylchlorformiat, sek.-Butylelorformiat Hexadecylchlorformiat, Diethylenglykol-bis-chlorformiat, Ethylchlorformiat, 2-Ethylhexylchlorformiat, Isobutylchlorformiat, Isopropytchtorfönrnat, 1,6-Hexandiol-bis-chloroformiat, 2-Methoxyethylchlorformiat, Methylchlorformiat, Tetradecylchlorformiat, Phenoxyethylchlorformiat, Phenylchlorformiat, Propylchlorformiat, Octadecylchlorformiat,
und Alkoholedukten ausgewählt aus der Gruppe:
Benzoin, Benzylalkohol, 1,4-Bis-(hydroxymethyl)cyclohexan,1,4-Butandiol, 2-Butin-1,4-diol, 3-Butin-2-ol, Butanol, 2-Butanol, tert.-Butanol, Cyclohexanol, 1-Decanol, 2,2-Dimethyl-1-propanol, 1,1-Diphenylmethanol, Dipropylenglykol, 1-Docosanol, 1,12-Dodecandiol, 1-Dodecanol, 1-Eicosanol, Ethanol, Ethoxypropanol, Ethandiol, Ethylenglykolmonosalicylat, Ethylenglykolmonoethylether, 2-Ethyl-1-hexanol, 2-Ethyl-2-(hydroxymethyl)-1,3-propandiol, Furfurylalkohol, Glycerin, 2-Heptanol, 1-Hexadecanol, 1,6-Hexandiol, 1-Hexanol, Hydrochinon-bis(2-hydroxyethylether), Hydroxyaceton, 2-Hydroxybenzyllkohol, 2-Hydroxyessigsäure, 2-Hydroxyessigsäurebutylester, N-(2-Hydroxyethyl)phthalimid, Hydroxypivalylhydroxypivalat, 3-Hydroxypropionitril, Isoborneol, Isopropanol, Menthol (6-Isopropyl-2-methyl-cyclohexanol), Methanol, 4-Methoxybenzylalkohol, Methoxypropanol, 3-Methyl-1-butanol, 2-Methyl-3-butin-2-ol, 2-Methyl-1,3-propandiol, 2-Methyl-1-propanol, 1,2-Octadecandiol, 1-Octadecanol, 1-Octanol, 2-Octanol, Pentaerythritol, 2-Phenoxyethanol, 1-Phenoxy-2-propanol, 3-Phenyl-1-propanol, 1-Phenylethanol, 2-Phenylethanol, 2-Popin-1-ol, 1,2-Propandiol, 1,3-Propandiol, 1-Propanol, 1-Tetradecanol, Tetrahydrofurfurylalkohol,Tris(hydroxymethyl)ethan
Aminedukten ausgewählt aus der Gruppe:
Anilin, 2-Aminobutan, 4-Aminobenzoesäureethylester, 4-Aminodiphenylether, 3-Aminopropanol, Benzidin (4,4'-Diamino-biphenyl), Benzylamin, Butylamin, Cyclohexylamin, 1,2-Diaminobenzol, 1,3-Diaminobenzol, 1,4-Diaminobenzol, 4,4'-Diaminodiphenylmethan, 1,2-Diaminoethan, 1,3-Diaminopentan, 1,2-Diaminopropan, 1,3-Diaminopropan, Dibenzylamin, Di-2-ethylhexylamin, Diethylamin, Diisobutylamin,Dimethylamin, Dimethylethanolamin, Dibutylamin, Diphenylamin, Dodecylamin, Ethanolamin, Ethylamin, 2-Ethylhexylamin, Furfurylamin, Hexadecylamin, 1,6-Hexamethylendiamin, Hexylamin, Isophorondiamin, Isopmpylamin, 4-Methoxyanilin, 4-Methoxybenzylamin, Methylamin, 4-Methylanilin, N-Methylanilin, N-Methylbenzylamin, Morpholin, 1-Naphthylamin, 2-Naphthylamin, 2-Nitroanilin, 3-Nitroanilin, 4-Nitroanitin, Octadecylamin, Octylamih. 1-Phenylethylamin, 2-Phenylethylamin, Phenylhydrazin, Piperazin, Piperidin, Propylamin, Tetrahydrofurfurylamin, Pyrrolidin,
und N, N-Dialkytcarbaminsäureedukten ausgewählt aus der Gruppe:
N,N-Dimethylcarbaminsäurechlorid, N,N-Diphenylcarbaminsäurechlorid

9. Heißschmelzdruckfarbe nach Anspruch 4, **dadurch gekennzeichnet, daß** die Sulfonamide hergestellt werden aus Sulfonsäurechloridedukten ausgewählt aus der Gruppe:
4-Acetamidobenzolsulfonsäurechlorid, Benzolsulfonsäurechlorid, Ethansulfonsäurechlorid, Methansulfonsäurechlorid, p-Toluolsulfonsäurechlorid
und Aminedukten ausgewählt aus der Gruppe:
Anilin, 2-Aminobutan, 4-Aminobenzoesäureethylester, 4-Aminodiphenylether, 3-Aminopropanol, Benzidin (4,4'-Diamino-biphenyl), Benzylamin, Butylamin, Cyclohexylamin, 1,2-Diaminobenzol, 1,3-Diaminobenzol, 1,4-Diaminobenzol, 4,4'-Diaminodiphenylmethan, 1,2-Diaminoethan, 1,3-Diaminopentan, 1,2-Diaminopropan, 1,3-Diaminopropan, Dibenzylamin, Di-2-ethylhexylamin, Diethylamin, Diisobutylamin, Dimethylamin, Dimethylethanolamin, Dibutylamin, Diphenylamin, Dodecylamin, Ethanolamin, Ethylamin, 2-Ethylhexylamin, Furfurylamin, Hexadecylamin, 1,6-Hexamethylendiamin, Hexylamin, Isophorondiamin, Isopropylamin, 4-Methoxyanilin, 4-Methoxybenzylamin, Methylamin, 4-Methylanilin, N-Methylanilin, N-Methylbenzylamin, Morpholin, 1-Naphthylamin, 2-Naphthylamin, 2-Nitroanilin, 3-Nitroanilin, 4-Nitroanilin, Octadecylamin, Oc-1-Phenylethylamin, 2-Phenylethylamin, Phenylhydrazin, Piperazin, Piperidin, Propylamin, Tetrahydrofurfurylamin, Pyrrolidin

10. Heißschmelzdruckfarbe nach Anspruch 4, **dadurch gekennzeichnet, daß** die Sulfonsäureester hergestellt werden aus Sutfonsäurechloridedukten ausgewählt aus der Gruppe:
4-Acetamidobenzolsulfonsäurechlorid, Benzoesulfonsäurechlorid, Ethansulfonsäurechlorid, Methansulfonylchlorid, p-Toluolsulfonsäurechlorid, und Alkoholedukten ausgewählt aus der Gruppe:
Benzoin, Benzylalkohol, 1,4-Bis-(hydroxymethyl)cyclohexan,1,4-Butandiol, 2-Butin-1,4-diol, 3-Butin-2-ol, Butanol, 2-Butanol, tert.-Butanol, Cyclohexanol, 1-Decanol, 2,2-Dimethyl-1-propanol, 1,1-Diphenylmethanol, Dipropylenglykol, 1-Docosanol, 1,12-Dodecandiol, 1-Dodecanol, 1-Eicosanol, Ethanol, Ethoxypropanol, Ethandiol, Ethylenglykolmonosalicylat, Ethylenglykolmonoethylether, 2-Ethyl-1-hexanol, 2-Ethyl-2-(hydroxymethyl)-1,3-propandiol, Furfurylalkohol, Glycerin, 2-Heptanol, 1-Hexadecanol, 1,6-Hexandiol, 1-Hexanol, Hydrochinon-bis(2-hydroxyethylether), Hydroxyaceton, 2-Hydroxybenzyllkohol, 2-Hydroxyessigsäure, 2-Hydroxyessigsäurebutylester, N-(2-Hydroxyethyl)phthalimid, Hydroxypivalylhydroxypivalat, 3-Hydroxypropionitril, Isoborneol, Isopropanol, Menthol (6-Isopropyl-2-methyl-cyclohexanol), Methanol, 4-Methoxybenzylalkohol, Methoxypropanol, 3-Methyl-1-butanol, 2-Methyl-3-butin-2-ol, 2-Methyl-1,3-propandiol, 2-Methyl-1-propanol, 1,2-Octadecandiol, 1-Octadecanol, 1-Octanol, 2-Octanol, Pentaerythritol, 2-Phenoxyethanol, 1-Phenoxy-2-propanol, 3-Phenyl-1-propanol, 1-Phenylethanol, 2-Phenylethanol, 2-Popin-1-ol, 1,2-Propandiol, 1,3-Propandiol, 1-Propanol, 1-Tetradecanol, Tetrahydrofurfurylalkohol, Tris(hydroxymethyl)ethan
und Phenoledukten ausgewählt aus der Gruppe:
4-Ace minophenol, 4-Aminophenol, 4-Benzyloxyphenol, 2,2-Bis(4-hydroxyphenyl)-propan, 2-tert.-Butylhydrochinon, 2-tert-Butylphenol, 4-tert-Butylphenol, 2,2'-Dihydroxybiphenyl, 4,4'-Dihydroxybiphenyl, 1,4-Dihydroxyanthrachinon, 3,5-Dimethylphenol, 4-Ethylphenol, Hydrochinon, 4-Hydroxyacetophenon, 4-Hydroxybenzoesäure, 4-Hydroxybenzoesäurebenzylester, 4-Hydroxybenzoesäureethylester, 4-Hydroxybenzoesäuremethylester, 4-Hydroxybenzoesäureisopropylester, 4-Hydroxybenzoesäurepropylester, 2-Hydroxybiphenyl, 4-Hydroxybiphenyl, 4-Hydroxypropiophenon, 4-Methoxyphenol, 2-Methoxyphenol, 2-Methylphenol, 3-Methylphenol, 4-Methylphenol, 1-Naphthol, 2-Naphthol, Naphthalin-1,5-diol, 4-Nitrophenol, 4-Nitrophenylglykol, Octylphenol, Phenol, 4-(2-Phenyl-2-propyl)phenol, Resorcin, Resorcinmonobenzoat, Salicylsäuremethylester, Salicylsäurephenylester

11. Heißschmelzdruckfarbe nach Anspruch 4, **dadurch gekennzeichnet, daß** die Carbonsäureester hergestellt werden aus Carbonsäureedukten ausgewählt aus der Gruppe:
Acetylsalicylsäure, Acrylsäure, Ameisensäure, Benzoesäure, Benzol-1,2,4,5-tetracarbonsäure, Benzol-1,2,4-tricarbonsäure, Bernsteinsäure, 2,2-Bis-(hydroxymethyl)-propionsäure, Butansäure, 4-tert.-Butylbenzoesäure, Cyanessigsäure, 1,4-Cyclohexandicarbonsäure, 1,10-Decandicarbonsäure, Decansäure, 1,10-Dodecandicarbonsäure, Dodecansäure, Essigsäure, 2-Ethylbutansäure, 2-Ethylhexansäure, Fumarsäure, 2-Hydroxyessigsäure, Hexahydrophthalsäure, 1,6-Hexandicarbonsäure, Hexadecansäure, Hexansäure, 2-Hydroxybenzoesäure, 4-Hydroxybenzoesäure, 2-Hydroxybernsteinsäure, 1-Hydroxy-1-phenytessigsäure, Isobuttersäure, sophthalsäure, Maleinsäure, Malonsäure, 4-MethoxybenzoesäureMethoxyessigsäure, 4-Methoxyphenylessigsäure, 2-Methylbenzoesäure, 3-Methylbenzoesäure, 4-Methylbenzoesäure, 2-Methylbutansäure, 3-Methylbutansäure, Methylenbernsteinsäure, 4-Nitrobenzoesäure, 1,9-Nonandicarbonsäure, Octadecansäure, 1,8-Octandicarbonsäure, 4-Oxopentansäure, Octansäure, Oxalsäure, 1,5-Pentandicarbonsäure, 2-Phenoxyessigsäure, 2-Phenylessigsäure, Pivalinsäure, Propionsäure, Pentansäure, Terephthalsäure, Tetradecansäure, Tetrahydrophthalsäure
Alkoholedukten ausgewählt aus der Gruppe:
Benzoin, Benzylalkohol, 1,4-Bis-(hydroxymethyl)cyclohexan,1,4-Butandiol, 2-Butin-1,4-diol, 3-Butin-2-ol, Butanol, 2-Butanol, tert.-Butanol, Cyclohexanol, 1-Decanol, 2,2-Dimethyl-1-propanol, 1,1-Diphenylmethanol, Dipropylenglykol, 1-Docosanol, 1,12-Dodecandiol, 1-Dodecanol, 1-Eicosanol, Ethanol, Ethoxypropanol, Ethandiol, Ethylenglykolmonosalicylat, Ethylenglykolmonoethylether, 2-Ethyl-1-hexanol, 2-Ethyl-2-(hydroxymethyl)-1,3-propandiol, Furfurylalkohol, Glycerin, 2-Heptanol, 1-Hexadecanol, 1,6-Hexandiol, 1-Hexanol, Hydrochinon-bis(2-hydroxyethylether), Hydroxyaceton, 2-Hydroxybenzyllkohol, 2-Hydroxyessigsäure, 2-Hydroxyessigsäurebutylester, N-(2-Hydroxyethyl)phthalimid, Hydroxypivalylhydroxypivalat, 3-Hydroxypropionitril, Isoborneol, Isopropanol, Menthol (6-Isorpropyl-2-methyl-cyclohexanol), Methanol, 4-Methoxybenzylalkohol, Methoxypropanol, 3-Methyl-1-butanol, 2-Methyl-3-butin-2-ol, 2-Methyl-1,3-propandiol, 2-Methyl-1-propanol, 1,2-Octadecandiol, 1-Octadecanol, 1-Octanol, 2-Octanol, Pentaerythritol, 2-Phenoxyethanol, 1-Phenoxy-2-propanol, 3-Phenyl-1-propanol, 1-Phenylethanol, 2-Phenylethanol, 2-Popin-1-ol, 1,2-Propandiol, 1,3-Propandiol, 1-Propanol, 1-Tetradecanol, Tetrahydrofurfurylalkohol, Tris(hydroxymethyl)ethan,
und Phenoledukten ausgewählt aus der Gruppe:
4-Acetaminophenol, 4-Aminophenol, 4-Benzyloxyphenol, 2,2-Bis(4-hydroxyphenyl)-propan, 2-tert.-Butylhydrochinon, 2-tert-Butylphenol, 4-tert-Butylphenol, 2,2'-Dihydroxybiphenyl, 4,4'-Dihydroxybiphenyl, 1,4-Dihydroxyanthrachinon, 3,5-Dimethylphenol, 4-Ethylphenol, Hydrochinon, 4-Hydroxyacetophenon, 4-Hydroxybenzoesäure, 4-Hydroxybenzoesäurebenzylester, 4-Hydroxybenzoesäureethylester, 4-Hydroxybenzoesäuremethylester, 4-Hydroxybenzoesäureisopropylester, 4-Hydroxybenzoesäurepropylester, 2-Hydroxybiphenyl, 4-Hydroxybiphenyl, 4-Hydroxypropiophenon, 4-Methoxyphenol, 2-Methoxyphenol, 2-Methylphenol, 3-Methylphenol, 4-Methylphenol, 1-Naphthol, 2-Naphthol, Naphthalin-1,5-diol, 4-Nitrophenol, 4-Nitrophenylglykol, Octylphenol, Phenol, 4-(2-Phenyl-2-propyl)phenol, Resorcin, Resorcinmonobenzoat, Salicylsäuremethylester, Salicylsäurephenylester

12. Heißschmelzdruckfarbe nach Anspruch 4, **dadurch gekennzeichnet, daß** die Ether hergestellt werden aus Halogenedukten ausgewählt aus der Gruppe:
Benzylchlorid, 4,4'-Bis(chloromethyl)-1,1'-biphenyl, Cyanurchlorid, Ethyl-2-bromacetat, Ethyl-2-brompropionat, Methyl-2-brompropionat, Methylbromacetat, 2-Phenylethylbromid,
Alkoholedukten ausgewählt aus der Gruppe
Benzoin, Benzylalkohol, 1,4-Bis-(hydroxymethyl)cyclohexan,1,4-Butandiol, 2-Butin-1,4-diol, 3-Butin-2-ol, Butanol, 2-Butanol, tert.-Butanol, Cyclohexanol, 1-Decanol, 2,2-Dimethyl-1-propanol, 1,1-Diphenylmethanol, Dipropylenglykol, 1-Docosanol, 1,12-Dodecandiol, 1-Dodecanol, 1-Eicosanol, Ethanol, Ethoxypropanol, Ethandiol, Ethylenglykolmonosalicylat, Ethylenglykolmonoethylether, 2-Ethyl-1-hexanol, 2-Ethyl-2-(hydroxymethyl)-1,3-propahdiol, Furfurylalkohol, Glycerin, 2-Heptanol, 1-Hexadecanol, 1,6-Hexandiol, 1-Hexanol, Hydrochinon-bis(2-hydroxyethylether),Hydroxyaceton, 2-Hydroxybenzyllkohol, 2-Hydroxyessigsäure, 2-Hydroxyessigsäurebutylester, N-(2-Hydroxyethyl)phthalimid, Hydroxypivalylhydroxypivalat, 3-Hydroxypropionitril, Isoborneol, Isopropanol, Menthol (6-Isopropyl-2-methyl-cyclohexanol), Methanol, 4-Methoxybenzylalkohol, Methoxypropanol, 3-Methyl-1-butanol, 2-Methyl-3-butin-2-ol, 2-Methyl-1,3-propandiol, 2-Methyl-1-propanol, 1,2-Octadecandiol, 1-Octadecanol, 1-octanol, 2-Octanol, Pentaerythritol, 2-Phenoxyethanol, 1-Phenoxy-2-propanol, 3-Phenyl-1-propanol, 1-Phenylethanol, 2-Phenylethanol, 2-Popin-1-ol, 1,2-Propandiol, 1,3-Propandiol, 1-Propanol, 1-Tetradecanol, Tetrahydrofurfurylalkohol,Tris(hydroxymethyl)ethan
und Phenoledukten ausgewählt aus der Gruppe:
4-Acetaminophenol, 4-Aminophenol, 4-Benzyloxyphenol, 2,2-Bis(4-hydroxyphenyl)-propan, 2-tert.-Butylhydrochinon, 2-tert-Butylphenol, 4-tert-Butylphenol, 2,2'-Dihydroxybiphenyl, 4,4'-Dihydroxybiphenyl, 1,4-Dihydroxyanthrachinon, 3,5-Dimethylphenol, 4-Ethylphenol, Hydrochinon, 4-Hydroxyacetophenon, 4-Hydroxybenzoesäure, 4-Hydroxybenzoesäurebenzylester, 4-Hydroxybenzoesäureethylester, 4-Hydroxybenzoesäuremethylester, 4-Hydroxybenzoesäureisopropylester, 4-Hydroxybenzoesäurepropylester, 2-Hydroxybiphenyl, 4-Hydroxybiphenyl, 4-Hydroxypropiophenon, 4-Methoxyphenol, 2-Methoxyphenol, 2-Methylphenol, 3-Methylphenol, 4-Methylphenol, 1-Naphthol, 2-Naphthol, Naphthalin-1,5-diol, 4-Nitrophenol, 4-Nitrophenylglykol, Octylphenol, Phenol, 4-(2-Phenyl-2-propyl)phenol, Resorcin, Resorcinmonobenzoat, Salicylsäuremethylester, Salicylsäurephenylester

13. Heißschmelzdruckfarbe nach Anspruch 4, **dadurch gekennzeichnet, daß** die Carbonate hergestellt werden aus Chlorformiatedukten ausgewählt aus der Gruppe:
Benzylchlorformiat, Butandiol-1,4-bis-chlorformiat, Butylchlorformiat, sek.-Butylchlorformiat, Hexadecylchlorformiat, Diethylenglykol-bis-chlorformiat, Ethylchlorformiat, 2-Ethylhexylchlorformiat, Isobutylchlorformiat, Isopropylchlorformiat, 1,6-Hexandiol-bis-chloroformiat, 2-Methoxyethylchlorformiat, Methylchlorformiat, Tetradecylchlorformiat, Phenoxyethylchlorformiat, Phenylchlorformiat, Propylchlorformiat, Octadecylchlorformiat
und Alkoholedukten ausgewählt aus der Gruppe:
Benzoin, Benzylalkohol, 1,4-Bis-(hydroxymethyl)cyclohexan,1,4-Butandiol, 2-Butin-1,4-diol, 3-Butin-2-ol, Butanol, 2-Butanol, tert.-Butanol, Cyclohexanol, 1-Decanol, 2,2-Dimethyl-1-propanol, 1,1-Diphenylmethanol, Dipropylenglykol, 1-Docosanol, 1,12-Dodecandiol, 1-Dodecanol, 1-Eicosanol, Ethanol, Ethoxypropanol, Ethandiol, Ethylenglykolmonosalicylat, Ethylenglykolmonoethylether, 2-Ethyl-1-hexanol, 2-Ethyl-2-(hydroxymethyl)-1,3-propandiol, Furfurylalkohol, Glycerin, 2-Heptanol, 1-Hexadecanol, 1,6-Hexandiol, 1-Hexanol, Hydrochinon-bis(2-hydroxyethylether), Hydroxyaceton, 2-Hydroxybenzyllkohol, 2-Hydroxyessigsäure, 2-Hydroxyessigsäurebutylester, N-(2-Hydroxyethyl)phthalimid, Hydroxypivalylhydroxypivalat, 3-Hydroxypropionitril, Isoborneol, Isopropanol, Menthol (6-Isopropyl-2-methyl-cyclohexanol), Methanol, 4-Methoxybenzylalkohol, Methoxypropanol, 3-Methyl-1-butanol, 2-Methyl-3-butin-2-ol, 2-Methyl-1,3-propandiol, 2-Methyl-1-propanol, 1,2-Octadecandiol, 1-Octadecanol, 1-Octanol, 2-Octanol, Pentaerythritol, 2-Phenoxyethanol, 1-Phenoxy-2-propanol, 3-Phenyl-1-propanol, 1-Phenylethanol, 2-Phenylethanol, 2-Popin-1-ol, 1,2-Propandiol, 1,3-Propandiol, 1-Propanol, 1-Tetradecanol, Tetrahydrofurfurylalkohol, Tris(hydroxymethyl)ethan
und Phenoledukten ausgewählt aus der Gruppe:
4-Acetaminophenol, 4-Aminophenol, 4-Benzyloxyphenol, 2,2-Bis(4-hydroxyphenyl)-propan, 2-tert.-Butylhydrochinon, 2-tert-Butylphenol, 4-tert-Butylphenol, 2,2'-Dihydroxybiphenyl, 4,4'-Dihydroxybiphenyl, 1,4-Dihydroxyanthrachinon, 3,5-Dimethylphenol, 4-Ethylphenol, Hydrochinon, 4-Hydroxyacetophenon, 4-Hydroxybenzoesäure, 4-Hydroxybenzoesäurebenzylester, 4-Hydroxybenzoesäureethylester, 4-Hydroxybenzoesäuremethylester, 4-Hydroxybenzoesäureisopropylester, 4-Hydroxybenzoesäurepropylester, 2-Hydroxybiphenyl, 4-Hydroxybiphenyl, 4-Hydroxypropiophenon, 4-Methoxyphenol, 2-Methoxyphenol, 2-Methylphenol, 3-Methylphenol, 4-Methylphenol, 1-Naphthol, 2-Naphthol, Naphthalin-1,5-diol, 4-Nitrophenol, 4-Nitrophenylglykol, Octylphenol, Phenol, 4-(2-Phenyl-2-propyl)phenol, Resorcin, Resorcinmonobenzoat, Salicylsäuremethylester, Salicylsäurephenylester.

14. Heißschmelzdruckfarbe nach Anspruch 4, **dadurch gekennzeichnet, daß** die Harnstoffe und acylierte Harnstoffe hergestellt werden aus Isocyanatedukten ausgewählt aus der Gruppe:
1,3-Bis(1-isocyanato-1-methylethyl)benzene (TMXDI), 1,5-Bis(isocyanat) naphthalin, Butylisocyanat, 4-Chlorphenylisocyanat, , CycIohexylisocyanat, Hexamethylendiisocyanat (HDI), lsophorondiisocyanat (IPDI), 4-Isopropylphenylisocyanat, 4,4'-Methylenbis(cyclohexyl)isocyanat, (H12MDI), 4,4'-Methylen-bis(phenylisocyanat) (MDI), 1-Naphthylisocyanat, Octadecylisocyanat, 1,4-Phenylendiisocyanat (PPDI), Phenylisocyanat Toluol-4-sulfonylisocyanat, Toluoldiisocyanat (TDI)
und Aminedukten ausgewählt aus der Gruppe:
Anilin, 2-Aminobutan, 4-Aminobenzoesäureethylester, 4-Aminodiphenylether, 3-Aminopropanol, Benzidin (4,4'-Diamino-biphenyl), Benzylamin, Butylamin, Cyclohexylamin, 1,2-Diaminobenzol, 1,3-Diaminobenzol, 1,4-Diaminobenzol, 4,4'-Diaminodiphenylmethan, 1,2-Diaminoethan, 1,3-Diaminopentan, 1,2-Diaminopropan, 1,3-Diaminopropan, Dibenzylamin, Di-2-ethylhexylamin, Diethylamin, Diisobutylamin,Dimethylamin, Dimethylethanolamin, Dibutylamin, Diphenylamin, Dodecylamin, Ethanolamin, Ethylamin, 2-Ethylhexylamin, Furfurylamin, Hexadecylamin, 1,6-Hexamethylendiamin, Hexylamin, Isophorondiamin, Isopropylamin, 4-Methoxyanilin, 4-Methoxybenzylamin, Methylamin, 4-Methylanilin, N-Methylanilin, N-Methylbenzylamin, Morpholin, 1-Naphthylamin, 2-Naphthylamin, 2-Nitroanilin, 3-Nitroanilin, 4-Nitroanilin, Octadecylamin, Octylamin, 1-Phenylethylamin, 2-Phenylethylamin, Phenylhydrazin, Piperazin, Piperidin, Propylamin, Tetrahydrofurfurylamin, Pyrrolidin
und Carbonsäureedukten ausgewählt aus der Gruppe:
Acetylsalicylsäure, Acrylsäure, Ameisensäure, Benzoesäure, Benzol-1,2,4,5-tetracarbonsäure, Benzol-1,2,4-tricarbonsäure, Bernsteinsäure, 2,2-Bis-(hydroxymethyl)-propionsäure, Butansäure, 4-tert.-Butylbenzoesäure, Cyanessigsäure, 1,4-Cyclohexandicarbonsäure, 1,10-Decandicarbonsäure, Decansäure, 1,10-Dodecandicarbonsäure, Dodecansäure, Essigsäure, 2-Ethylbutansäure, 2-Ethylhexansäure, Fumarsäure, 2-Hydroxyessigsäure, Hexahydrophthalsäure, 1,6-Hexandicarbonsäure, Hexadecansäure, Hexansäure, 2-Hydroxybenzoesäure, 4-Hydroxybenzoesäure, 2-Hydroxybernsteinsäure, 1-Hydroxy-1-phenylessigsäure, Isobuttersäure, Isophthalsäure, Maleinsäure, Malonsäure, 4-Methoxybenzoesäure, Methoxyessigsäure, 4-Methoxyphenylessigsäure, 2-Methylbenzoesäure, 3-Methylbenzoesäure, 4-Methylbenzoesäure, 2-Methylbutansäure, 3-Methylbutansäure, Methylenbernsteinsäure, 4-Nitrobenzoesäure, 1,9-Nonandicarbonsäure, Octadecansäure,1,8-Octandicarbonsäure, 4-Oxopentansäure, Octansäure, Oxalsäure, 1,5-Pentandicarbonsäure, 2-Phenoxyessigsäure, 2-Phenylessigsäure, Pivalinsäure, Propionsäure, Pentansäure, Terephthalsäure, Tetradecansäure, Tetrahydrophthalsäure
und Harnstoffedukten ausgewählt aus der Gruppe:
Harnstoff, N-Methylharnstoff, N,N'-Dimethylharnstoff, Ethylenharnstoff, Propylenharnstoff

15. Heißschmelzdruckfarbe nach Anspruch 4, **dadurch gekennzeichnet, daß** die acyliereten Aromaten hergestellt werden aus Alkylarylethem ausgewählt aus der Gruppe:
Biphenyl, 1,2-Dimethoxyphenol, Ethoxyphenol, Methoxyphenol und Carbonsäureedukten ausgewählt aus der Gruppe:
Benzoesäure, Benzol-1,2,4,5-tetracarbonsäure, Benzol-1,2,4-tricarbonsäure, Bernsteinsäure, Butansäure, 4-tert.-Butylbenzoesäure, 1,4-Gyclohexandicarbonsäure, 1,10-Decandicarbonsäure, Decansäure, 1,10-Dodecandicarbonsäure, Dodecansäure, Essigsäure, 2-Ethylbutansäure, 2-Ethylhexansäure, 1,6-Hexandicarbonsäure, Hexadecansäure, Hexansäure, Isobuttersäure, Isophthalsäure, 3-Methylbutansäure, Methylenbernsteinsäure, 4-Methoxybenzoesäure, Methoxyessigsäure, 4-Methoxyphenylessigsäure, 2-Methylbenzoesäure, 3-Methylbenzoesäure, 4-Methylbenzoesäure, Maleinsäure, Malonsäure, 4-Nitrobenzoesäure, 1,9-Nonandicarbonsäure, Octadecansäure,1,8-Octandicarbonsäure, 4-Oxopentansäure, Octansäure, Oxalsäure, 1,5-Pentandicarbonsäure, 2-Phenoxyessigsäure, 2-Phenylessigsäure, Pivalinsäure, Propionsäure, Pentansäure, Terephthalsäure, Tetradecansäure

16. Heißschmelzdruckfarbe nach Anspruch 3, **dadurch gekennzeichnet, daß** Farbmittel ausgewählt aus der Gruppe der Pigmente, mit den Colour Index Bezeichnungen Pigment-Red PR 57:1, Pigment Yellow PY 12, Pigment Blue PB 15:3, PB 27:77510 und Rußpigmente verwendet werden.

17. Heißschmelzdruckfarbe nach Anspruch 3, **dadurch gekennzeichnet, daß** ausgewählt aus der Gruppe der Farbstoffe mit den CI/CA Nummern DY 3, DY 54, SY 162, DR 60, SB 35, SB 44, SBK 45, SBK 29 verwendet werden.

18. Heißschmelzdruckfarbe nach Anspruch 1 - 16 **dadurch gekennzeichnet, daß** als Additive Polyamidkügelchen mit einer Teilchengröße von 5 bis 30 um eingesetzt werden.

19. Verwendung der Heißschmelzdruckfarbe nach den Ansprüchen 1 bis 18 als Tiefdruckfarbe, Ink-Jet Druckfarbe und zur Herstellung von Tonern für elektrofotografische Schmelzverfahren.

## Claims

1. A hot-melt printing ink, particularly for use in gravure printing methods, containing
a. 50 to 80 wt.-% solvent or solvent mixtures with a melting point of 65 to 109°C and a viscosity of 2.9 to 20 mPas at 110°C;
b. 20 to 50 wt.-% of a binding agent having a glass transition temperature T_{G} of from 30 to 65°C.

2. The hot-melt printing ink according to claim 1, **characterized in that** a standard varnish with a viscosity of 6 to 20 mPas at 110°C can be produced from binding agent and solvent.

3. The hot-melt printing ink according to claim 1 or 2, **characterized in that** 0.5 to 3 wt.-% additives and 0 to 10 wt.-% colorants are included.

4. The hot-melt printing ink according to claims 1 to 3, **characterized in that** the solvent is selected from the group of carboxylic amides, imides, monourethanes, diurethanes, sulfonamides, sulfonic esters, carboxylic esters, ethers, carbonates, ureas, acylated ureas, acylated aromatic compounds or mixtures thereof.

5. The hot-melt printing ink according to claim 1, **characterized in that** the binding agent is selected from the group of ketone resin, colophonium resin, urethane resin, hydrocarbon resin or mixtures thereof.

6. The hot-melt printing ink according to claim 4, **characterized in that** the carboxylic amides are produced from carboxylic acid educts selected from the group of:
acetylsalicylic acid, acrylic acid, formic acid, benzoic acid, benzene-1,2,4,5-tetracarboxylic acid, benzene-1 ,2,4-tricarboxylic acid, succinic acid, 2,2-bis-(hydroxymethyl)propionic acid, butanoic acid, 4-tert-butylbenzoic acid, cyanoacetic acid, 1,4-cyclohexanedicarboxylic acid, 1,10-decanedicarboxylic acid, decanoic acid, 1,10-dodecanedicarboxylic acid, dodecanoic acid, acetic acid, 2-ethylbutanoic acid, 2-ethylhexanoic acid, fumaric acid, 2-hydroxyacetic acid, hexahydrophthalic acid, 1,6-hexanedicarboxylic acid, hexadecanoic acid, hexanoic acid, 2-hydroxybenzoic acid, 4-hydroxybenzoic acid, 2-hydroxysuccinic acid, 1-hydroxy-1-phenylacetic acid, isobutyric acid, isophthalic acid, maleic acid, malonic acid, 4-methoxybenzoic acid, methoxyacetic acid, 4-methoxyphenylacetic acid, 2-methylbenzoic acid, 3-methylbenzoic acid, 4-methylbenzoic acid, 2-methylbutanoic acid, 3-methylbutanoic acid, methylenesuccinic acid, 4-nitrobenzoic acid, 1,9-nonanedicarboxylic acid, octadecanoic acid, 1,8-octanedicarboxylic acid, 4-oxopentanoic acid, octanoic acid, oxalic acid, 1,5-pentanedicarboxylic acid, 2-phenoxyacetic acid, 2-phenylacetic acid, pivalic acid, propionic acid, pentanoic acid, terephthalic acid, tetradecanoic acid, tetrahydrophthalic acid,
and amines selected from the group of
aniline, 2-aminobutane, ethyl 4-aminobenzoate, 4-aminodiphenyl ether, 3-aminopropanol, benzylamine, butylamine, cyclohexylamine, 1,2-diaminobenzene, 1,3-diaminobenzene, 1,4-diaminobenzene, 4,4'-diaminobiphenyl, 4,4'-diaminodiphenylmethane, 1,2-diaminoethane, 1,3-diaminopentane, 1,2-diaminopropane, 1,3-diaminopropane, dibenzylamine, di-2-ethylhexylamine, diethylamine, diisobutylamine, dimethylamine, dimethylethanolamine, dibutylamine, diphenylamine, dodecylamine, ethanolamine, ethylamine, 2-ethylhexylamine, furfurylamine, hexadecylamine, 1,6-hexamethylenediamine, hexylamine, isophoronediamine, isopropylamine, 4-methoxyaniline, 4-methoxybenzylamine, methylamine, 4-methylaniline, N-methylaniline, N-methylbenzylamine, morpholine, 1-naphthylamine, 2-naphthylamine, 2-nitroaniline, 3-nitroaniline, 4-nitroaniline, octadecylamine, octylamine, 1-phenylethylamine, 2-phenylethylamine, phenylhydrazine, piperazine, piperidine, propylamine, pyrrolidine, tetrahydrofurfurylamine.

7. The hot-melt printing ink according to claim 4, **characterized in that** the imides are produced from anhydride educts selected from the group of:
benzene-1,2,4,5-tetracarboxylic acid 1,2,4,5-dianhyride, benzene-1,2,4-tricarboxylic acid 1,2-anhydride, hexahydrophthalic anhydride, methylene-hexahydrophthalic anhydride, naphthalene-1,8-dicarboxylic acid anhydride, phthalic anhydride, tetrahydrophthalic anhydride,
and amine educts selected from the group of:
ethyl aminobenzoate, 4-aminodiphenyl ether, 3-aminopropanol, benzidine (4,4'-diaminobiphenyl), benzylamine, butylamine, cyclohexylamine, 1,2-diaminobenzene, 1,3-diaminobenzene, 1,4-diaminobenzene, 4,4'-diaminodiphenylmethane, 1,2-diaminoethane, 1,3-diaminopentane, 1,2-diaminopropane, 1,3-diaminopropane, dodecylamine, ethanolamine, ethylamine, 2-ethylhexylamine, furfurylamine, hexadecylamine, 1,6-hexamethylenediamine, hexylamine, isophoronediamine, isopropylamine, 4-methoxyaniline, 4-methoxybenzylamine, methylamine, 4-methylaniline, 1-naphthylamine, 2-naphthylamine, 2-nitroaniline, 3-nitroaniline, 4-nitroaniline, octadecylamine, octylamine, 1-phenylethylamine, 2-phenylethylamine, propylamine, tetrahydrofurfurylamine.

8. The hot-melt printing ink according to claim 4, **characterized in that** the monourethanes and diurethanes are produced from isocyanate educts selected from the group of:
1,3-bis(1-isocyanato-1-methylethyl)benzene (TMXDI), 1,5-bis(isocyanato)-naphthalene, butyl isocyanate, cyclohexyl isocyanate, hexamethylene diisocyanate (HDI), isophorone diisocyanate (IPDI), 4-isopropylphenyl isocyanate, 4,4'-methylenebis(cyclohexyl isocyanate) (H12MDI), 4,4'-methylenebis(phenyl isocyanate) (MDI), 1-naphthyl isocyanate, octadecyl isocyanate, 1,4-phenylene diisocyanate (PPDI), phenyl isocyanate, toluene-4-sulfonyl isocyanate, toluene diisocyanate (TDI),
chloroformate educts selected from the group of:
benzyl chloroformate, butanediol-1,4 bischloroformate, butyl chloroformate, sec-butyl chloroformate, hexadecyl chloroformate, diethylene glycol bischloroformate, ethyl chloroformate, 2-ethylhexyl chloroformate, isobutyl chloroformate, isopropyl chloroformate, 1,6-hexanediol bischloroformate, 2-methoxyethyl chloroformate, methyl chloroformate, tetradecyl chloroformate, phenoxyethyl chloroformate, phenyl chloroformate, propyl chloroformate, octadecyl chloroformate,
and alcohol educts selected from the group of:
benzoin, benzyl alcohol, 1,4-bis(hydroxymethyl)cyclohexane, 1,4-butanediol, 2-butine-1,4-diol, 3-butin-2-ol, butanol, 2-butanol, tert-butanol, cyclohexanol, 1-decanol, 2,2-dimethyl-1-propanol, 1,1-diphenylmethanol, dipropylene glycol, 1-docosanol, 1,12-dodecanediol, 1-dodecanol, 1-eicosanol, ethanol, ethoxypropanol, ethanediol, ethylene glycol monosalicylate, ethylene glycol monoethyl ether, 2-ethyl-1-hexanol, 2-ethyl-2-(hydroxymethyl)-1,3-propanediol, furfuryl alcohol, glycerol, 2-heptanol, 1-hexadecanol, 1,6-hexanediol, 1-hexanol, hydroquinone-bis(2-hydroxyethyl ether), hydroxy-acetone, 2-hydroxybenzyl alcohol, 2-hydroxyacetic acid, butyl 2-hydroxyacetate, N-(2-hydroxyethyl)phthalimide, hydroxypivalyl hydroxypivalate, 3-hydroxypropionitrile, isoborneol, isopropanol, menthol (6-isopropyl-2-methylcyclohexanol), methanol, 4-methoxybenzyl alcohol, methoxypropanol, 3-methyl-1-butanol, 2-methyl-3-butin-2-ol, 2-methyl-1,3-propanediol, 2-methyl-1-propanol, 1,2-octadecanediol, 1-octadecanol, 1-octanol, 2-octanol, pentaerythritol, 2-phenoxyethanol, 1-phenoxy-2-propanol, 3-phenyl-1-propanol, 1-phenylethanol, 2-phenylethanol, 2-propin-1-ol, 1,2-propanediol, 1,3-propanediol, 1-propanol, 1-tetradecanol, tetrahydrofurfuryl alcohol, tris(hydroxymethyl)ethane,
amine educts selected from the group of:
aniline, 2-aminobutane, ethyl 4-aminobenzoate, 4-aminodiphenyl ether, 3-aminopropanol, benzidine (4,4'-diaminobiphenyl), benzylamine, butylamine, cyclohexylamine, 1,2-diaminobenzene, 1,3-diaminobenzene, 1,4-diaminobenzene, 4,4'-diaminodiphenylmethane, 1,2-diaminoethane, 1,3-diaminopentane, 1,2-diaminopropane, 1,3-diaminopropane, dibenzylamine, di-2-ethylhexylamine, diethylamine, diisobutylamine, dimethylamine, dimethylethanolamine, dibutylamine, diphenylamine, dodecylamine, ethanolamine, ethylamine, 2-ethylhexylamine, furfurylamine, hexadecylamine, 1,6-hexamethylenediamine, hexylamine, isophoronediamine, isopropylamine, 4-methoxyaniline, 4-methoxybenzylamine, methylamine, 4-methylaniline, N-methylaniline, N-methylbenzylamine, morpholine, 1-naphthylamine, 2-naphthylamine, 2-nitroaniline, 3-nitroaniline, 4-nitroaniline, octadecylamine, octylamine, 1-phenylethylamine, 2-phenylethylamine, phenylhydrazine, piperazine, piperidine, propylamine, tetrahydrofurfurylamine, pyrrolidine,
and N,N-dialkylcarbamic acid educts selected from the group of:
N,N-diethylcarbamic acid chloride, N,N-dimethylcarbamic acid chloride, N,N-diphenylcarbamic acid chloride.

9. The hot-melt printing ink according to claim 4, **characterized in that** the sulfonamides are produced from sulfonic acid chloride educts selected from the group of:
4-acetamidobenzenesulfonyl chloride, benzenesulfonyl chloride, ethanesulfonyl chloride, methanesulfonyl chloride, p-toluenesulfonyl chloride,
and amine educts selected from the group of:
aniline, 2-aminobutane, ethyl 4-aminobenzoate, 4-aminodiphenyl ether, 3-aminopropanol, benzidine (4,4'-diaminobiphenyl), benzylamine, butylamine, cyclohexylamine, 1,2-diaminobenzene, 1,3-diaminobenzene, 1,4-diaminobenzene, 4,4'-diaminodiphenylmethane, 1,2-diaminoethane, 1,3-diaminopentane, 1,2-diaminopropane, 1,3-diaminopropane, dibenzylamine, di-2-ethylhexylamine, diethylamine, diisobutylamine, dimethylamine, dimethylethanolamine, dibutylamine, diphenylamine, dodecylamine, ethanolamine, ethylamine, 2-ethylhexylamine, furfurylamine, hexadecylamine, 1,6-hexamethylenediamine, hexylamine, isophoronediamine, isopropylamine, 4-methoxyaniline, 4-methoxybenzylamine, methylamine, 4-methylaniline, N-methylaniline, N-methylbenzylamine, morpholine, 1-naphthylamine, 2-naphthylamine, 2-nitroaniline, 3-nitroaniline, 4-nitroaniline, octadecylamine, octylamine, 1-phenylethylamine, 2-phenylethylamine, phenylhydrazine, piperazine, piperidine, propylamine, tetrahydrofurfurylamine, pyrrolidine.

10. The hot-melt printing ink according to claim 4, **characterized in that** the sulfonic esters are produced from sulfonic acid chloride educts selected from the group of:
4-acetamidobenzenesulfonyl chloride, benzenesulfonyl chloride, ethanesulfonyl chloride, methanesulfonyl chloride, p-toluenesulfonyl chloride,
and alcohol educts selected from the group of:
benzoin, benzyl alcohol, 1,4-bis(hydroxymethyl)cyclohexane, 1,4-butanediol, 2-butine-1,4-diol, 3-butin-2-ol, butanol, 2-butanol, tert-butanol, cyclohexanol, 1-decanol, 2,2-dimethyl-1-propanol, 1,1-diphenylmethanol, dipropylene glycol, 1-docosanol, 1,12-dodecanediol, 1-dodecanol, 1-eicosanol, ethanol, ethoxypropanol, ethanediol, ethylene glycol monosalicylate, ethylene glycol monoethyl ether, 2-ethyl-1-hexanol, 2-ethyl-2-(hydroxymethyl)-1,3-propanediol, furfuryl alcohol, glycerol, 2-heptanol, 1-hexadecanol, 1,6-hexanediol, 1-hexanol, hydroquinone-bis(2-hydroxyethyl ether), hydroxy-acetone, 2-hydroxybenzyl alcohol, 2-hydroxyacetic acid, butyl 2-hydroxyacetate, N-(2-hydroxyethyl)phthalimide, hydroxypivalyl hydroxypivalate, 3-hydroxypropionitrile, isoborneol, isopropanol, menthol (6-isopropyl-2-methylcyclohexanol), methanol, 4-methoxybenzyl alcohol, methoxypropanol, 3-methyl-1-butanol, 2-methyl-3-butin-2-ol, 2-methyl-1,3-propanediol, 2-methyl-1-propanol, 1,2-octadecanediol, 1-octadecanol, 1-octanol, 2-octanol, pentaerythritol, 2-phenoxyethanol, 1-phenoxy-2-propanol, 3-phenyl-1-propanol, 1-phenylethanol, 2-phenylethanol, 2-propin-1-ol, 1,2-propanediol, 1,3-propanediol, 1-propanol, 1-tetradecanol, tetrahydrofurfuryl alcohol, tris(hydroxymethyl)ethane,
and phenol educts selected from the group of:
4-acetaminophenol, 4-aminophenol, 4-benzyloxyphenol, 2,2-bis(4-hydroxyphenyl)propane, 2-tert-butylhydroquinone, 2-tert-butylphenol, 4-tert-butylphenol, 2,2'-dihydroxybiphenyl, 4,4'-dihydroxybiphenyl, 1,4-dihydroxyanthraquinone, 3,5-dimethylphenol, 4-ethylphenol, hydroquinone, 4-hydroxyacetophenone, 4-hydroxybenzoic acid, ethyl 4-hydroxybenzoate, methyl 4-hydroxybenzoate, isopropyl 4-hydroxybenzoate, propyl 4-hydroxybenzoate, 2-hydroxybiphenyl, 4-hydroxybiphenyl, 4-hydroxypropiophenone, 4-methoxyphenol, 2-methoxyphenol, 2-methylphenol, 3-methylphenol, 4-methylphenol, 1-naphthol, 2-naphthol, naphthalene-1,5-diol, 4-nitrophenol, 4-nitrophenylglycol, octylphenol, phenol, 4-(2-phenyl-2-propyl)-phenol, resorcinol, resorcinol monobenzoate, methyl salicylate, phenyl salicylate.

11. The hot-melt printing ink according to claim 4, **characterized in that** the carboxylic esters are produced from carboxylic acid educts selected from the group of:
acetylsalicylic acid, acrylic acid, formic acid, benzoic acid, benzene-1,2,4,5-tetracarboxylic acid, benzene-1 ,2,4-tricarboxylic acid, succinic acid, 2,2-bis-(hydroxymethyl)propionic acid, butanoic acid, 4-tert-butylbenzoic acid, cyanoacetic acid, 1,4-cyclohexanedicarboxylic acid, 1,10-decanedicarboxylic acid, decanoic acid, 1,10-dodecanedicarboxylic acid, dodecanoic acid, acetic acid, 2-ethylbutanoic acid, 2-ethylhexanoic acid, fumaric acid, 2-hydroxyacetic acid, hexahydrophthalic acid, 1,6-hexanedicarboxylic acid, hexadecanoic acid, hexanoic acid, 2-hydroxybenzoic acid, 4-hydroxybenzoic acid, 2-hydroxysuccinic acid, 1-hydroxy-1-phenylacetic acid, isobutyric acid, isophthalic acid, maleic acid, malonic acid, 4-methoxybenzoic acid, methoxyacetic acid, 4-methoxyphenylacetic acid, 2-methylbenzoic acid, 3-methylbenzoic acid, 4-methylbenzoic acid, 2-methylbutanoic acid, 3-methylbutanoic acid, methylenesuccinic acid, 4-nitrobenzoic acid, 1,9-nonanedicarboxylic acid, octadecanoic acid, 1,8-octanedicarboxylic acid, 4-oxopentanoic acid, octanoic acid, oxalic acid, 1,5-pentanedicarboxylic acid, 2-phenoxyacetic acid, 2-phenylacetic acid, pivalic acid, propionic acid, pentanoic acid, terephthalic acid, tetradecanoic acid, tetrahydrophthalic acid,
alcohol educts selected from the group of:
benzoin, benzyl alcohol, 1,4-bis(hydroxymethyl)cyclohexane, 1,4-butanediol, 2-butine-1,4-diol, 3-butin-2-ol, butanol, 2-butanol, tert-butanol, cyclohexanol, 1-decanol, 2,2-dimethyl-1-propanol, 1,1-diphenylmethanol, dipropylene glycol, 1-docosanol, 1,12-dodecanediol, 1-dodecanol, 1-eicosanol, ethanol, ethoxypropanol, ethanediol, ethylene glycol monosalicylate, ethylene glycol monoethyl ether, 2-ethyl-1-hexanol, 2-ethyl-2-(hydroxymethyl)-1,3-propanediol, furfuryl alcohol, glycerol, 2-heptanol, 1-hexadecanol, 1,6-hexanediol, 1-hexanol, hydroquinone-bis(2-hydroxyethyl ether), hydroxy-acetone, 2-hydroxybenzyl alcohol, 2-hydroxyacetic acid, butyl 2-hydroxyacetate, N-(2-hydroxyethyl)phthalimide, hydroxypivalyl hydroxypivalate, 3-hydroxypropionitrile, isoborneol, isopropanol, menthol (6-isopropyl-2-methylcyclohexanol), methanol, 4-methoxybenzyl alcohol, methoxypropanol, 3-methyl-1-butanol, 2-methyl-3-butin-2-ol, 2-methyl-1,3-propanediol, 2-methyl-1-propanol, 1,2-octadecanediol, 1-octadecanol, 1-octanol, 2-octanol, pentaerythritol, 2-phenoxyethanol, 1-phenoxy-2-propanol, 3-phenyl-1-propanol, 1-phenylethanol, 2-phenylethanol, 2-propin-1-ol, 1,2-propanediol, 1,3-propanediol, 1-propanol, 1-tetradecanol, tetrahydrofurfuryl alcohol, tris(hydroxymethyl)ethane,
and phenol educts selected from the group of:
4-acetaminophenol, 4-aminophenol, 4-benzyloxyphenol, 2,2-bis(4-hydroxyphenyl)propane, 2-tert-butylhydroquinone, 2-tert-butylphenol, 4-tert-butylphenol, 2,2'-dihydroxybiphenyl, 4,4'-dihydroxybiphenyl, 1,4-dihydroxyanthraquinone, 3,5-dimethylphenol, 4-ethylphenol, hydroquinone, 4-hydroxyacetophenone, 4-hydroxybenzoic acid, ethyl 4-hydroxybenzoate, methyl 4-hydroxybenzoate, isopropyl 4-hydroxybenzoate, propyl 4-hydroxybenzoate, 2-hydroxybiphenyl, 4-hydroxybiphenyl, 4-hydroxypropiophenone, 4-methoxyphenol, 2-methoxyphenol, 2-methylphenol, 3-methylphenol, 4-methylphenol, 1-naphthol, 2-naphthol, naphthalene-1,5-diol, 4-nitrophenol, 4-nitrophenylglycol, octylphenol, phenol, 4-(2-phenyl-2-propyl)-phenol, resorcinol, resorcinol monobenzoate, methyl salicylate, phenyl salicylate.

12. The hot-melt printing ink according to claim 4, **characterized in that** the ethers are produced from halogenated educts selected from the group of:
benzyl chloride, 4,4'-bis(chloromethyl)-1,1'-biphenyl, cyanuric chloride, ethyl 2-bromoacetate, ethyl 2-bromopropionate, methyl 2-bromopropionate, methyl bromoacetate, 2-phenylethyl bromide,
alcohol educts selected from the group of:
benzoin, benzyl alcohol, 1,4-bis(hydroxymethyl)cyclohexane, 1,4-butanediol, 2-butine-1,4-diol, 3-butin-2-ol, butanol, 2-butanol, tert-butanol, cyclohexanol, 1-decanol, 2,2-dimethyl-1-propanol, 1,1-diphenylmethanol, dipropylene glycol, 1-docosanol, 1,12-dodecanediol, 1-dodecanol, 1-eicosanol, ethanol, ethoxypropanol, ethanediol, ethylene glycol monosalicylate, ethylene glycol monoethyl ether, 2-ethyl-1-hexanol, 2-ethyl-2-(hydroxymethyl)-1,3-propanediol, furfuryl alcohol, glycerol, 2-heptanol, 1-hexadecanol, 1,6-hexanediol, 1-hexanol, hydroquinone-bis(2-hydroxyethyl ether), hydroxy-acetone, 2-hydroxybenzyl alcohol, 2-hydroxyacetic acid, butyl 2-hydroxyacetate, N-(2-hydroxyethyl)phthalimide, hydroxypivalyl hydroxypivalate, 3-hydroxypropionitrile, isoborneol, isopropanol, menthol (6-isopropyl-2-methylcyclohexanol), methanol, 4-methoxybenzyl alcohol, methoxypropanol, 3-methyl-1-butanol, 2-methyl-3-butin-2-ol, 2-methyl-1,3-propanediol, 2-methyl-1-propanol, 1,2-octadecanediol, 1-octadecanol, 1-octanol, 2-octanol, pentaerythritol, 2-phenoxyethanol, 1-phenoxy-2-propanol, 3-phenyl-1-propanol, 1-phenylethanol, 2-phenylethanol, 2-propin-1-ol, 1,2-propanediol, 1,3-propanediol, 1-propanol, 1-tetradecanol, tetrahydrofurfuryl alcohol, tris(hydroxymethyl)ethane,
and phenol educts selected from the group of:
4-acetaminophenol, 4-aminophenol, 4-benzyloxyphenol, 2,2-bis(4-hydroxyphenyl)propane, 2-tert-butylhydroquinone, 2-tert-butylphenol, 4-tert-butylphenol, 2,2'-dihydroxybiphenyl, 4,4'-dihydroxybiphenyl, 1,4-dihydroxyanthraquinone, 3,5-dimethylphenol, 4-ethylphenol, hydroquinone, 4-hydroxyacetophenone, 4-hydroxybenzoic acid, ethyl 4-hydroxybenzoate, methyl 4-hydroxybenzoate, isopropyl 4-hydroxybenzoate, propyl 4-hydroxybenzoate, 2-hydroxybiphenyl, 4-hydroxybiphenyl, 4-hydroxypropiophenone, 4-methoxyphenol, 2-methoxyphenol, 2-methylphenol, 3-methylphenol, 4-methylphenol, 1-naphthol, 2-naphthol, naphthalene-1,5-diol, 4-nitrophenol, 4-nitrophenylglycol, octylphenol, phenol, 4-(2-phenyl-2-propyl)-phenol, resorcinol, resorcinol monobenzoate, methyl salicylate, phenyl salicylate.

13. The hot-melt printing ink according to claim 4, **characterized in that** the carbonates are produced from chloroformate educts selected from the group of:
benzyl chloroformate, butanediol-1,4 bischloroformate, butyl chloroformate, sec-butyl chloroformate, hexadecyl chloroformate, diethylene glycol bischloroformate, ethyl chloroformate, 2-ethylhexyl chloroformate, isobutyl chloroformate, isopropyl chloroformate, 1,6-hexanediol bischloroformate, 2-methoxyethyl chloroformate, methyl chloroformate, tetradecyl chloroformate, phenoxyethyl chloroformate, phenyl chloroformate, propyl chloroformate, octadecyl chloroformate,
and alcohol educts selected from the group of:
benzoin, benzyl alcohol, 1,4-bis(hydroxymethyl)cyclohexane, 1,4-butanediol, 2-butine-1,4-diol, 3-butin-2-ol, butanol, 2-butanol, tert-butanol, cyclohexanol, 1-decanol, 2,2-dimethyl-1-propanol, 1,1-diphenylmethanol, dipropylene glycol, 1-docosanol, 1,12-dodecanediol, 1-dodecanol, 1-eicosanol, ethanol, ethoxypropanol, ethanediol, ethylene glycol monosalicylate, ethylene glycol monoethyl ether, 2-ethyl-1-hexanol, 2-ethyl-2-(hydroxymethyl)-1,3-propanediol, furfuryl alcohol, glycerol, 2-heptanol, 1-hexadecanol, 1,6-hexanediol, 1-hexanol, hydroquinone-bis(2-hydroxyethyl ether), hydroxy-acetone, 2-hydroxybenzyl alcohol, 2-hydroxyacetic acid, butyl 2-hydroxyacetate, N-(2-hydroxyethyl)phthalimide, hydroxypivalyl hydroxypivalate, 3-hydroxypropionitrile, isoborneol, isopropanol, menthol (6-isopropyl-2-methylcyclohexanol), methanol, 4-methoxybenzyl alcohol, methoxypropanol, 3-methyl-1-butanol, 2-methyl-3-butin-2-ol, 2-methyl-1,3-propanediol, 2-methyl-1-propanol, 1,2-octadecanediol, 1-octadecanol, 1-octanol, 2-octanol, pentaerythritol, 2-phenoxyethanol, 1-phenoxy-2-propanol, 3-phenyl-1-propanol, 1-phenylethanol, 2-phenylethanol, 2-propin-1-ol, 1,2-propanediol, 1,3-propanediol, 1-propanol, 1-tetradecanol, tetrahydrofurfuryl alcohol, tris(hydroxymethyl)ethane,
and phenol educts selected from the group of:
4-acetaminophenol, 4-aminophenol, 4-benzyloxyphenol, 2,2-bis(4-hydroxy-phenyl)propane, 2-tert-butylhydroquinone, 2-tert-butylphenol, 4-tert-butylphenol, 2,2'-dihydroxybiphenyl, 4,4'-dihydroxybiphenyl, 1,4-dihydroxyanthraquinone, 3,5-dimethylphenol, 4-ethylphenol, hydroquinone, 4-hydroxyacetophenone, 4-hydroxybenzoic acid, ethyl 4-hydroxybenzoate, methyl 4-hydroxybenzoate, isopropyl 4-hydroxybenzoate, propyl 4-hydroxybenzoate, 2-hydroxybiphenyl, 4-hydroxybiphenyl, 4-hydroxypropiophenone, 4-methoxyphenol, 2-methoxyphenol, 2-methylphenol, 3-methylphenol, 4-methylphenol, 1-naphthol, 2-naphthol, naphthalene-1,5-diol, 4-nitrophenol, 4-nitrophenylglycol, octylphenol, phenol, 4-(2-phenyl-2-propyl)-phenol, resorcinol, resorcinol monobenzoate, methyl salicylate, phenyl salicylate.

14. The hot-melt printing ink according to claim 4, **characterized in that** the ureas and acylated ureas are produced from isocyanate educts selected from the group of:
1,3-bis(1-isocyanato-1-methylethyl)benzene (TMXDI), 1,5-bis(isocyanato)-naphthalene, butyl isocyanate, 4-chlorophenyl isocyanate, cyclohexyl isocyanate, hexamethylene diisocyanate (HDI), isophorone diisocyanate (IPDI), 4-isopropylphenyl isocyanate, 4,4'-methylenebis(cyclohexyl isocyanate) (H12MDI), 4,4'-methylenebis(phenyl isocyanate) (MDI), 1-naphthyl isocyanate, octadecyl isocyanate, 1,4-phenylene diisocyanate (PPDI), phenyl isocyanate, toluene-4-sulfonyl isocyanate, toluene diisocyanate (TDI),
and amine educts selected from the group of:
aniline, 2-aminobutane, ethyl 4-aminobenzoate, 4-aminodiphenyl ether, 3-aminopropanol, benzidine (4,4'-diaminobiphenyl), benzylamine, butylamine, cyclohexylamine, 1,2-diaminobenzene, 1,3-diaminobenzene, 1,4-diaminobenzene, 4,4'-diaminodiphenylmethane, 1,2-diaminoethane, 1,3-diaminopentane, 1,2-diaminopropane, 1,3-diaminopropane, dibenzylamine, di-2-ethylhexylamine, diethylamine, diisobutylamine, dimethylamine, dimethylethanolamine, dibutylamine, diphenylamine, dodecylamine, ethanolamine, ethylamine, 2-ethylhexylamine, furfurylamine, hexadecylamine, 1,6-hexamethylenediamine, hexylamine, isophoronediamine, isopropylamine, 4-methoxyaniline, 4-methoxybenzylamine, methylamine, 4-methylaniline, N-methylaniline, N-methylbenzylamine, morpholine, 1-naphthylamine, 2-naphthylamine, 2-nitroaniline, 3-nitroaniline, 4-nitroaniline, octadecylamine, octylamine, 1-phenylethylamine, 2-phenylethylamine, phenylhydrazine, piperazine, piperidine, propylamine, tetrahydrofurfurylamine, pyrrolidine,
and carboxylic acid educts selected from the group of:
acetylsalicylic acid, acrylic acid, formic acid, benzoic acid, benzene-1,2,4,5-tetracarboxylic acid, benzene-1,2,4-tricarboxylic acid, succinic acid, 2,2-bis(hydroxymethyl)propionic acid, butanoic acid, 4-tert-butylbenzoic acid, cyanoacetic acid, 1,4-cyclohexanedicarboxylic acid, 1,10-decanedicarboxylic acid, decanoic acid, 1,10-dodecanedicarboxylic acid, dodecanoic acid, acetic acid, 2-ethylbutanoic acid, 2-ethylhexanoic acid, fumaric acid, 2-hydroxyacetic acid, hexahydrophthalic acid, 1,6-hexanedicarboxylic acid, hexadecanoic acid, hexanoic acid, 2-hydroxybenzoic acid, 4-hydroxybenzoic acid, 2-hydroxysuccinic acid, 1-hydroxy-1-phenylacetic acid, isobutyric acid, isophthalic acid, maleic acid, malonic acid, 4-methoxybenzoic acid, methoxyacetic acid, 4-methoxyphenylacetic acid, 2-methylbenzoic acid, 3-methylbenzoic acid, 4-methylbenzoic acid, 2-methylbutanoic acid, 3-methylbutanoic acid, methylenesuccinic acid, 4-nitrobenzoic acid, 1,9-nonanedicarboxylic acid, octadecanoic acid, 1,8-octanedicarboxylic acid, 4-oxopentanoic acid, octanoic acid, oxalic acid, 1,5-pentanedicarboxylic acid, 2-phenoxyacetic acid, 2-phenylacetic acid, pivalic acid, propionic acid, pentanoic acid, terephthalic acid, tetradecanoic acid, tetrahydrophthalic acid,
and urea educts selected from the group of:
urea, N-methylurea, N,N'-dimethylurea, ethyleneurea, propyleneurea.

15. The hot-melt printing ink according to claim 4, **characterized in that** the acylated aromatic compounds are produced from alkyl aryl ethers selected from the group of:
biphenyl, 1,2-dimethoxyphenol, ethoxyphenol, methoxyphenol,
and carboxylic acid educts selected from the group of:
benzoic acid, benzene-1,2,4,5-tetracarboxylic acid, benzene-1,2,4-tricarboxylic acid, succinic acid, butanoic acid, 4-tert-butylbenzoic acid, 1,4-cyclohexanedicarboxylic acid, 1,10-decanedicarboxylic acid, decanoic acid, 1,10-dodecanedicarboxylic acid, dodecanoic acid, acetic acid, 2-ethylbutanoic acid, 2-ethylhexanoic acid, 1,6-hexanedicarboxylic acid, hexadecanoic acid, hexanoic acid, isobutyric acid, isophthalic acid, 3-methylbutanoic acid, methylenesuccinic acid, 4-methoxybenzoic acid, methoxyacetic acid, 4-methoxyphenylacetic acid, 2-methylbenzoic acid, 3-methylbenzoic acid, 4-methylbenzoic acid, maleic acid, malonic acid, 4-nitrobenzoic acid, 1,9-nonanedicarboxylic acid, octadecanoic acid, 1,8-octanedicarboxylic acid, 4-oxopentanoic acid, octanoic acid, oxalic acid, 1,5-pentanedicarboxylic acid, 2-phenoxyacetic acid, 2-phenylacetic acid, pivalic acid, propionic acid, pentanoic acid, terephthalic acid, tetradecanoic acid.

16. The hot-melt printing ink according to claim 3, **characterized in that** colorants selected from the group of pigments with the color index designations Pigment Red PR 57:1, Pigment Yellow PY 12, Pigment Blue PB 15:3, PB 27:77510 and carbon black type pigments are used.

17. The hot-melt printing ink according to claim 3, **characterized in that** colorants selected from the group of dyes having the CI/CA numbers DY 3, DY 54, SY 162, DR 60, SB 35, SB 44, SBK 45, SBK 29 are used.

18. The hot-melt printing ink according to claims 1 to 16, **characterized in that** polyamide beads with a particle size of from 5 to 30 µm are employed as additives.

19. Use of the hot-melt printing ink according to claims 1 to 18 as gravure printing ink, ink-jet printing ink and for the production of toners for electrophotographic fusion processes.

## Revendications

1. Encre d'impression thermofusible, en particulier pour héliogravure, contenant
a. 50 à 80 % en poids de solvant ou d'un mélange de solvants avec un point de fusion allant de 65 à 109°C et une viscosité allant de 2,9 à 20 mPas à 110°C,
b. 20 à 50 % en poids d'un liant avec une température de transition vitreuse Tv allant de 30 à 65°C.

2. Encre d'impression thermofusible selon la revendication 1, **caractérisée en ce que** l'on peut préparer à partir du liant et du solvant, un vernis standard avec une viscosité allant de 6 à 20 mPas à 110°C.

3. Encre d'impression thermofusible selon la revendication 1 ou 2, **caractérisée en ce que** 0,5 à 3 % en poids d'additifs et 0 à 10 % en poids de colorant sont présents.

4. Encre d'impression thermofusible selon les revendications 1 à 3, **caractérisée en ce que** le solvant est choisi parmi le groupe des amides carboxyliques, des imides, des mono uréthanes, des diuréthanes, des sulfonamides, des esters d'acide sulfonique, des esters d'acide carboxylique, des éthers, des carbonates, des urées, des urées acylées, des composés aromatiques acylés ou de leurs mélanges.

5. Encre d'impression thermofusible selon la revendication 1, **caractérisée en ce que** le liant est choisi parmi le groupe des résines cétoniques, des résines de colophane, des résines uréthanne, des résines d'hydrocarbure ou de leurs mélanges.

6. Encre d'impression thermofusible selon la revendication 4, **caractérisée en ce que** les amides carboxyliques sont préparés à partir de réactifs acide carboxylique choisis parmi le groupe :
l'acide acétylsalicylique, l'acide acrylique, l'acide formique, l'acide benzoïque, l'acide benzène-1,2,4,5-tétracarboxylique, l'acide benzène-1,2,4-tricarboxylique, l'acide succinique, l'acide 2,2-bis(hydroxyméthyl)propionique, l'acide butanoïque, l'acide 4-t-butylbenzoïque, l'acide cyanoacétique, l'acide 1,4-cyclohexanedicarboxylique, l'acide 1,10-décanedicarboxylique, l'acide décanoïque, l'acide 1,10-dodécanedicarboxylique, l'acide dodécanoïque, l'acide acétique, l'acide 2-éthylbutanoïque, l'acide 2-éthylhexanoïque, l'acide fumarique, l'acide 2-hydroxyacétique, l'acide hexahydrophtalique, l'acide 1,6-hexanedicarboxylique, l'acide hexadécanoïque, l'acide hexanoïque, l'acide 2-hydroxybenzoïque, l'acide 4-hydroxybenzoïque, l'acide 2-hydroxysuccinique, l'acide 1-hydroxy-1-phénylacétique, l'acide isobutyrique, l'acide isophtalique, l'acide maléique, l'acide malonique, l'acide 4-méthoxybenzoïque, l'acide méthoxyacétique, l'acide 4-méthoxyphénylacétique, l'acide 2-méthylbenzoïque, l'acide 3-méthylbenzoïque, l'acide 4-méthylbenzoïque, l'acide 2-méthylbutanoïque, l'acide 3-méthylbutanoïque, l'acide méthylènesuccinique, l'acide 4-nitrobenzoïque, l'acide 1,9-nonanedicarboxylique, l'acide octadécanoïque, l'acide 1,8-octanedicarboxylique, l'acide 4-oxopentanoïque, l'acide octanoïque, l'acide oxalique, l'acide 1,5-pentanedicarboxylique, l'acide 2-phénoxyacétique, l'acide 2-phénylacétique, l'acide pivalique, l'acide propionique, l'acide pentanoïque, l'acide téréphtalique, l'acide tétradécanoïque, l'acide tétrahydrophtalique,
et d'amines choisies parmi le groupe :
l'aniline, le 2-aminobutane, l'ester éthylique de l'acide 4-aminobenzoïque, le 4-aminodiphényléther, le 3-aminopropanol, la benzylamine, la butylamine, la cyclohexylamine, le 1,2-diaminobenzène, le 1,3-diaminobenzène, le 1,4-diaminobenzène, le 4,4'-diaminobiphényle, le 4,4'-diaminodiphénylméthane, le 1,2-diaminoéthane, le 1,3-diaminopentane, le 1,2-diaminopropane, le 1,3-diaminopropane, la dibenzylamine, la di-2-éthylhexylamine, la diéthylamine, la diisobutylamine, la diméthylamine, la diméthyléthanolamine, la dibutylamine, la diphénylamine, la dodécylamine, l'éthanolamine, l'éthylamine, la 2-éthylhexylamine, la furfurylamine, l'hexadécylamine, la 1,6-hexaméthylènediamine, l'hexylamine, l'isophoronediamine, l'isopropylamine, la 4-méthoxyaniline, la 4-méthoxybenzylamine, la méthylamine, la 4-méthylaniline, la N-méthylaniline, la N-méthylbenzylamine, la morpholine, la 1-naphtylamine, la 2-naphtylamine, la 2-nitroaniline, la 3-nitroaniline, la 4-nitroaniline, l'octadécylamine, l'octylamine, la 1-phényléthylamine, la 2-phényléthylamine, la phénylhydrazine, la pipérazine, la pipéridine, la propylamine, la pyrrolidine, la tétrahydrofurfurylamine.

7. Encre d'impression thermofusible selon la revendication 4, **caractérisée en ce que** les imides sont préparés à partir des réactifs anhydride choisis parmi le groupe :
le dianhydride de l'acide benzène-1,2,4,5-tétracarboxylique, le 1,2-anhydride de l'acide benzène-1,2,4-tricarboxylique, l'anhydride de l'acide hexahydrophtalique, l'anhydride de l'acide méthylènehexahydrophtalique, l'anhydride de l'acide naphtalène-1,8-dicarboxylique, l'anhydride de l'acide phtalique, l'anhydride de l'acide tétrahydrophtalique,
et des réactifs amines choisis parmi le groupe :
l'ester éthylique de l'acide aminobenzoïque, le 4-aminodiphényléther, le 3-aminopropanol, la benzidine (4,4'-diaminobiphényle), la benzylamine, la butylamine, la cyclohexylamine, le 1,2-diaminobenzène, le 1,3-diaminobenzène, le 1,4-diaminobenzène, le 4,4'-diaminodiphénylméthane, le 1,2-diaminoéthane, le 1,3-diaminopentane, le 1,2-diaminopropane, le 1,3-diaminopropane, la dodécylamine, l'éthanolamine, l'éthylamine, la 2-éthylhexylamine, la furfurylamine, l'hexadécylamine, la 1,6-hexaméthylènediamine, l'hexylamine, l'isophoronediamine, l'isopropylamine, la 4-méthoxyaniline, la 4-méthoxybenzylamine, la méthylamine, la 4-méthylaniline, la 1-naphtylamine, la 2-naphtylamine, la 2-nitroaniline, la 3-nitroaniline, la 4-nitroaniline, l'octadécylamine, l'octylamine, la 1-phényléthylamine, la 2-phényléthylamine, la propylamine, la tétrahydrofurfurylamine.

8. Encre d'impression thermofusible selon la revendication 4, **caractérisée en ce que** les mono uréthanes et les diuréthanes sont préparés à partir des réactifs isocyanate choisis parmi le groupe :
1,3-bis(1-isocyanato-1-méthyléthyl)benzène (TMXDI), le 1,5-bis(isocyanato)naphtalène, le butylisocyanate, le cyclohexylisocyanate, l'hexaméthylènediisocyanate (HDI), l'isophoronediisocyanate (IPDI), le 4-isopropylphénylisocyanate, le 4,4'-méthylènebis(cyclohexyl)-isocyanate (H12MDI), le 4,4'-méthylènebis(phénylisocyanate) (MDI), le 1-naphtylisocyanate, l'octadécylisocyanate, le 1,4-phénylènediisocyanate (PPDI), le phénylisocyanate, le toluène-4-sulfonylisocyanate, le toluènediisocyanate (TDI),
les réactifs chloroformiate choisi parmi le groupe :
le chloroformiate de benzyle, le bis-chloroformiate de butanediol-1,4, le chloroformiate de butyle, le chloroformiate de s-butyle, le chloroformiate d'hexadécyle, le bis-chloroformiate de diéthylèneglycol, le chloroformiate d'éthyle, le chloroformiate de 2-éthylhexyle, le chloroformiate d'isobutyle, le chloroformiate d'isopropyle, le bis-chloroformiate de hexanediol-1,6, le chloroformiate de 2-méthoxyéthyle, le chloroformiate de méthyle, le chloroformiate de tétradécyle, le chloroformiate de phénoxyéthyle, le chloroformiate de phényle, le chloroformiate de propyle, le chloroformiate d'octadécyle,
et de réactifs alcool choisis parmi le groupe :
la benzoïne, le benzylalcool, le 1,4-bis(hydroxyméthyl)cyclohexane, le 1,4-butanediol, le 2-butyn-1,4-diol, le 3-butyn-2-ol, le butanol, le 2-butanol, le t-butanol, le cyclohexanol, le 1-décanol, le 2,2-diméthyl-1-propanol, le 1,1-diphénylméthanol, le dipropylèneglycol, le 1-docosanol, le 1,12-dodécanol, le 1-dodécanol, le 1-eicosanol, l'éthanol, l'éthoxypropanol, l'éthanediol, le monosalicylate d'éthylèneglycol, l'éthylèneglycolmonoéthyléther, le 2-éthyl-1-hexanol, le 2-éthyl-2-(hydroxyméthyl)-1,3-propanediol, le furfurylalcool, la glycérine, le 2-heptanol, le 1-hexadécanol, le 1,6-hexanediol, le 1-hexanol, l'hydroquinone-bis(2-hydroxyéthyléther), l'hydroxyacétone, le 2-hydroxybenzylalcool, l'acide 2-hydroxyacétique, l'ester butylique de l'acide 2-hydroxyacétique, le N-(2-hydroxyéthyl)phtalimide, l'hydroxypivalate d'hydroxypivalyle, le 3-hydroxypropionitrile, l'isobornéol, l'isopropanol, le menthol (6-isopropyl-2-méthylcyclohexanol), le méthanol, le 4-méthoxybenzylalcool, le méthoxypropanol, le 3-méthyl-1-butanol, le 2-méthyl-3-butyn-2-ol, le 2-méthyl-1,3-propanediol, le 2-méthyl-1-propanol, le 1,2-octadécanediol, le 1-octadécanol, le 1-octanol, le 2-octanol, le pentaérythritol, le 2-phénoxyéthanol, le 1-phénoxy-2-propanol, le 3-phényl-1-propanol, le 1-phényléthanol, le 2-phényléthanol, le 2-propyn-1-ol, le 1,2-propanediol, le 1,3-propanediol, le 1-propanol, le 1-tétradécanol, le tétrahydrofurfurylalcool, le tris(hydroxyméthyl)éthane,
des réactifs amine choisis parmi le groupe :
l'aniline, le 2-aminobutane, l'ester éthylique de l'acide 4-aminobenzoïque, le 4-aminodiphényléther, le 3-aminopropanol, la benzidine (4,4'-diaminobiphényle), la benzylamine, la butylamine, la cyclohexylamine, le 1,2-diaminobenzène, le 1,3-diaminobenzène, le 1,4-diaminobenzène, le 4,4'-diaminodiphénylméthane, le 1,2-diaminoéthane, le 1,3-diaminopentane, le 1,2-diaminopropane, le 1,3-diaminopropane, la dibenzylamine, la di-2-éthylhexylamine, la diéthylamine, la diisobutylamine, la diméthylamine, la diméthyléthanolamine, la dibutylamine, la diphénylamine, la dodécylamine, l'éthanolamine, l'éthylamine, la 2-éthylhexylamine, la furfurylamine, l'hexadécylamine, la 1,6-hexaméthylènediamine, l'hexylamine, l'isophoronediamine, l'isopropylamine, la 4-méthoxyaniline, la 4-méthoxybenzylamine, la méthylamine, la 4-méthylaniline, la N-méthylaniline, la N-méthylbenzylamine, la morpholine, la 1-naphtylamine, la 2-naphtylamine, la 2-nitroaniline, la 3-nitroaniline, la 4-nitroaniline, l'octadécylamine, l'octylamine, la 1-phényléthylamine, la 2-phényléthylamine, la phénylhydrazine, la pipérazine, la pipéridine, la propylamine, la pyrrolidine, la tétrahydrofurfurylamine,
et des réactifs acide N,N-dialkylcarbamique choisis parmi le groupe :
le chlorure d'acide N,N-diéthylcarbamique, le chlorure d'acide N,N-diméthylcarbamique, le chlorure d'acide N,N-diphénylcarbamique.

9. Encre d'impression thermofusible selon la revendication 4, **caractérisée en ce que** les sulfonamides sont préparés à partir de réactifs chlorure d'acide sulfonique choisis parmi le groupe :
chlorure d'acide 4-acétamidobenzènesulfonique, chlorure d'acide benzènesulfonique, chlorure d'acide éthanesulfonique, chlorure d'acide méthanesulfonique, chlorure d'acide p-toluènesulfonique,
et des réactifs amine choisis parmi le groupe :
l'aniline, le 2-aminobutane, l'ester éthylique de l'acide 4-aminobenzoïque, le 4-aminodiphényléther, le 3-aminopropanol, la benzidine (4,4'-diaminobiphényle), la benzylamine, la butylamine, la cyclohexylamine, le 1,2-diaminobenzène, le 1,3-diaminobenzène, le 1,4-diaminobenzène, le 4,4'-diaminodiphénylméthane, le 1,2-diaminoéthane, le 1,3-diaminopentane, le 1,2-diaminopropane, le 1,3-diaminopropane, la dibenzylamine, la di-2-éthylhexylamine, la diéthylamine, la diisobutylamine, la diméthylamine, la diméthyléthanolamine, la dibutylamine, la diphénylamine, la dodécylamine, l'éthanolamine, l'éthylamine, la 2-éthylhexylamine, la furfurylamine, l'hexadécylamine, la 1,6-hexaméthylènediamine, l'hexylamine, l'isophoronediamine, l'isopropylamine, la 4-méthoxyaniline, la 4-méthoxybenzylamine, la méthylamine, la 4-méthylaniline, la N-méthylaniline, la N-méthylbenzylamine, la morpholine, la 1-naphtylamine, la 2-naphtylamine, la 2-nitroaniline, la 3-nitroaniline, la 4-nitroaniline, l'octadécylamine, l'octylamine, la 1-phényléthylamine, la 2-phényléthylamine, la phénylhydrazine, la pipérazine, la pipéridine, la propylamine, la tétrahydrofurfurylamine, la pyrrolidine.

10. Encre d'impression thermofusible selon la revendication 4, **caractérisée en ce que** les esters d'acide sulfonique sont préparés à partir de réactifs chlorure d'acide sulfonique choisis parmi le groupe :
chlorure d'acide 4-acétamidobenzènesulfonique, chlorure d'acide benzènesulfonique, chlorure d'acide éthanesulfonique, chlorure de méthanesulfonyle, chlorure d'acide p-toluènesulfonique,
et de réactifs alcool choisis parmi le groupe :
la benzoïne, le benzylalcool, le 1,4-bis(hydroxyméthyl)cyclohexane, le 1,4-butanediol, le 2-butyn-1,4-diol, le 3-butyn-2-ol, le butanol, le 2-butanol, le t-butanol, le cyclohexanol, le 1-décanol, le 2,2-diméthyl-1-propanol, le 1,1-diphénylméthanol, le dipropylèneglycol, le 1-docosanol, le 1,12-dodécanol, le 1-dodécanol, le 1-eicosanol, l'éthanol, l'éthoxypropanol, l'éthanediol, le monosalicylate d'éthylèneglycol, l'éthylèneglycolmonoéthyléther, le 2-éthyl-1-hexanol, le 2-éthyl-2-(hydroxyméthyl)-1,3-propanediol, le furfurylalcool, la glycérine, le 2-heptanol, le 1-hexadécanol, le 1,6-hexanediol, le 1-hexanol, l'hydroquinone-bis(2-hydroxyéthyléther), l'hydroxyacétone, le 2-hydroxybenzylalcool, l'acide 2-hydroxyacétique, l'ester butylique de l'acide 2-hydroxyacétique, le N-(2-hydroxyéthyl)phtalimide, l'hydroxypivalate d'hydroxypivalyle, le 3-hydroxypropionitrile, l'isobornéol, l'isopropanol, le menthol (6-isopropyl-2-méthylcyclohexanol), le méthanol, le 4-méthoxybenzylalcool, le méthoxypropanol, le 3-méthyl-1-butanol, le 2-méthyl-3-butyn-2-ol, le 2-méthyl-1,3-propanediol, le 2-méthyl-1-propanol, le 1,2-octadécanediol, le 1-octadécanol, le 1-octanol, le 2-octanol, le pentaérythritol, le 2-phénoxyéthanol, le 1-phénoxy-2-propanol, le 3-phényl-1-propanol, le 1-phényléthanol, le 2-phényléthanol, le 2-propyn-1-ol, le 1,2-propanediol, le 1,3-propanediol, le 1-propanol, le 1-tétradécanol, le tétrahydrofurfurylalcool, le tris(hydroxyméthyl)éthane,
et des réactifs phénol choisis parmi le groupe :
le 4-acétaminophénol, le 4-aminophénol, le 4-benzyloxyphénol, le 2,2-bis(4-hydroxyphényl)propane, la 2-t-butylhydroquinone, le 2-t-butylphénol, le 4-t-butylphénol, le 2,2'-dihydroxybiphényle, le 4,4'-dihydroxybiphényle, la 1,4-dihydroxyanthraquinone, le 3,5-diméthylphénol, le 4-éthylphénol, l'hydroquinone, la 4-hydroxyacétophénone, l'acide 4-hydroxybenzoïque, l'ester benzylique de l'acide 4-hydroxybenzoïque, l'ester éthylique de l'acide 4-hydroxybenzoïque, l'ester méthylique de l'acide 4-hydroxybenzoïque, l'ester isopropylique de l'acide 4-hydroxybenzoïque, l'ester propylique de l'acide 4-hydroxybenzoïque, le 2-hydroxybiphényle, le 4-hydroxybiphényle, la 4-hydroxy-propiophénone, le 4-méthoxyphénol, le 2-méthoxyphénol, le 2-méthylphénol, le 3-méthylphénol, le 4-méthylphénol, le 1-naphthol, le 2-naphthol, le naphtalène-1,5-diol, le 4-nitrophénol, le 4-nitrophénylglycol, l'octylphénol, le phénol, le 4-(2-phényl-2-propyl)phénol, le résorcinol, le monobenzoate de résorcinol, l'ester méthylique de l'acide salicylique, l'ester phénylique de l'acide salicylique.

11. Encre d'impression thermofusible selon la revendication 4, **caractérisée en ce que** les esters d'acide carboxylique sont préparés à partir de réactifs acide carboxylique choisis parmi le groupe :
l'acide acétylsalicylique, l'acide acrylique, l'acide formique, l'acide benzoïque, l'acide benzène-1,2,4,5-tétracarboxylique, l'acide benzène-1,2,4-tricarboxylique, l'acide succinique, l'acide 2,2-bis(hydroxyméthyl)propionique, l'acide butanoïque, l'acide 4-t-butylbenzoïque, l'acide cyanoacétique, l'acide 1,4-cyclohexanedicarboxylique, l'acide 1,10-décanedicarboxylique, l'acide décanoïque, l'acide 1,10-dodécanedicarboxylique, l'acide dodécanoïque, l'acide acétique, l'acide 2-éthylbutanoïque, l'acide 2-éthylhexanoïque, l'acide fumarique, l'acide 2-hydroxyacétique, l'acide hexahydrophtalique, l'acide 1,6-hexanedicarboxylique, l'acide hexadécanoïque, l'acide hexanoïque, l'acide 2-hydroxybenzoïque, l'acide 4-hydroxybenzoïque, l'acide 2-hydroxysuccinique, l'acide 1-hydroxy-1-phénylacétique, l'acide isobutyrique, l'acide isophtalique, l'acide maléique, l'acide malonique, l'acide 4-méthoxybenzoïque, l'acide méthoxyacétique, l'acide 4-méthoxyphénylacétique, l'acide 2-méthylbenzoïque, l'acide 3-méthylbenzoïque, l'acide 4-méthylbenzoïque, l'acide 2-méthylbutanoïque, l'acide 3-méthylbutanoïque, l'acide méthylènesuccinique, l'acide 4-nitrobenzoïque, l'acide 1,9-nonanedi-carboxylique, l'acide octadécanoïque, l'acide 1,8-octanedicarboxylique, l'acide 4-oxopentanoïque, l'acide octanoïque, l'acide oxalique, l'acide 1,5-pentanedicarboxylique, l'acide 2-phénoxyacétique, l'acide 2-phénylacétique, l'acide pivalique, l'acide propionique, l'acide pentanoïque, l'acide téréphtalique, l'acide tétradécanoïque, l'acide tétrahydrophtalique,
de réactifs alcool choisis parmi le groupe :
la benzoïne, le benzylalcool, le 1,4-bis(hydroxyméthyl)cyclohexane, le 1,4-butanediol, le 2-butyn-1,4-diol, le 3-butyn-2-ol, le butanol, le 2-butanol, le t-butanol, le cyclohexanol, le 1-décanol, le 2,2-diméthyl-1-propanol, le 1,1-diphénylméthanol, le dipropylèneglycol, le 1-docosanol, le 1,12-dodécanol, le 1-dodécanol, le 1-eicosanol, l'éthanol, l'éthoxypropanol, l'éthanediol, le monosalicylate d'éthylèneglycol, l'éthylèneglycolmonoéthyléther, le 2-éthyl-1-hexanol, le 2-éthyl-2-(hydroxyméthyl)-1,3-propanediol, le furfurylalcool, la glycérine, le 2-heptanol, le 1-hexadécanol, le 1,6-hexanediol, le 1-hexanol, l'hydroquinone-bis(2-hydroxyéthyléther), l'hydroxyacétone, le 2-hydroxybenzylalcool, l'acide 2-hydroxyacétique, l'ester butylique de l'acide 2-hydroxyacétique, le N-(2-hydroxyéthyl)phtalimide, l'hydroxypivalate d'hydroxypivalyle, le 3-hydroxypropionitrile, l'isobornéol, l'isopropanol, le menthol (6-isopropyl-2-méthylcyclohexanol), le méthanol, le 4-méthoxybenzylalcool, le méthoxypropanol, le 3-méthyl-1-butanol, le 2-méthyl-3-butyn-2-ol, le 2-méthyl-1,3-propanediol, le 2-méthyl-1-propanol, le 1,2-octadécanediol, le 1-octadécanol, le 1-octanol, le 2-octanol, le pentaérythritol, le 2-phénoxyéthanol, le 1-phénoxy-2-propanol, le 3-phényl-1-propanol, le 1-phényléthanol, le 2-phényléthanol, le 2-propyn-1-ol, le 1,2-propanediol, le 1,3-propanediol, le 1-propanol, le 1-tétradécanol, le tétrahydrofurfurylalcool, le tris(hydroxyméthyl)éthane,
et des réactifs phénol choisis parmi le groupe :
le 4-acétaminophénol, le 4-aminophénol, le 4-benzyloxyphénol, le 2,2-bis(4-hydroxyphényl)propane, la 2-t-butylhydroquinone, le 2-t-butylphénol, le 4-t-butylphénol, le 2,2'-dihydroxybiphényle, le 4,4'-dihydroxybiphényle, la 1,4-dihydroxyanthraquinone, le 3,5-diméthylphénol, le 4-éthylphénol, l'hydroquinone, la 4-hydroxyacétophénone, l'acide 4-hydroxybenzoïque, l'ester benzylique de l'acide 4-hydroxybenzoïque, l'ester éthylique de l'acide 4-hydroxybenzoïque, l'ester méthylique de l'acide 4-hydroxybenzoïque, l'ester isopropylique de l'acide 4-hydroxybenzoïque, l'ester propylique de l'acide 4-hydroxybenzoïque, le 2-hydroxybiphényle, le 4-hydroxybiphényle, la 4-hydroxypropiophénone, le 4-méthoxyphénol, le 2-méthoxyphénol, le 2-méthylphénol, le 3-méthylphénol, le 4-méthylphénol, le 1-naphthol, le 2-naphthol, le naphtalène-1,5-diol, le 4-nitrophénol, le 4-nitrophénylglycol, l'octylphénol, le phénol, le 4-(2-phényl-2-propyl)phénol, le résorcinol, le monobenzoate de résorcinol, l'ester méthylique de l'acide salicylique, l'ester phénylique de l'acide salicylique.

12. Encre d'impression thermofusible selon la revendication 4, **caractérisée en ce que** les éthers sont préparés à partir de réactifs halogénés choisis parmi le groupe :
le chlorure de benzyle, le 4,4'-bis(chlorométhyl)-1,1'-biphényle, le chlorure de cyanure, le 2-bromoacétate d'éthyle, le 2-bromopropionate d'éthyle, le 2-bromopropionate de méthyle, le bromoacétate d'éthyle, le bromure de 2-phényléthyle,
de réactifs alcool choisis parmi le groupe :
la benzoïne, le benzylalcool, le 1,4-bis(hydroxyméthyl)cyclohexane, le 1,4-butanediol, le 2-butyn-1,4-diol, le 3-butyn-2-ol, le butanol, le 2-butanol, le t-butanol, le cyclohexanol, le 1-décanol, le 2,2-diméthyl-1-propanol, le 1,1-diphénylméthanol, le dipropylèneglycol, le 1-docosanol, le 1,12-dodécanol, le 1-dodécanol, le 1-eicosanol, l'éthanol, l'éthoxypropanol, l'éthanediol, le monosalicylate d'éthylèneglycol, l'éthylèneglycolmonoéthyléther, le 2-éthyl-1-hexanol, le 2-éthyl-2-(hydroxyméthyl)-1,3-propanediol, le furfurylalcool, la glycérine, le 2-heptanol, le 1-hexadécanol, le 1,6-hexanediol, le 1-hexanol, l'hydroquinone-bis(2-hydroxyéthyléther), l'hydroxyacétone, le 2-hydroxybenzylalcool, l'acide 2-hydroxyacétique, l'ester butylique de l'acide 2-hydroxyacétique, le N-(2-hydroxyéthyl)phtalimide, l'hydroxypivalate d'hydroxypivalyle, le 3-hydroxypropionitrile, l'isobornéol, l'isopropanol, le menthol (6-isopropyl-2-méthylcyclohexanol), le méthanol, le 4-méthoxybenzylalcool, le méthoxypropanol, le 3-méthyl-1-butanol, le 2-méthyl-3-butyn-2-ol, le 2-méthyl-1,3-propanediol, le 2-méthyl-1-propanol, le 1,2-octadécanediol, le 1-octadécanol, le 1-octanol, le 2-octanol, le pentaérythritol, le 2-phénoxyéthanol, le 1-phénoxy-2-propanol, le 3-phényl-1-propanol, le 1-phényléthanol, le 2-phényléthanol, le 2-propyn-1-ol, le 1,2-propanediol, le 1,3-propanediol, le 1-propanol, le 1-tétradécanol, le tétrahydrofurfurylalcool, le tris(hydroxyméthyl)éthane, et des réactifs phénol choisis parmi le groupe :
le 4-acétaminophénol, le 4-aminophénol, le 4-benzyloxyphénol, le 2,2-bis(4-hydroxyphényl)propane, la 2-t-butylhydroquinone, le 2-t-butylphénol, le 4-t-butylphénol, le 2,2'-dihydroxybiphényle, le 4,4'-dihydroxybiphényle, la 1,4-dihydroxyanthraquinone, le 3,5-diméthylphénol, le 4-éthylphénol, l'hydroquinone, la 4-hydroxyacétophénone, l'acide 4-hydroxybenzoïque, l'ester benzylique de l'acide 4-hydroxybenzoïque, l'ester éthylique de l'acide 4-hydroxybenzoïque, l'ester méthylique de l'acide 4-hydroxybenzoïque, l'ester isopropylique de l'acide 4-hydroxybenzoïque, l'ester propylique de l'acide 4-hydroxybenzoïque, le 2-hydroxybiphényle, le 4-hydroxybiphényle, la 4-hydroxypropiophénone, le 4-méthoxyphénol, le 2-méthoxyphénol, le 2-méthylphénol, le 3-méthylphénol, le 4-méthylphénol, le 1-naphthol, le 2-naphthol, le naphtalène-1,5-diol, le 4-nitrophénol, le 4-nitrophénylglycol, l'octylphénol, le phénol, le 4-(2-phényl-2-propyl)phénol, le résorcinol, le monobenzoate de résorcinol, l'ester méthylique de l'acide salicylique, l'ester phénylique de l'acide salicylique.

13. Encre d'impression thermofusible selon la revendication 4, **caractérisée en ce que** les carbonates sont préparés à partir de réactifs chloroformiate choisis parmi le groupe :
le chloroformiate de benzyle, le bis-chloroformiate de butanediol-1,4, le chloroformiate de butyle, le chloroformiate de s-butyle, le chloroformiate d'hexadécyle, le bis-chloroformiate de diéthylèneglycol, le chloroformiate d'éthyle, le chloroformiate de 2-éthylhexyle, le chloroformiate d'isobutyle, le chloroformiate d'isopropyle, le bis-chloroformiate de hexanediol-1,6, le chloroformiate de 2-méthoxyéthyle, le chloroformiate de méthyle, le chloroformiate de tétradécyle, le chloroformiate de phénoxyéthyle, le chloroformiate de phényle, le chloroformiate de propyle, le chloroformiate d'octadécyle,
de réactifs alcool choisis parmi le groupe :
la benzoïne, le benzylalcool, le 1,4-bis(hydroxyméthyl)cyclohexane, le 1,4-butanediol, le 2-butyn-1,4-diol, le 3-butyn-2-ol, le butanol, le 2-butanol, le t-butanol, le cyclohexanol, le 1-décanol, le 2,2-diméthyl-1-propanol, le 1,1-diphénylméthanol, le dipropylèneglycol, le 1-docosanol, le 1,12-dodécanol, le 1-dodécanol, le 1-eicosanol, l'éthanol, l'éthoxypropanol, l'éthanediol, le monosalicylate d'éthylèneglycol, l'éthylèneglycolmonoéthyléther, le 2-éthyl-1-hexanol, le 2-éthyl-2-(hydroxyméthyl)-1,3-propanediol, le furfurylalcool, la glycérine, le 2-heptanol, le 1-hexadécanol, le 1,6-hexanediol, le 1-hexanol, l'hydroquinone-bis(2-hydroxyéthyléther), l'hydroxyacétone, le 2-hydroxybenzylalcool, l'acide 2-hydroxyacétique, l'ester butylique de l'acide 2-hydroxyacétique, le N-(2-hydroxyéthyl)phtalimide, l'hydroxypivalate d'hydroxypivalyle, le 3-hydroxypropionitrile, l'isobornéol, l'isopropanol, le menthol (6-isopropyl-2-méthylcyclohexanol), le méthanol, le 4-méthoxybenzylalcool, le méthoxypropanol, le 3-méthyl-1-butanol, le 2-méthyl-3-butyn-2-ol, le 2-méthyl-1,3-propanediol, le 2-méthyl-1-propanol, le 1,2-octadécanediol, le 1-octadécanol, le 1-octanol, le 2-octanol, le pentaérythritol, le 2-phénoxyéthanol, le 1-phénoxy-2-propanol, le 3-phényl-1-propanol, le 1-phényléthanol, le 2-phényléthanol, le 2-propyn-1-ol, le 1,2-propanediol, le 1,3-propanediol, le 1-propanol, le 1-tétradécanol, le tétrahydrofurfurylalcool, le tris(hydroxyméthyl)éthane, et des réactifs phénol choisis parmi le groupe :
le 4-acétaminophénol, le 4-aminophénol, le 4-benzyloxyphénol, le 2,2-bis(4-hydroxyphényl)propane, la 2-t-butylhydroquinone, le 2-t-butylphénol, le 4-t-butylphénol, le 2,2'-dihydroxybiphényle, le 4,4'-dihydroxybiphényle, la 1,4-dihydroxyanthraquinone, le 3,5-diméthylphénol, le 4-éthylphénol, l'hydroquinone, la 4-hydroxyacétophénone, l'acide 4-hydroxybenzoïque, l'ester benzylique de l'acide 4-hydroxybenzoïque, l'ester éthylique de l'acide 4-hydroxybenzoïque, l'ester méthylique de l'acide 4-hydroxybenzoïque, l'ester isopropylique de l'acide 4-hydroxybenzoïque, l'ester propylique de l'acide 4-hydroxybenzoïque, le 2-hydroxybiphényle, le 4-hydroxybiphényle, la 4-hydroxypropiophénone, le 4-méthoxyphénol, le 2-méthoxyphénol, le 2-méthylphénol, le 3-méthylphénol, le 4-méthylphénol, le 1-naphthol, le 2-naphthol, le naphtalène-1,5-diol, le 4-nitrophénol, le 4-nitrophénylglycol, l'octylphénol, le phénol, le 4-(2-phényl-2-propyl)phénol, le résorcinol, le monobenzoate de résorcinol, l'ester méthylique de l'acide salicylique, l'ester phénylique de l'acide salicylique.

14. Encre d'impression thermofusible selon la revendication 4, **caractérisée en ce que** les urées et urées acylées sont préparées à partir de réactifs isocyanate choisis parmi le groupe :
1,3-bis(1-isocyanato-1-méthyléthyl)benzène (TMXDI), le 1,5-bis(isocyanato)naphtalène, le butylisocyanate, le 4-chlorophénylisocynate, le cyclohexylisocyanate, l'hexaméthylènediisocyanate (HDI), l'isophoronediisocyanate (IPDI), le 4-isopropylphénylisocyanate, le 4,4'-méthylène-bis(cyclohexyl)isocyanate (Hl2MDI), le 4,4'-méthylène-bis(phénylisocyanate) (MDI), le 1-naphtylisocyanate, l'octadécylisocyanate, le 1,4-phénylènediisocyanate (PPDI), le phénylisocyanate, le toluène-4-sulfonyl-isocyanate, le toluènediisocyanate (TDI),
des réactifs amine choisis parmi le groupe :
l'aniline, le 2-aminobutane, l'ester éthylique de l'acide 4-aminobenzoïque, le 4-aminodiphényléther, le 3-aminopropanol, la benzidine (4,4'-diaminobiphényle), la benzylamine, la butylamine, la cyclohexylamine, le 1,2-diaminobenzène, le 1,3-diaminobenzène, le 1,4-diaminobenzène, le 4,4'-diaminodiphénylméthane, le 1,2-diaminoéthane, le 1,3-diaminopentane, le 1,2-diaminopropane, le 1,3-diaminopropane, la dibenzylamine, la di-2-éthylhexylamine, la diéthylamine, la diisobutylamine, la diméthylamine, la diméthyléthanolamine, la dibutylamine, la diphénylamine, la dodécylamine, l'éthanolamine, l'éthylamine, la 2-éthylhexylamine, la furfurylamine, l'hexadécylamine, la 1,6-hexaméthylènediamine, l'hexylamine, l'isophoronediamine, l'isopropylamine, la 4-méthoxyaniline, la 4-méthoxybenzylamine, la méthylamine, la 4-méthylaniline, la N-méthylaniline, la N-méthylbenzylamine, la morpholine, la 1-naphtylamine, la 2-naphtylamine, la 2-nitroaniline, la 3-nitroaniline, la 4-nitroaniline, l'octadécylamine, l'octylamine, la 1-phényléthylamine, la 2-phényléthylamine, la phénylhydrazine, la pipérazine, la pipéridine, la propylamine, la pyrrolidine, la tétrahydrofurfurylamine.
et de réactifs acide carboxylique choisis parmi le groupe :
l'acide acétylsalicylique, l'acide acrylique, l'acide formique, l'acide benzoïque, l'acide benzène-1,2,4,5-tétracarboxylique, l'acide benzène-1,2,4-tricarboxylique, l'acide succinique, l'acide 2,2-bis(hydroxyméthyl)propionique, l'acide butanoïque, l'acide 4-t-butylbenzoïque, l'acide cyanoacétique, l'acide 1,4-cyclohexanedicarboxylique, l'acide 1,10-décanedicarboxylique, l'acide décanoïque, l'acide 1,10-dodécanedicarboxylique, l'acide dodécanoïque, l'acide acétique, l'acide 2-éthylbutanoïque, l'acide 2-éthylhexanoïque, l'acide fumarique, l'acide 2-hydroxyacétique, l'acide hexahydrophtalique, l'acide 1,6-hexanedicarboxylique, l'acide hexadécanoïque, l'acide hexanoïque, l'acide 2-hydroxybenzoïque, l'acide 4-hydroxybenzoïque, l'acide 2-hydroxysuccinique, l'acide 1-hydroxy-1-phénylacétique, l'acide isobutyrique, l'acide isophtalique, l'acide maléique, l'acide malonique, l'acide 4-méthoxybenzoïque, l'acide méthoxyacétique, l'acide 4-méthoxyphénylacétique, l'acide 2-méthylbenzoïque, l'acide 3-méthylbenzoique, l'acide 4-méthylbenzoïque, l'acide 2-méthylbutanoïque, l'acide 3-méthylbutanoïque, l'acide méthylènesuccinique, l'acide 4-nitrobenzoïque, l'acide 1,9-nonanedicarboxylique, l'acide octadécanoïque, l'acide 1,8-octanedicarboxylique, l'acide 4-oxopentanoïque, l'acide octanoïque, l'acide oxalique, l'acide 1,5-pentanedicarboxylique, l'acide 2-phénoxyacétique, l'acide 2-phénylacétique, l'acide pivalique, l'acide propionique, l'acide pentanoïque, l'acide téréphtalique, l'acide tétradécanoïque, l'acide tétrahydrophtalique,
et des réactifs urées choisis parmi le groupe :
l'urée, la N-méthylurée, le N,N-diméthylurée, l'éthylène urée, la propylène urée.

15. Encre d'impression thermofusible selon la revendication 4, **caractérisée en ce que** les aromatiques acylés sont préparés à partir d'alkylaryléthers choisis parmi le groupe :
le biphényle, le 1,2-diméthoxyphénol, l'éthoxyphénol, le méthoxyphénol,
et de réactifs acide carboxylique choisis parmi le groupe :
l'acide benzoïque, l'acide benzène-1,2,4,5-tétracarboxylique, l'acide benzène-1,2,4-tricarboxylique, l'acide succinique, l'acide butanoïque, l'acide 4-t-butylbenzoïque, l'acide 1,4-cyclohexanedicarboxylique, l'acide 1,10-décanedicarboxylique, l'acide décanoïque, l'acide 1,10-dodécanedicarboxylique, l'acide dodécanoïque, l'acide acétique, l'acide 2-éthylbutanoïque, l'acide 2-éthylhexanoïque, l'acide 1,6-hexanedicarboxylique, l'acide hexadécanoïque, l'acide hexanoïque, l'acide isobutyrique, l'acide isophtalique, l'acide 3-méthylbutanoïque, l'acide méthylènesuccinique, l'acide 4-méthoxybenzoïque, l'acide méthoxyacétique, l'acide 4-méthoxyphénylacétique, l'acide 2-méthylbenzoïque, l'acide 3-méthylbenzoïque, l'acide 4-méthylbenzoïque, l'acide maléique, l'acide 4-nitrobenzoïque, l'acide 1,9-nonanedicarboxylique, l'acide octadécanoïque, l'acide 1,8-octanedicarboxylique, l'acide 4-oxopentanoïque, l'acide octanoïque, l'acide oxalique, l'acide 1,5-pentanedicarboxylique, l'acide 2-phénoxyacétique, l'acide 2-phénylacétique, l'acide pivalique, l'acide propionique, l'acide pentanoïque, l'acide téréphtalique, l'acide tétradécanoïque.

16. Encre d'impression thermofusible selon la revendication 3, **caractérisée en ce que** l'on utilise un colorant choisi parmi le groupe des pigments avec indice de couleur Pigment-Red PR 57:1, Pigment Yellow PY 12, Pigment Blue PB 15:3, PB 27:77510 et pigment suie.

17. Encre d'impression thermofusible selon la revendication 3, **caractérisée en ce que** l'on utilise un colorant choisi parmi le groupe des colorants avec les numéros CI/CA DY 3, DY 54, SY 162, DR 60, SB 35, SB 44, SBK 45, SBK 29.

18. Encre d'impression thermofusible selon les revendications 1-16, **caractérisée en ce que** l'on met en oeuvre comme additif, des billes de polyamide avec une taille des particules allant de 5 à 30 µm.

19. Utilisation de l'encre d'impression thermofusible selon les revendications 1 à 18, comme encre d'héliogravure, encre pour impression par jet d'encre et pour la préparation de toners pour procédés de fusion électrophotographique.
